# EUROPEAN PATENT SPECIFICATION

(11) **EP 2 599 613 B1**
(45) Date of publication and mention of the grant of the patent: **10.02.2016**
(21) Application number: 12185195.0
(22) Date of filing: 20.09.2012
(51) Int. Cl.: B29C 67/00

(54) **Three-dimensional shaping apparatus, three-dimensional shaping method, set-data creating apparatus for three-dimensional shaping apparatus, program for creating set-data for three-dimensional shaping apparatus, and computer-readable recording medium**
Dreidimensionale Formungsvorrichtung, dreidimensionales Formungsverfahren, Einstelldatenerzeugungsvorrichtung für die dreidimensionale Formungsvorrichtung, Programm zur Erzeugung von Einstelldaten für die dreidimensionale Formungsvorrichtung und computerlesbares Aufzeichnungsmedium
Appareil de mise en forme tridimensionnelle, procédé de mise en forme tridimensionnelle, appareil de création d'ensemble de données pour appareil de mise en forme tridimensionnelle, programme de création d'un appareil de façonnage tridimensionnel d'ensemble de données et support d'enregistrement lisible sur ordinateur

(30) Priority: 22.09.2011 JP 2011208222
(43) Date of publication of application: 05.06.2013
(73) Proprietor: Keyence Corporation, Osaka-shi, Osaka 533-8555 (JP)
(72) Inventor: Saito, Kazuki, Osaka, 533-8555 (JP); Suzaki, Ryohei, Osaka, 533-8555 (JP); Onoda, Junya, Osaka, 533-8555 (JP)
(74) Representative: Hoffmann Eitle

(56) References cited:
- WO-A1-2004/050323

## Description

### BACKGROUND OF THE INVENTION

### 1. Field of the Invention

The present invention relates to a three-dimensional shaping apparatus for fabricating a stereoscopic shaped object in an ink-jet manner, a three-dimensional shaping method, a set-data creating apparatus for a three-dimensional shaping apparatus, a set-data creating program for a three-dimensional shaping apparatus, and a computer-readable recording medium.

### 2. Description of Related Art

There are known apparatuses that sets three-dimensional data, that is basic data for a shaped object, to an arbitrary attitude on a computer screen, creates data for each respective cross section sectioned in a plurality of parallel planes with respect to the height based on the set attitude, forming a stereoscopic shaped object with successive lamination of resin based on the two-dimensional data related to each layer, and thereby create a shaped body acting as a three-dimensional model of the shaped body.

In the field of rapid prototyping (RP), which is used in prototyping in product development and the like, there are employed laminate shaping methods which enable three-dimensional shaping. Such laminate shaping methods are adapted to slice a three-dimensional CAD data of a product, create overlapped thin plates as original product data, and laminate materials such as powder, resins, steel plates, paper and the like thereon to create a prototype. As such laminate shaping methods, there are known an ink-jet method, a powder method, an optical shaping method, a sheet lamination method, an extrusion method, and the like. Among these methods, in the ink-jet method, a liquefied material is injected, and then cured to form a layer through irradiation of ultraviolet light (UV), cooling or the like. With such a method, it is possible to apply the principle of an ink-jet printer thereto, which offers the advantage that high definition can be easily realized.

A three-dimensional shaping apparatus of a resin-lamination type is adapted to execute shaping by ejecting, onto a shaping plate, a model material configured to form the final shaped object and a supporting material, that is configured to support a base portion supporting the model and a protruding portion of the model material and that is finally removed, while scanning in the XY directions and laminating in a height direction. The model material and the supporting material are formed from resins having properties of being cured by irradiation with ultraviolet light. An ultraviolet-light lamp configured to emit ultraviolet light is scanned in the XY directions together with the nozzles for ejecting the model material and the supporting material so that the model material and the supporting material ejected from the nozzles are irradiated and cured with the ultraviolet light.

Patent Document 1: Japanese Unexamined Patent Publication No. 2003-535712. WO-A-2004/050323 discloses the features of the respective preambles of claims 1, 10, 13, 15 and 17.

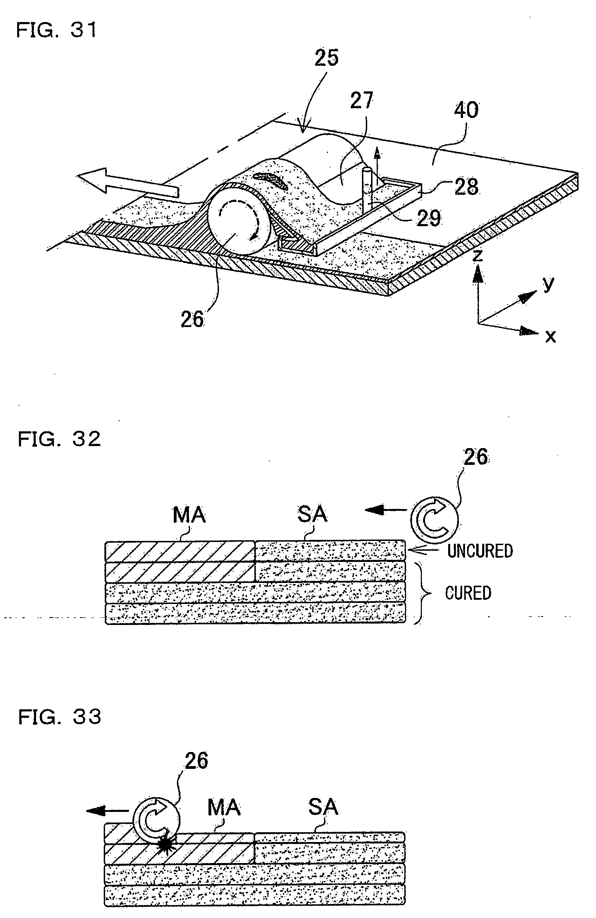

In a three-dimensional shaping apparatus using an ink jet configuration, the shaping accuracy in the height direction is maintained by ensuring a uniform thickness for each layer that corresponds to each respective slice. However, there are difficulties associated with constantly controlling the amount of resin simultaneously ejected from a plurality of nozzles to a fixed value in order to maintain a uniform thickness in each layer, and therefore a margin of more than the required resin amount to each shaping layer is provided, and an excess of shaping material such as model material and supporting material is ejected. After ejection of the resin, the excess portion of resin ejected from the nozzles is received by a recovery mechanism during shaping. This type of recovery mechanism employs a roller portion. FIG. 31 to FIG. 33 illustrate a perspective view of the state of removing the excess portion of shaping material with a roller portion 25. In this example, the resin ejected onto the shaping plate 40 is in a flowing state, and the surface of resin is illustrated in a state being leveled with a roller main body 26. The roller portion 25 includes a roller main body 26 that is a rotating body, a blade 27 disposed to protrude relative to the surface of the roller main body 26, a bath 28 configured to collect the shaping material scraped off by the blade 27, and a suction pipe 29 for ejecting shaping material collected in the bath 28. The roller main body 26 is rotated in the direction opposed to the travel direction of head portion 20 (the clockwise direction in FIG. 33) and scrapes up flowing shaping material. The scraped-up shaping material adheres to the roller main body 26, transported to the blade 27, and then scraped off with the blade 27 and guided into the bath 28. As a result, the blade 27 is fixed in an attitude having a downward gradient towards the bath 28. The suction pipe 29 is connected with a liquid waste passage, and draws shaping material that has collected in the bath 28 using a pump or the like and stores the material in a liquid waste tank (not illustrated).

A recovery mechanism using this type of roller portion 25 enables shaping while recovering the excess portion of resin as illustrated in FIG. 32. Although the roller portion 25 should not usually come into contact with cured resin, it may make contact with cured resin due to the accuracy of the mechanical components such as the roller portion 25 or the vibration or the like of driving portions as illustrated in FIG. 33. Even in the event that the roller portion 25 makes contact with cured resin, when the cured resin as illustrated in FIG. 34 is incorporated with the same type of cured resin and the cured layer is sufficiently thick, the cured layer is not subject to peeling.

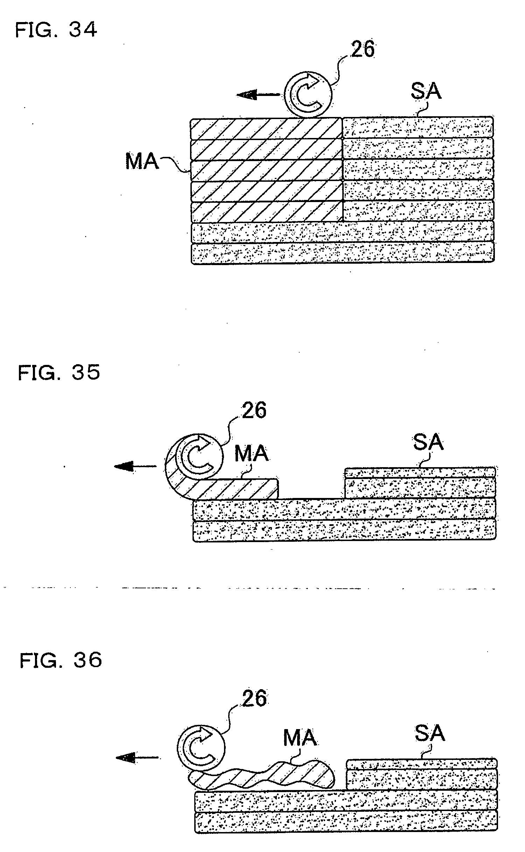

However, when the cured layer is thin as illustrated in FIG. 35, the layer is peeled off onto the roller portion 25 from the portion of contact, becomes deposited into the resin recovery mechanism, and may result in blockage of the liquid waste passage or the like. Alternatively, there has been the problem that, even when all of the resin is not recovered, creasing results due to contact with the roller portion 25 as illustrated in FIG. 36 and partial peeling to thereby reduce the quality of the shaped object.

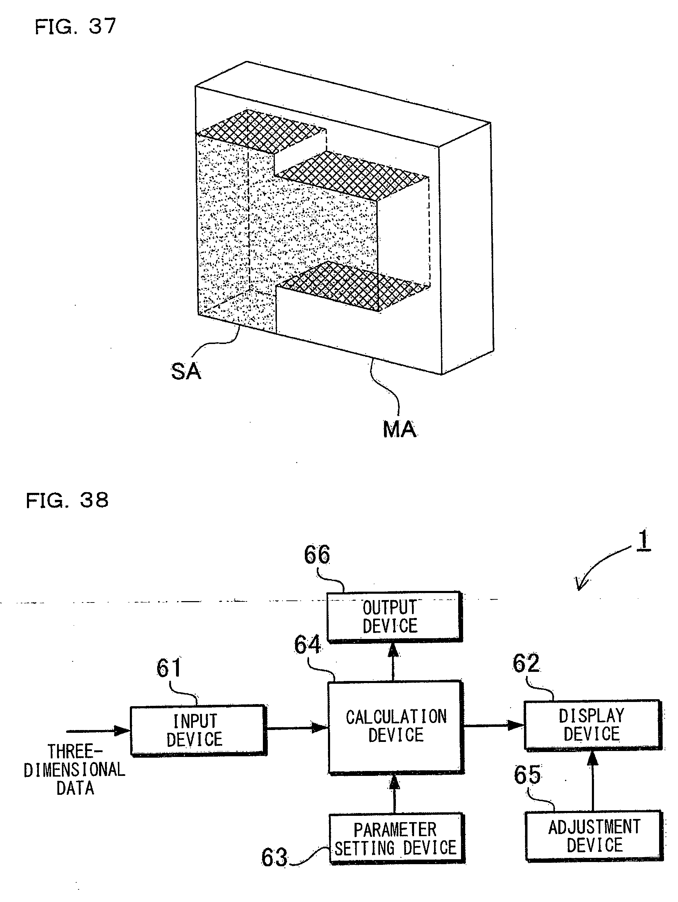

When the cured layer is thin as described above, this will occur at a position at which the layer is firstly formed, at the bonding boundary surface between different types of resin such as illustrated by the mesh in Fig. 37, that is to say, the position of switching between layers. In this context, to prevent peeling in the above manner at the switchover of the layers, the bonding between different resins is strengthened at the boundary between different resins. This configuration strengthens the bonding at the boundary between different resins even when the roller portion 25 makes contact with resin, and therefore inhibits generation of peeling. However, in this configuration, due to the fact that the bonding strength between the supporting material SA and the model material MA is increased, the problem arises that it is difficult to remove the supporting material SA from the final shaped object after shaping.

Conversely, if the bonding at the boundary between different resin layers is weakened, although the operation of removing the supporting material SA after shaping is facilitated, and operation performance is improved, the problem remains that peeling tends to occur simply by contact of the roller portion 25 as described above. Thus, there is a tradeoff between the problem of a tendency for peeling due to the collision with the roller portion and the problem of maintaining ease of removing of the supporting material after shaping, and there are difficulties with achieving both those problems.

### SUMMARY OF THE INVENTION

The present invention has been made in view of the above conventional problems and mainly aims at providing a three-dimensional shaping apparatus, a three-dimensional shaping method, a set-data creating apparatus for a three-dimensional shaping apparatus, a set-data creating program for a three-dimensional shaping apparatus, and a computer-readable recording medium which are capable of preventing scraping of resin due to contact of the roller portion with resin after curing without impeding the operational performance in relation to simple removal of supporting material from the final shaped object.

In order to achieve the above object, a three-dimensional shaping apparatus according to first aspect of the present invention is a three-dimensional shaping apparatus according to claim 1.

A hollow portion in which either the one shaping material or the other shaping material is not ejected or the ejection amount is reduced. In this manner, the uppermost surface of the shaping material that is ejected at a position corresponding to the hollow portion can be separated in a downward configuration from the roller portion so as not to be scraped off by the roller portion, and thereby effectively avoid the problem of peeling of the layer or erroneous recovery, or the like.

In a three-dimensional shaping apparatus according to a second aspect, the hollow portion ES in the shaped object can be provided in the slice immediately above the boundary surface between the different types of shaping material when provided in the other shaping material of the model material MA or the supporting material SA.

In a three-dimensional shaping apparatus according to a third aspect, the hollow portion ES in the shaped object can be provided in the slice immediately below that in contact with the boundary surface between the different types of shaping material, or separated below by a predetermined number of slices from that position when provided in the first shaping material in the model material MA or the supporting material SA.

In a three-dimensional shaping apparatus according to a fourth aspect, when the type of shaping material ejected from the shaping-material ejection device changes from one to the other of the model material MA and the supporting material SA after moving in a vertical direction by the vertical driving device, the ejection control device 13 can control the shaping-material ejection device not to eject shaping material for a predetermined number of slices after the change. In this manner, by omitting a predetermined number of slices that are laminated immediately after in the boundary surface between different shaping materials such as the model material and the supporting material, a hollow portion omitting the number of slices is produced in the height direction so that the roller portion does not make contact with the surface of the shaping material and thus prevents recovery of the cured shaping material by the roller portion.

In a three-dimensional shaping apparatus according to a fifth aspect, a curing device 24 is further included for curing of the model material MA and the supporting material SA. The control device 10 executes control to cause reciprocating scanning in one direction of the head portion 20 with the horizontal driving device, and ejection of one of the model material MA and the supporting material SA onto the shaping plate 40 with the shaping-material ejection device in at least one of the forward path and the rearward path of the reciprocating scan, recovery of an excess portion of one of the model material MA and the supporting material SA in a flowing state with the roller portion 25 in at least one of the forward path and the rearward path of the reciprocating scan, and curing of the first of the model material MA and the supporting material SA with the curing device 24 in at least one of the forward path and the rearward path of the reciprocating scan, and further causes ejection of the second of the model material MA and the supporting material SA onto the shaping plate 40 with the shaping-material ejection device in at least one of the forward path and the rearward path of the reciprocating scan, recovery of an excess portion of the second of the model material MA and the supporting material SA in a flowing state with the roller portion 25 in at least one of the forward path and the rearward path of the reciprocating scan, and curing of the second of the model material MA and the supporting material SA with the curing device 24 in at least one of the forward path and the rearward path of the reciprocating scan. Thereby shaping is executed by forming a slice, displacing the relative position of the shaping plate 40 and the head portion 20 in the height direction using the vertical driving device and repeating the lamination of the slice. In this manner, recovery of the excess portion and curing can be separately executed in relation to the model material and the supporting material, and thereby mixing of the model material and the supporting material at their boundary surface can be avoided and therefore enhances the quality of the shaped object.

In a three-dimensional shaping apparatus according to a sixth aspect, the thickness of the layer of ejected and cured shaping material that is positioned on the upper side of the boundary surface of bonding of different types of shaping material can be formed to be thicker than the thickness of other layers. In this manner, the possibility of erroneous recovery by the roller portion can be reduced by also increasing the thickness of the layer at the boundary surface between the different resin types.

In a three-dimensional shaping apparatus according to a seventh aspect, a predetermined number of slices can be set by the ejection control device 13 so that the excess portion is not recovered in the hollow portion ES in which either of the shaping materials is removed in a predetermined number of slices, and either of the shaping materials is laminated to at least two layers so that that one of the shaping materials does not come into contact with the roller portion. In this manner, since the thickness of the shaping material is sufficiently thick such that the earlier of the shaping materials is not peeled layer by layer, or erroneous recovery of the cured shaping material does not occur even when the shaping material comes into contact with the roller portion, and since the height of the hollow portion is set so that the shaping material does not make contact with the roller portion, stable shaping is realized by effectively avoiding these circumstances.

In a three-dimensional shaping apparatus according to an eighth aspect, the ejection control device 13 can control the shaping-material ejection device to not eject at least one layer portion or two layer portions of the model material MA after switching of the shaping material ejected from the shaping-material ejection device from the supporting material SA to the model material MA. In this manner, a height difference can be set to avoid contact with the roller by omission of layers, and thereby avoid recovery of cured model material by the roller portion.

In a three-dimensional shaping apparatus according to a ninthaspect, the ejection control device 13 can control the shaping-material ejection device to not eject at least one layer portion or two layer portions of the supporting material SA after switching of the shaping material ejected from the shaping-material ejection device from the model material MA to the supporting material SA. In this manner, a height difference can be set to avoid contact with the roller by omission of layers, and thereby avoid recovery of cured supporting material by the roller portion.

A method of three-dimensional shaping according to a tenthaspect is a three-dimensional shaping method according to claim 10.

In this manner, a predetermined number of slices of either of the shaping materials is omitted at the boundary surface between the different shaping materials being the model material and the supporting material to thereby create a hollow portion of the omitted slices in the height direction so that the roller portion does not make contact with the surface of the shaping material and thus prevent recovery of the cured shaping material by the roller portion. In particular, a height difference can be provided to avoid contact with the roller portion by forming layers of the same type in a thin configuration in proximity to the bonding portion between shaping materials of different types to thereby prevent erroneous recovery by the roller portion or peeling. Furthermore, since erroneous recovery or peeling can be effectively prevented in this manner, the bonding strength between the model material and the supporting material can be weakened, and thereby obtains the advantage that the operation of removal of the supporting material after shaping can be facilitated.

The method of three-dimensional shaping according to an eleventhaspect includes a further step of not ejecting shaping material from the shaping-material ejection device at the boundary surface between the different types of shaping material at which the model material MA and the supporting material SA changes from the first shaping material to the second shaping material in the height direction during laminating, or reducing the ejection amount, and completing shaping of the slice, and displacing the relative position of the ejection position by means of the vertical driving device to the ejection position of the next slice, ejecting the second of the shaping materials at a position corresponding to the boundary surface between different types of shaping material so that the upper surface of the ejected shaping material is separated from the roller portion 25, and a step of ejecting the second of the shaping materials at a position corresponding to the boundary surface between different types of shaping material during shaping of a slice after the next layer, and bringing the uppermost surface of the ejected material into contact with the roller portion 25, and thereby scraping off the excess portion of the second ejected shaping material with the roller portion 25.

A three-dimensional shaping method according to a twelfth aspect is a method in which the position of not ejecting either of the shaping materials or of limiting the ejection amount with the shaping-material ejection device is provided in the slice immediately above the boundary surface between the different types of shaping material at the ejection position of the second shaping material of the model material MA or the supporting material SA.

A set-data creating apparatus for a three-dimensional shaping apparatus according to a thirteenth aspect is a set-data creating apparatus according to claim 13. In this manner, a predetermined number of slices of either of the shaping materials is omitted at the boundary surface between the different shaping materials being the model material and the supporting material to thereby create a hollow portion of the omitted slices in the height direction so that the roller portion does not make contact with the surface of the shaping material and thus prevent recovery of the cured shaping material by the roller portion.

A set-data creating apparatus for a three-dimensional shaping apparatus according to a fourteenth aspect is a set-data creating apparatus in which the position of creating the hollow portion ES is provided in the slice immediately below or separated below by a predetermined number of slices from the boundary surface at which the model material MA and the supporting material SA changes from the first shaping material to the second shaping material.

A set-data creating program for a three-dimensional shaping apparatus according to a fifteenth aspect is a set-data creating program for a three-dimensional shaping apparatus according to claim 15.
In this manner, a predetermined number of slices of either of the shaping materials is omitted at the boundary surface between the different shaping materials being the model material and the supporting material to thereby create a hollow portion of the omitted slices in the height direction so that the roller portion does not make contact with the surface of the shaping material and thus prevent recovery of the cured shaping material by the roller portion.

A set-data creating program for a three-dimensional shaping apparatus according to a sixteenth aspect is a set-data creating program for a three-dimensional shaping apparatus wherein when the type of shaping material ejected from the shaping-material ejection device changes from the first of the model material MA and the supporting material SA to the second thereof in the vertical direction of the shaped object, the hollow portion creating function creates a hollow portion ES in which a predetermined number of slices of shaping material after the change is removed. In this manner, a predetermined number of slices laminated immediately after the boundary surface between the different shaping materials being the model material and the supporting material to thereby create a hollow portion of the omitted slices in the height direction so that the roller portion does not make contact with the surface of the shaping material and thus prevent recovery of the cured shaping material by the roller portion.

A computer-readable recording medium according to a seventeenth aspect stores the aforementioned program. Examples of the recording medium include magnetic disks, optical disks, magneto-optical disks, semiconductor memories and other mediums capable of storing programs, such as CD-ROMs, CD-Rs, CD-RWs, flexible disks, magnetic tapes, MOs, DVD-ROMs, DVD-RAMs, DVD-Rs, DVD+Rs, DVD-RWs, DVD+RWs, Blu-rays, HD DVDs (AODs). Further, the programs include those distributed by being stored in the aforementioned recording mediums and also include those distributed through downloading through network lines such as the Internet. Further, recording mediums include apparatuses capable of recording programs, such as general-purpose or dedicated apparatuses which incorporate the aforementioned program in the form of software or firmware, such that it can be executed. Further, respective processes and functions included in the program can be executed by program software capable of being executed by computers. Also, processes in respective portions can be realized by hardware such as predetermined gate arrays (FPGAs, ASICs) or by combinations of program software and partial hardware modules capable of realizing elements in portions of hardware.

### BRIEF DESCRIPTION OF THE DRAWING

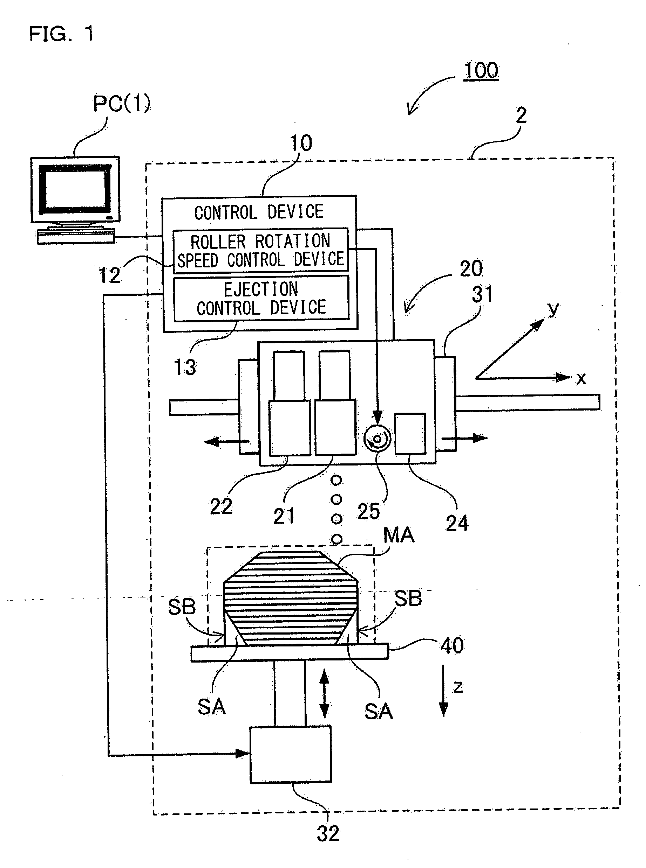

Fig. 1 is a block diagram illustrating a three-dimensional shaping apparatus in a first embodiment.

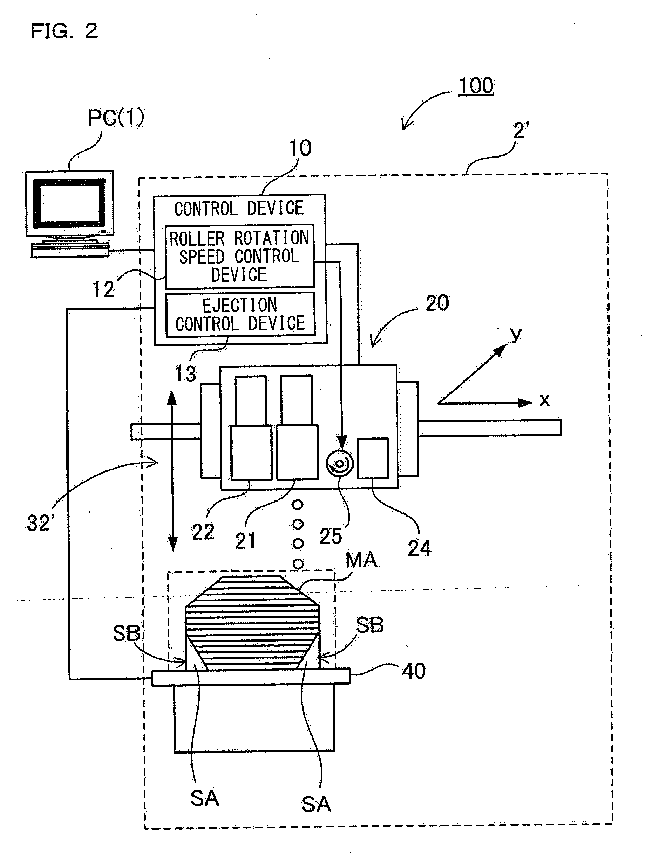

Fig. 2 is a block diagram illustrating a three-dimensional shaping apparatus in a modified example.

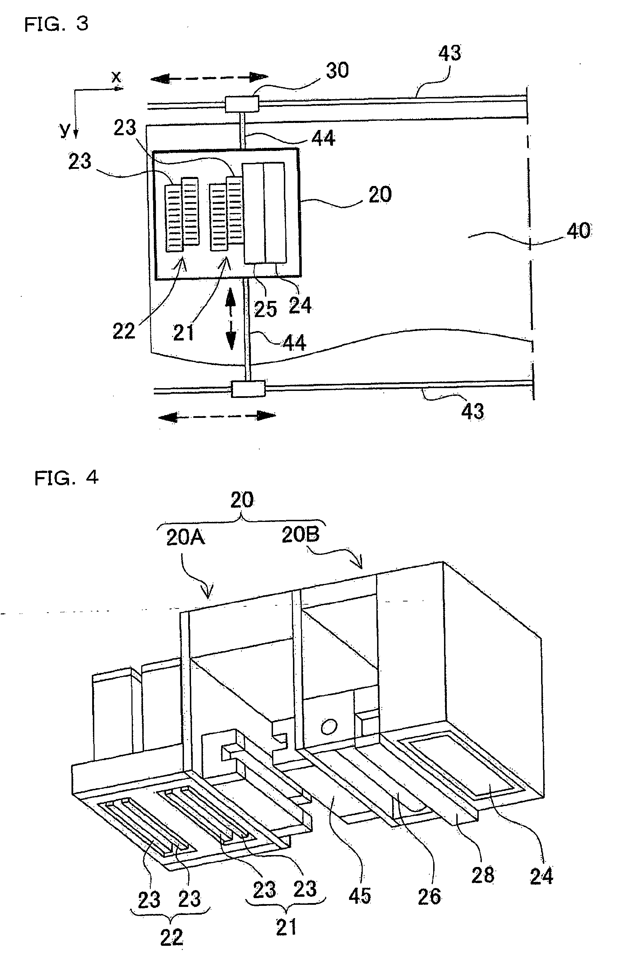

Fig. 3 is a plan view illustrating a state where a head portion is moved in XY directions.
Fig. 4 is a perspective view of the external appearance of the head portion.

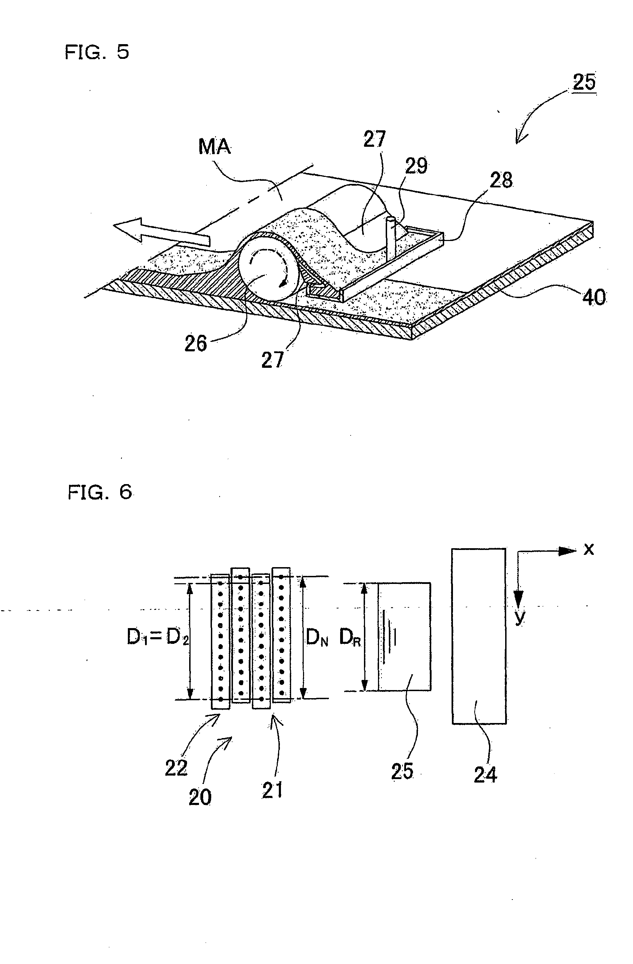

Fig. 5 is a perspective view when the excess amount of the shaping material is removed with the roller portion.
Fig. 6 is a schematic plan view illustrating the width of the roller main body and the ejection nozzle of the roller portion.

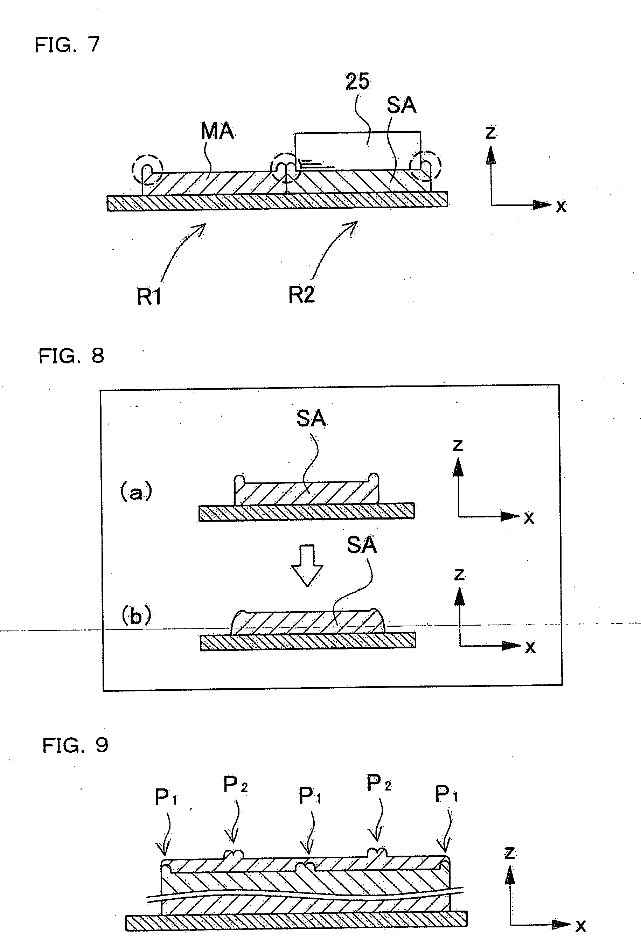

Fig. 7 is a schematic sectional view illustrating the configuration in which the same layer of the shaped object is shaped by division into a plurality of sections.
Fig. 8(a) is a schematic sectional view illustrating the theoretical configuration immediately after recovery of the excess portion of resin with the roller portion, and Fig. 8(b) is a schematic sectional view illustrating the configuration of deformation of the resin in Fig. 8(a) due to its weight.
Fig. 9 is a schematic sectional view illustrating the configuration of laminating a plurality of layers.

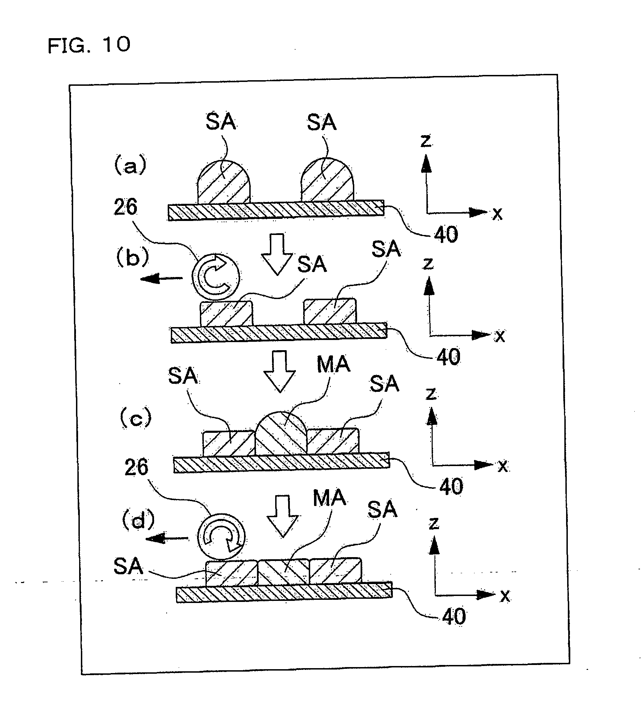

Fig. 10 is a schematic view illustrating a configuration in which mixing at the boundary surface between the model material and the supporting material is reduced.

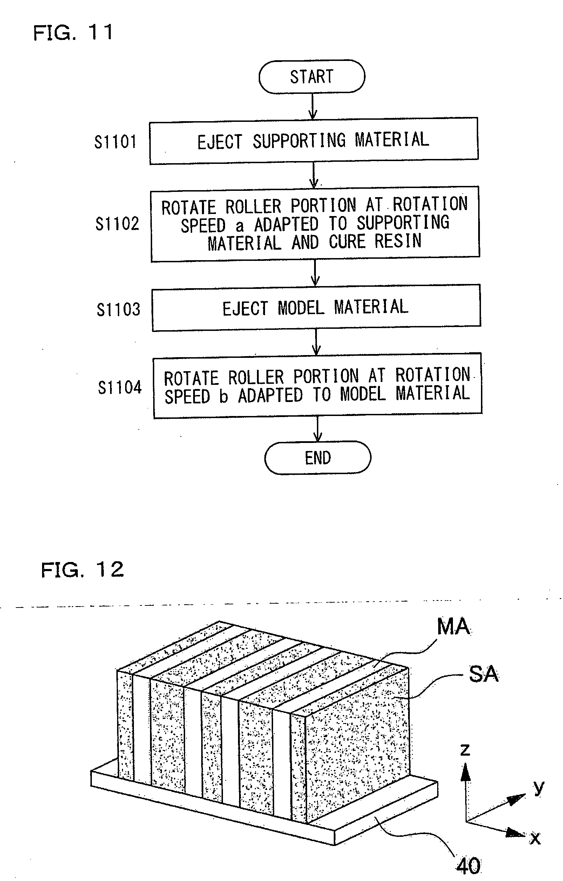

Fig. 11 is a flowchart of the sequence in Fig. 10.
Fig. 12 is a perspective view illustrating the shaped object that is shaped in an evaluation test.

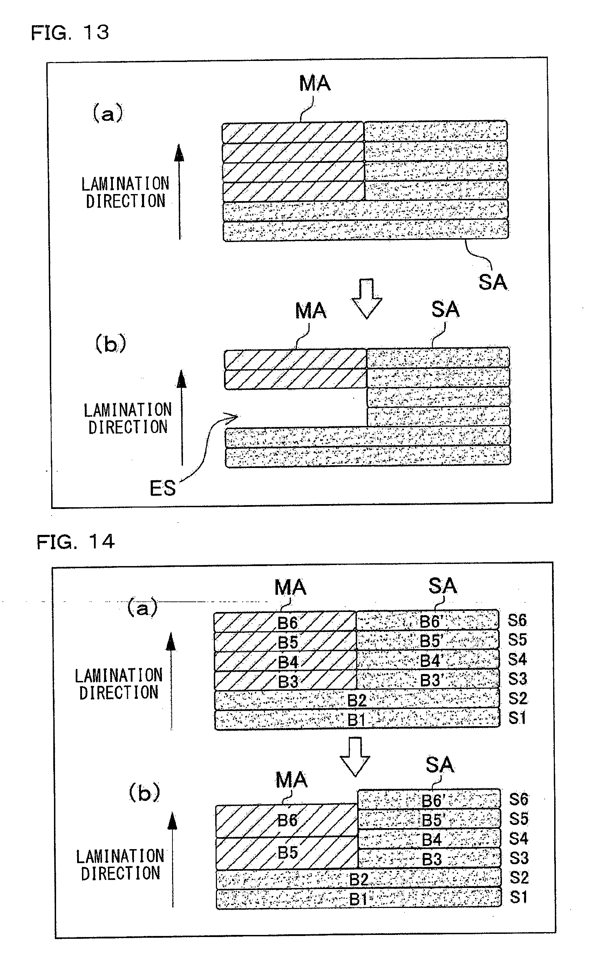

Fig. 13(a) is a schematic sectional view illustrating a shaped object, and Fig. 13(b) is a schematic sectional view illustrating a configuration of a virtual hollow portion.
Fig. 14(a) is a schematic sectional view illustrating the sequence of shaping when shaping the respective slices in Fig. 13(a) by use of simultaneous shaping, and Fig. 14(b) is a schematic sectional view illustrating the sequence of shaping when shaping the shaped object in Fig. 13(a) by use of simultaneous shaping according to the first embodiment.

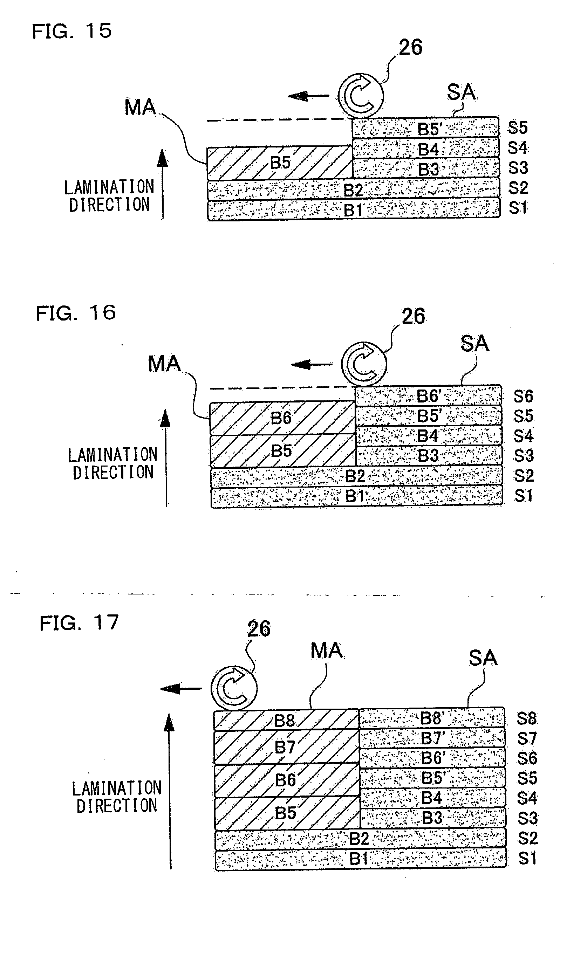

Fig. 15 is a schematic sectional view illustrating the configuration of shaping the shaped object in Fig. 14(b) in respect of slices S1 to S5.
Fig. 16 is a schematic sectional view illustrating the configuration of shaping the slice S6 using the configuration illustrated in Fig. 15.
Fig. 17 is a schematic sectional view illustrating the configuration of shaping the slices S7 and S8 using the configuration illustrated in Fig. 16.

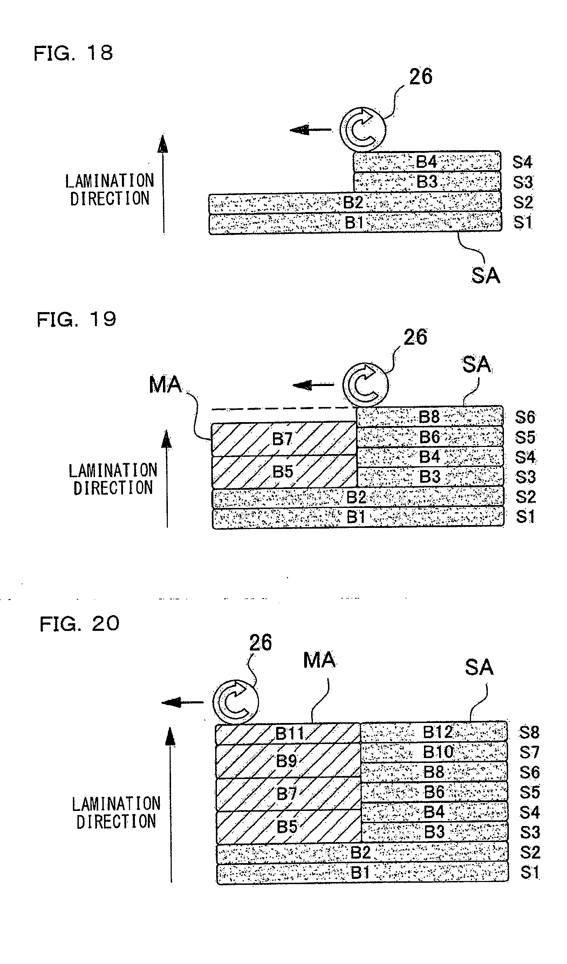

Fig. 18 is a schematic sectional view illustrating the configuration in which the shaped object in Fig. 13(b) is shaped in respect of slices S1 to S4 using separate shaping according to a second embodiment.
Fig. 19 is a schematic sectional view illustrating the configuration of separate shaping of the model material and the supporting material using the configuration illustrated in Fig. 18.
Fig. 20 is a schematic sectional view illustrating the configuration of further separate shaping of the model material and the supporting material using the configuration illustrated in Fig. 19.

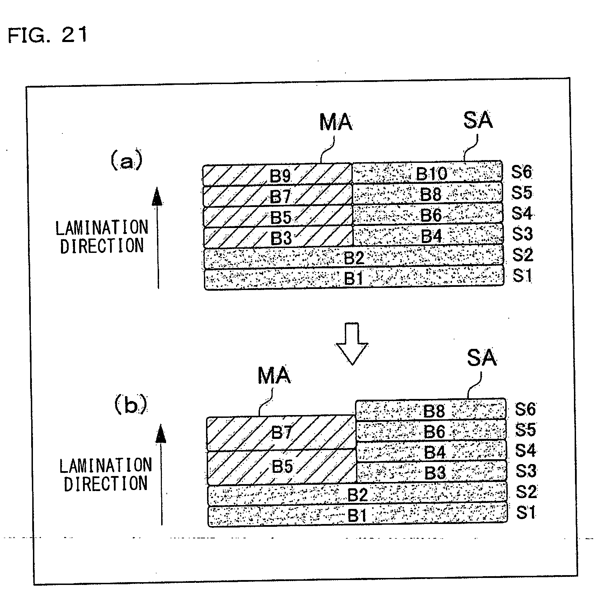

Fig. 21(a) is a schematic sectional view illustrating the sequence of shaping of the model material and the supporting material using separate shaping of the respective slices of Fig. 13(a), and Fig. 21(b) is a schematic sectional view illustrating the sequence of shaping of the model material and the supporting material during actual shaping of Fig. 13(b).

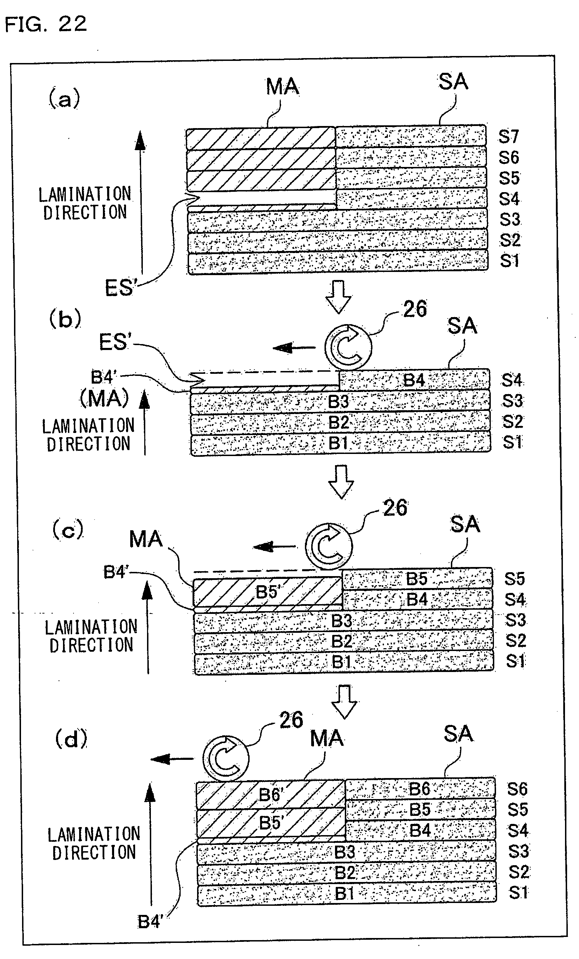

Fig. 22(a) is a sectional view illustrating a shaped object provided with a hollow portion limiting the ejection amount according to a third embodiment, Fig. 22(b) is a sectional view illustrating the lamination of the shaped object in Fig. 22(a) in slices S1 to S4, Fig. 22(c) is a sectional view illustrating the configuration of the further lamination of the slice S5 to Fig. 22(b), and Fig. 22(d) is a sectional view illustrating the configuration of the further lamination of the slice S6 in Fig. 22(c).

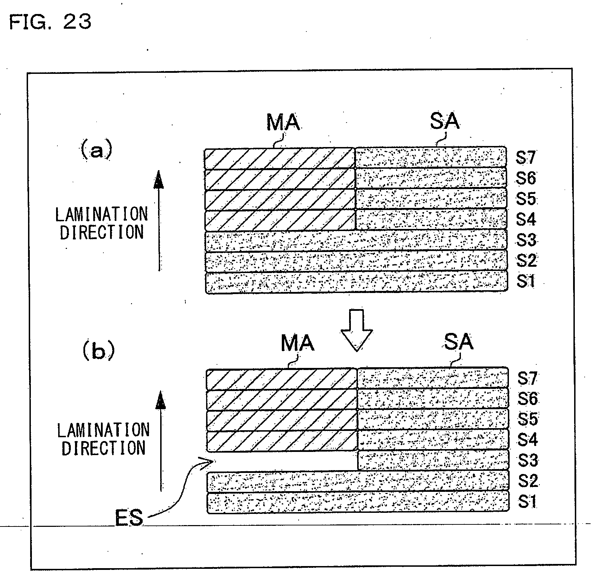

Fig. 23(a) is a schematic sectional view illustrating a shaped object, and Fig. 23(b) is a sectional view illustrating an example of providing the shaped object illustrated in Fig. 23(a) with a hollow portion on the supporting material side according to a fourth embodiment.

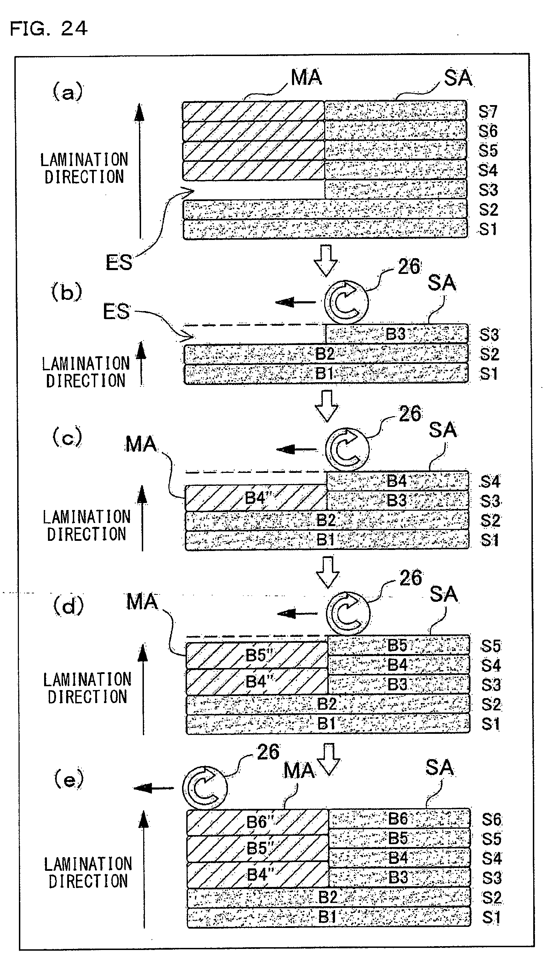

Fig. 24(a) is a sectional view illustrating a shaped object provided with a hollow portion on the supporting material side according to the fourth embodiment as illustrated in Fig. 23(b), Fig. 24(b) is a sectional view illustrating the shaping of a slice S3 in the shaped object in Fig. 24(a), Fig. 24(c) is a sectional view illustrating the further lamination of a slice S4 in Fig. 24(b), and Fig. 24(d) is a sectional view illustrating the further lamination of a slice S5 in Fig. 24(c), and Fig. 24(e) is a sectional view illustrating the further lamination of a slice S6 in Fig. 24(d).

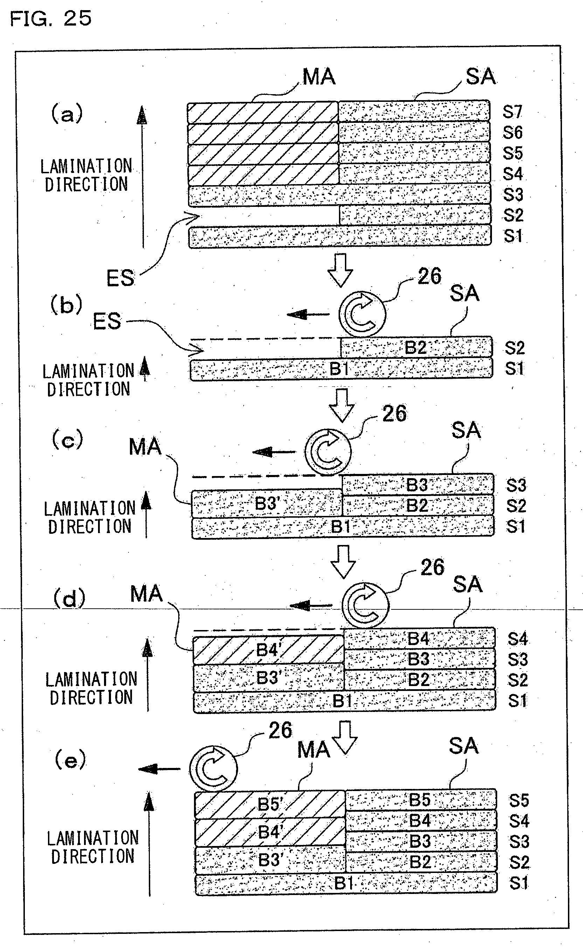

Fig. 25(a) is a sectional view illustrating a shaped object provided with a hollow portion ES according to a fifth embodiment that is separated below the boundary surface between the different types of shaping material, Fig. 25(b) is a sectional view illustrating the shaping of a slice S2 in the shaped object in Fig. 25(a), Fig. 25(c) is a sectional view illustrating the further lamination of a slice S3 in Fig. 25(b), and Fig. 25(d) is a sectional view illustrating the further lamination of a slice S4 in Fig. 25(c), and Fig. 25(e) is a sectional view illustrating the further lamination of a slice S5 in Fig. 25(d).

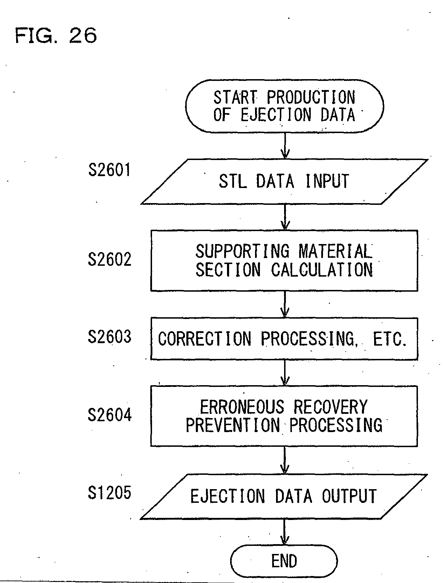

Fig. 26 is a flowchart illustrating an example of a sequence of producing ejection data from the shaped object data.

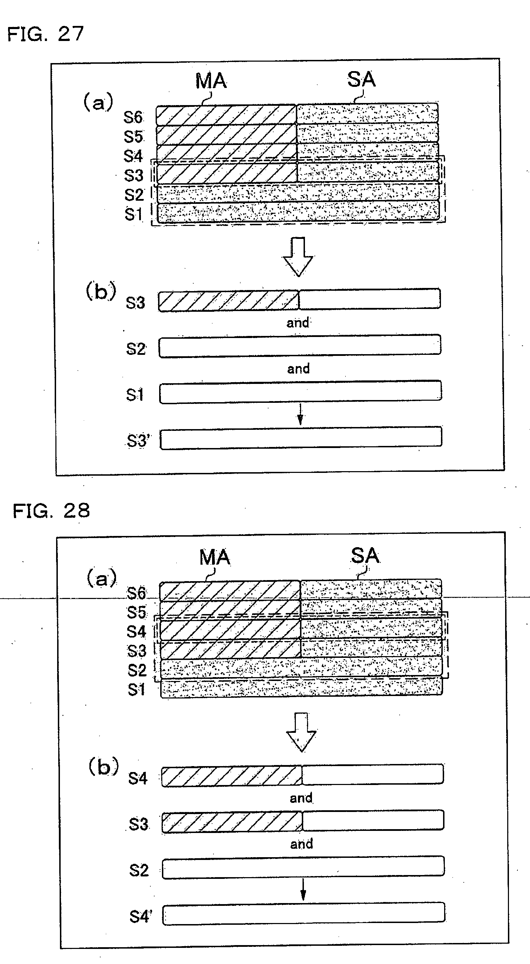

Fig. 27 is a schematic sectional view illustrating a configuration of calculating whether or not to eject a slice S3 in relation to the calculation of the hollow portion.
Fig. 28 is a schematic sectional view illustrating a configuration of calculating whether or not to eject a slice S4 in relation to the calculation of the hollow portion.

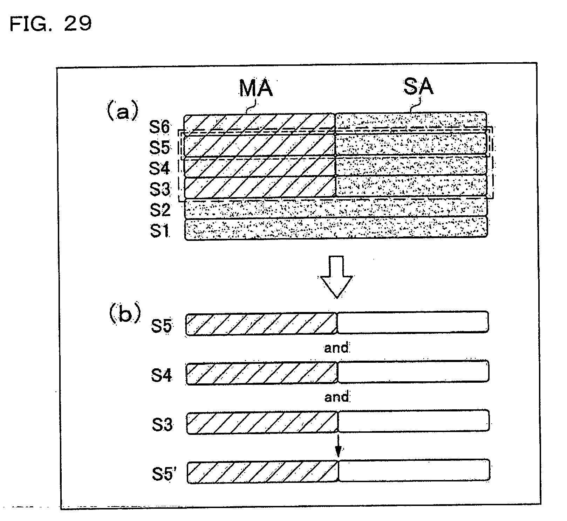

Fig. 29 is a schematic sectional view illustrating a configuration of calculating whether or not to eject a slice S5 in relation to the calculation of the hollow portion.

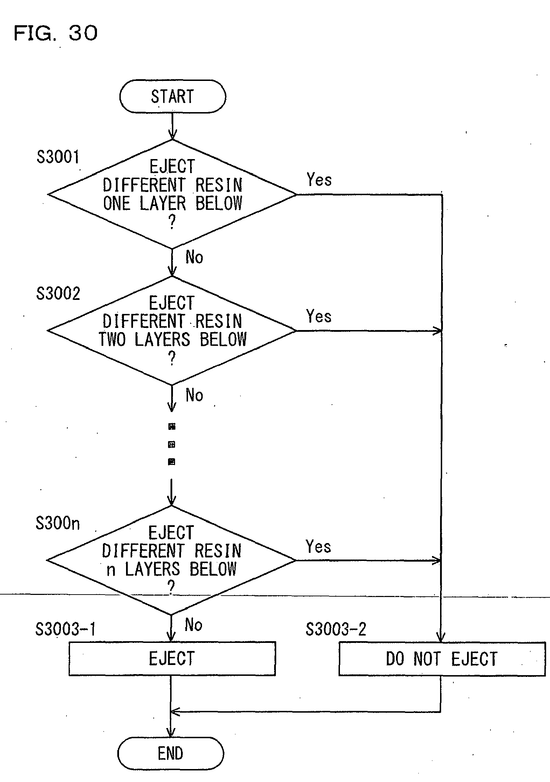

Fig. 30 is a flowchart illustrating the sequence of determining whether or not ejection by the shaping-material ejection device is possible.
Fig. 31 is a perspective view illustrating the structure of the roller portion.
Fig. 32 is a perspective view illustrating the configuration of recovering the excess portion of uncured resin with the roller portion.
Fig. 33 is a schematic view illustrating the configuration of unintended contact between the roller portion and cured resin.
Fig. 34 is a schematic view illustrating the configuration of contact between the roller portion and a thick layer of already cured resin.
Fig. 35 is a schematic view illustrating the configuration of peeling of a thin layer of already cured resin due to contact with the roller portion.
Fig. 36 is a schematic view illustrating the configuration of creasing of a thin layer of already cured resin due to contact with the roller portion.
Fig. 37 is a perspective view illustrating the bonding boundary between different resins in a shaped object.
Fig. 38 is a block view illustrating the set-data creating apparatus for the three-dimensional shaping apparatus.

### DETAILED DESCRIPTION OF PREFERRED EMBODIMENTS

Hereinafter, embodiments of the present invention will be described, with reference to the drawings. However, the embodiments which will be described below merely illustrate a three-dimensional shaping apparatus and a three-dimensional shaping method for realizing the technical concepts of the present invention, and the three-dimensional shaping apparatus, the three-dimensional shaping method, the set-data creating apparatus for a three-dimensional shaping apparatus, the set-data creating program for a three-dimensional shaping apparatus, and the computer-readable recording medium according to the present invention are not intended to be restricted to those which will be described below. Further, the present specification is not intended to restrict the components defined in the claims to members according to the embodiments. Particularly, the sizes, the materials and the shapes of components described in the embodiments, their relative placement, and the like are not intended to restrict the scope of the present invention and are merely illustrated as examples, unless otherwise specified. Further, the sizes of members, the positional relationships and the like are exaggeratedly illustrated in the drawings, in some cases, for clarification of the description. Further, in the following description, like names and like reference numerals are used to denote the same members or members with the same qualities, and detailed descriptions thereof will not be repeated. Further, the respective components constituting the present invention may be realized, such that a single member constitutes a plurality of components so that the single member can function as the plurality of components, or such that a plurality of members share the functions of a single member.

### (First Embodiment)

Fig. 1 illustrates a block diagram of a three-dimensional shaping system 100 according to a first embodiment of the present invention. An example of application to a three-dimensional shaping apparatus in an ink-jet manner will be described as an example of the three-dimensional shaping apparatus. The three-dimensional shaping system 100 is adapted to eject shaping materials in a liquid state in an ink-jet manner, and then, cure and laminate the materials for fabricating an arbitrary shaped object. A model material MA configured to form a final shaped object and a supporting material SA configured to be shaped to support a protruding portion of the model material MA and to be finally removed therefrom are employed as such shaping materials.

The three-dimensional shaping system 100 illustrated in Fig. 1 is constituted by a three-dimensional shaping apparatus 2, and a set-data creating apparatus 1 (a computer PC in Fig. 1) which transmits set data including shaping object data and shaping conditions to the three-dimensional shaping apparatus 2. The three-dimensional shaping apparatus 2 includes a control device 10, a head portion 20, and a shaping plate 40. The head portion 20 includes, as shaping-material ejection devices, model-material ejection nozzles 21 for ejecting the model material MA and supporting-material ejection nozzles 22 for ejecting the supporting material SA. The head portion 20 is further provided with a roller portion 25 for scraping off excess portions of these ejected shaping materials to thereby adapt the thickness of the uppermost layer of the shaped object at that time and smooth the surfaces of the shaping materials, and further, is provided with a curing device 24 for curing the shaping materials. Further, in order to cause the model-material ejection nozzles 21 and the supporting-material ejection nozzles 22 to eject, in an ink-jet manner, the shaping materials in a liquid or fluid state to suitable positions on the shaping plate 40 with respect to the horizontal direction of the head portion 20, there are provided an XY direction driving portion 31 and a Z-direction driving portion 32, as a horizontal driving device for reciprocating scanning in an X direction and also in a Y direction orthogonal to the X direction, and a vertical driving device for moving the positions of the head portion 20 and the shaping plate 40 with respect to each other in the height direction. As used herein, the Y direction is the direction of arrangement of a plurality of orifices having model material ejection nozzles 21 and supporting material ejection nozzles, and the X direction is the direction that is orthogonal to the Y direction in the horizontal plane.

The computer PC functions as the set-data creating apparatus 1. On receiving, from outside, an input of basic data for a three-dimensional shaped object, such as an input of model data designed through a three-dimensional CAD and the like, the CAD data is firstly converted into STL data (Stereo Lithography Data), for example, and then cross-section data is created by slicing the STL data into a plurality of thin cross-sectional parts, and then the slice data is transmitted to the three-dimensional shaping apparatus 2 collectively or on a slice-layer by slice-layer basis. At this time, in accordance with a determined attitude, on the shaping plate 40, of the model data designed through the three-dimensional CAD and the like (actually, the STL data resulting from the conversion), settings in relation to the positions for provision of the supporting material SA are performed in relation to portions or spaces in which the model made of the model material at this attitude is required to be supported, and based on these data, slice data corresponding to respective layers are created. The control device 10 takes the cross-section data from the computer PC and controls the head portion 20, the XY-direction driving portion 31, and the Z-direction driving portion 32 according to this data. Under the control by the control device 10, the XY-direction driving portion 31 is operated, and also, the model-material ejection nozzles 21 and the supporting-material ejection nozzles 22 in the head portion 20 are caused to eject, as droplets, the model material MA and the supporting material SA as shaping materials, to suitable positions on the shaping plate 40, so that a cross-sectional shape is formed based on the cross-section data provided by the computer PC. Further, the model material MA, which is one of the shaping materials ejected on the shaping plate 40, is at least cured, so that the model material MA is changed from the liquid or fluid state to a solid, and thus, is cured. Through such operations, a cross-sectional member corresponding to a single layer, namely a slice, is created. Although slice data may be produced on the side of the three-dimensional shaping apparatus 2, in that configuration, shaping parameters that must be determined by an operation such as the thickness of each slice must be sent from the computer PC side to the three-dimensional shaping apparatus 2.

### (Slice)

Herein, "slice" refers to a unit for laminating layers in the z direction of the shaped object, and the number of slices is equal to the value of the height divided by the laminated layer thickness. Actually, regarding requirements for the determination of the thickness of each slice, a minimum settable thickness is determined, according to the minimum unit amounts of materials which can be ejected from the respective ejection nozzles, variations caused by eccentricity of the roller in the roller portion 25 in the upward and downward directions, and the like. A value determined based on the aforementioned approach is defined as the minimum slice value, and thereafter, a user can finally determine the amount of each slice, in view of the required shaping accuracy and the required shaping speed, for example. That is, if the user selects prioritizing the shaping accuracy, the aforementioned minimum slice value or a value close thereto is determined as the amount of each slice. On the other hand, if the user prioritizes the shaping speed, the amount of each slice can be determined in such a way as to maintain a minimum necessary shaping accuracy. Further, as other methods, it is possible to employ a method which causes the user to sensuously select a ratio between the shaping accuracy and the shaping speed, or a method which causes the user to input a permissible maximum shaping time, thus displays some combinations of shaping times and shaping accuracies as candidates, and further causes the user to select a preferred condition out of these candidates.

Further, the shaping action for one slice data includes a series of steps of ejecting the shaping materials in a liquid or fluid state from the model-material ejection nozzles 21 and the supporting-material ejection nozzles 22 in an ink-jet manner at least in forward paths or rearward paths at least during reciprocating operations of the head portion 20 in the X direction (the main scanning direction of the head portion 20), further causing the roller portion 25 to operate to smooth the surfaces of the uncured shaped object at least in forward paths or rearward paths in a state where the shaped object resulting from the ejection onto the shaping plate 40 is in a fluid state, and then directing light with a specific wavelength from the curing device 24 to the smoothed surfaces of the shaped object to thereby cure the shaped object. This series of steps is performed at least once, but it goes without saying that the number of times these steps are performed is automatically changed according to the thickness indicated by the slice data and the required shaping accuracy. When the shaping material used in the shaping is cured at a predetermined temperature, the curing device 24 according to the present invention may be configured as a cooling or a heating device, and furthermore, the curing device may be omitted when applying natural curing.

On the other hand, the maximum thickness which can be formed on the shaping plate through a single ejection from the model-material ejection nozzles 21 and the supporting material ejection nozzles 22 at least in a forward or rearward path is determined by a unit ejection amount which can maintain the cross-sectional shapes of ejected liquid droplets at substantially-circular shapes, after the liquid droplets have landed thereon.

### (Shaping Plate 40)

The shaping plate 40 can be raised and lowered by the Z-direction driving portion 32. After a single slice has been formed, the control device 10 controls the Z-direction driving portion 32 in such a way as to lower the shaping plate 40 by a distance corresponding to the thickness of the single slice. Further, operations same as the above are repeatedly performed, so that new slices are laminated on the upper side (the upper surface) of the first single slice. Thus, a plurality of thin slices is successively created and laminated as described above, thereby attaining shaping for a shaped object.

Further, in cases where the shaped object has a protrusion, that is, a so-called overhang shape in the X-Y plane more than the shaped portion positioned below in the Z direction (that is to say, the height direction), the computer PC adds an overhang-supporting-portion shape as required, when the computer PC converts the shaped object into data. In other words, a shaped object that includes an overhang shape is a shaped object that has a portion (overhang portion) that forms a slice of new model material on the upper surface of the portion on which a slice of model material that has already been formed is not present. Further, the control device 10 performs shaping of an overhang supporting portion SB based on the overhang-supporting-portion shape, at the same time as the shaping of the model material MA which is to form the final shaped object. More specifically, the supporting material SA, which is different from the model material MA, is ejected as droplets from the supporting-material ejection nozzles 22 to form the overhang supporting portion SB. After the shaping, the supporting material SA forming the overhang supporting portion SB is removed, thereby providing the target three-dimensional shaped object.

The head portion 20 is moved by a head moving device 30 in the horizontal direction, namely in XY directions, as illustrated in a plan view in Fig. 3. The head portion 20 is supported on an X direction displacing rail 43 that is a pair of guide mechanisms for the X direction (main scanning direction) respectively disposed in a vertical configuration in the figure. An X direction driving portion (not illustrated) is provided along one of the X direction displacing rails 43 on the base side that supports the head portion 20. A Y direction displacing rail 44 for displacing the head portion 20 in the Y direction (sub-scanning direction) is provided on a gate-shaped frame that places the head portion 20 on the X direction displacing rail 43. A driving portion (not illustrated) is provided for driving the head portion 20 along the Y direction displacing rail 44. The head portion 20 can be displaced in the X and the Y directions by the driving portion.

The head portion 20 illustrated in the example in Fig. 4 is divided into an ejection head unit 20A provided with the ejection nozzle and a recovery and curing head unit 20B provided with the roller portion and a curing device. A rail guide 45 is provided between the ejection head unit 20A and the recovery and curing head unit 20B to enable passage of the Y direction displacing rail 44 that displaces the head portion 20. The head portion 20 as illustrated in the plan view in Fig. 3 undergoes reciprocating displacement in the Y direction along the Y direction displacing rail 44. Both ends of the Y direction displacing rail 44 are supported on the head moving device 30. The head moving device 30 undergoes reciprocating displacement in the X direction along the pair of X direction displacing rails 43 provided in parallel along the vertical dimension of the shaping plate 40 to straddle the shaping plate 40 in the vertical direction. In this manner, the head portion 20 can be displaced to an arbitrary position on the XY plane on the shaping plate.

The shaping plate 40 is moved in the height direction, namely in the Z direction, by the plate raising/lowering device (the Z-direction driving portion 32), as illustrated in Fig. 1. Accordingly, the heights of the head portion 20 and the shaping plate 40 can be changed with respect to each other, thereby enabling stereoscopic shaping. More specifically, in order to eject the model material MA and the supporting material SA as shaping materials to a suitable position from the model-material ejection nozzles 21 and the supporting-material ejection nozzles 22 based on the slice data, the head portion 20 is reciprocally operated in the X direction by the head moving device 30, and then, the model material MA and the supporting material SA are ejected from a plurality of orifices which are provided in the ejection nozzles 21 and 22 and extended in the Y direction. Further, as illustrated in Fig. 3, in cases where the width of the ejection nozzles 21 and 22 in the Y direction is smaller than the width in the Y direction over which shaping can be performed on the shaping plate 40, and also, the width in the Y direction which is indicated by the shaping model data is larger than the entire length of the orifices extending in the Y direction, the respective ejection nozzles 21 and 22 are reciprocally operated in the X direction at predetermined positions, thereafter the respective ejection nozzles 21 and 22 are shifted by a predetermined amount in the Y direction and then are reciprocally scanned at these positions. In addition, the model material MA and the supporting material SA are ejected to suitable positions based on the slice data. These operations are repeated to thereby create a shaped object corresponding to all the set shaping data.

While, in the example of Fig. 1, the plate raising/lowering device for raising and lowering the shaping plate 40 is employed as the Z-direction driving portion 32, the present invention is not limited to this example, and as in a three-dimensional shaping apparatus 2' illustrated in Fig. 2, it is also possible to employ a Z-direction driving portion 32' for moving the head portion in the Z direction, while the plate 40 is fixed in the height direction. Further, movement in the XY direction can be also attained by moving the shaping plate while fixing the head portion. It is possible to eliminate the necessity of shifting of the head portion 20 in the Y direction as described above, by making the width of the respective nozzles substantially equal to the width in the Y direction over which shaping can be performed on the shaping plate 40. However, even in such cases, in order to increase the resolution in the Y direction for the shaped object, which is determined by the intervals between the orifices provided in the nozzles, for example, it is possible to shift the head portion 20 in the Y direction, such that each orifice is positioned between the positions of orifices during the previous shaping.

### (Control Device 10)

The control device 10 controls the pattern of ejections of the shaping materials. That is, the control device 10 causes the shaping-material ejection device to eject the model material MA and the supporting material SA onto the shaping plate 40 at least in one of forward and rearward paths, during reciprocating scanning in the X direction, while reciprocally scanning the head portion 20 in a single direction, and further, causing the curing device 24 to cure the model material MA and the supporting material SA at least in one of the forward and rearward paths after the shaping-material ejecting device has ejected the shaping materials onto the shaping plate, thereby creating slices. Further, the control device 10 moves the positions of the shaping plate 40 and the head portion 20 with respect to each other in the height direction, and repeats laminating of slices to attain shaping. As described later in detail, the smoothing of the surfaces of the shaping materials by the roller portion 25 is performed at least in one of forward and rearward paths, after the shaping-material ejection device has ejected the shaping materials onto the shaping plate, but before the curing device 24 cures the surfaces of the shaping materials.

Through a single reciprocating scanning in the X direction, the control device 10 causes ejection of any one shaping material out of the model material MA and the supporting material SA, smoothing and removal of an excess portion on the surface of the shaping material with the roller portion 25, and further cures it with the curing device 24. Through the next and subsequent reciprocating scannings, the control device 10 causes ejection of the other shaping material which has not been ejected, smoothing of the surface of the shaping material, and curing. This series of processes is performed at least once for forming a single slice. As a matter of course, the present invention includes repeating, a plurality of times, the aforementioned series of processes corresponding to slice data for a single layer, according to the shaping time period and the final model surface accuracy required by the user, for example. Accordingly, the surface of any one of the model material MA and the supporting material SA can be smoothed in an uncured state, cured, and thereafter, the other of the model material MA and the supporting material SA is ejected and separately cured. This offers the advantage of effective prevention of mixture of the model material MA and the supporting material SA at the boundary surface therebetween.

In this example, a configuration has been described in which model material MA is ejected and then supporting material SA is ejected. However, conversely, the supporting material may be ejected firstly followed by ejection of the model material. Furthermore, although in this example, a method of separate ejection and curing of the model material and supporting material for shaping has been described in which either one of the shaping material is ejected first, and cured, and then the other shaping material is ejected and cured, there is no limitation to this method, and the model material and the supporting material may be ejected at the same time.

### (Shaping Material)

As described above, as shaping materials, a model material MA and a supporting material SA are employed, wherein the model material MA is to form a final shaped object, and the supporting material SA is to support protruding portions of the model material MA and to be removed finally.

### (Curing Device 24)

As the model material MA, it is possible to employ a photo-curing resin, such as an UV curing resin. In this case, the curing device 24 is a light emitting device capable of emitting light containing at least a specific wavelength which causes the material of the model material MA to be cured in reaction thereto and, for example, the curing device 24 is an ultraviolet-ray emitting device such as an UV lamp. As such an UV light lamp, it is possible to employ a halogen lamp, a mercury lamp, an LED and the like. Further, in this example, the supporting material SA is also formed from a UV curing resin. In cases of employing an UV curing resin which can be cured by UV rays having the same wavelength, it is possible to employ the same ultraviolet-ray emitting device, thereby offering the advantage of utilization of a common light source.

### (Model Material MA)

Further, as the model material MA, it is possible to employ a thermoplastic resin. In this case, a cooling device is employed as the curing device 24. Further, in cases of employing thermoplastic resins as both the model material and the supporting material, when the model material has a melting point higher than the melting point of the supporting material, it is possible to remove the supporting material through melting by heating the shaped object after the completion of layer laminations to a temperature higher than the melting point of the supporting material and lower than the melting point of the model material, and then maintaining that temperature. Also, it is possible to employ a photo-curing resin as one of the model material and the supporting material, while employing a thermoplastic resin as the other of the model material and the supporting material.

Alternatively, it is possible to employ, as the model material, a material which can be cured by chemically reacting with a curing material. Further, it is also possible to mix a liquid modifier agent into the model material as required in order to adjust injection characteristics such as viscosity and surface tension. Further, injection characteristics can be changed through temperature adjustments. Other exemplary model materials include UV photopolymers, epoxy resins, acrylic resins and urethanes.

### (Supporting Material SA)

Basically, the same material as the model material described above may be used in relation to the supporting material SA. However, from the point of view of a material that facilitates final removal as the supporting material, it is desirable to add a material that enables removal to a material that is similar to the model material. Consequently, more specifically, it is possible to employ a water-swellable gel, wax, a thermoplastic resin, a water-soluble material, a meltable material and the like. For removing the supporting material SA, it is possible to employ appropriate methods, for example, dynamic cleaning such as water solution, heating, chemical reactions and hydraulic cleaning, or separation utilizing thermal expansion differences through melting by irradiation of electromagnetic waves, according to the properties of the supporting material.

### (Head Portion 20)

Fig. 4 illustrates an example of the head portion 20 in the ink-jet type three-dimensional shaping apparatus. The head portion 20 illustrated in the figure is provided with dedicated ejection nozzles for individually ejecting a model material MA and a supporting material SA as shaping-material ejection devices. More specifically, the head portion 20 includes model-material ejection nozzles 21 for ejecting the model material MA and supporting-material ejection nozzles 22 for ejecting the supporting material SA, such that the materials are spaced apart from each other in parallel with each other. The ejection nozzles are both provided with two nozzle rows 23.

In the head portion 20, the supporting-material ejection nozzles 22, the model-material ejection nozzles 21, the roller portion 25 and the curing device 24 are integrally provided in this order from the left side. Each of the ejection nozzles is adapted to eject an ink-type shaping material in a configuration of a piezoelectric-device type ink-jet printing head. Further, the shaping material is adjusted to have a viscosity enabling ejection from the ejection nozzles.

In the example of Fig. 4, the head portion 20 is adapted to eject the model material MA at first, and thereafter, eject the supporting material SA. Further, the head portion 20 is adapted to eject the shaping materials in forward paths (in the left-to-right direction in the figure), scrape off an excess resin with the roller portion 25 from the uppermost surface of the shaping material in the rearward path (from the right to the left in the figure), and after smoothing, to cure the smoothed resin with the curing device 24.

### (Roller Portion 25)

The head portion 20 is further provided with the roller portion 25 for smoothing the surfaces of the shaping materials by pressing the surfaces of the ejected model material MA and the ejected supporting material SA in uncured states and by removing excess portions of the shaping materials. The configuration of operations of this roller portion 25 will be described with reference to the schematic view in Fig. 5. In this example, there is illustrated a state where a roller main body 26 is smoothing the surface of an ejected model material MA in an uncured state. The roller portion 25 includes the roller main body 26 as a rotational member, a blade 27 placed to protrude toward the surface of the roller main body 26, a bath 28 for storing the shaping material scraped off by the blade 27, and a suction pipe 29 for ejecting the shaping material stored in the bath 28. The roller main body 26 is rotatably supported and presses the uncured resin while rotating to thereby smooth the resin surface and remove and recover an excess portion. The roller main body 26 is rotated in the direction opposite from the direction of traveling of the head portion 20 (in the clockwise direction in Fig. 5) when scraping off an excess portion of resin with the roller main body 26 and thereby scrapes away the uncured shaping material. The shaping material having been scraped away adheres to the roller main body 26 and is transferred to the blade 27, and thereafter, is scraped off by the blade 27 and guided into the bath 28. Therefore, the blade 27 is disposed at a position behind the roller main body 26 relative to the direction of travel when the roller main body 26 abuts with the resin surface, and is fixed at an attitude inclined downwardly toward the bath 28. In the same manner, the bath (tub) 28 is disposed on the same side as the blade 27 relative to the roller main body 26, and is disposed below the blade 27. Further, the suction pipe 29 is connected to a pump and is adapted to suction the shaping material stored in the bath 28 and then eject it. In this example, the roller main body 26 is made to have an outer shape with a diameter φ of about 20 mm.

The roller portion 25 is adapted to perform scraping when the head portion 20 travels in the right-to-left direction in the figure. In other words, when the model-material ejection nozzles 21 and the supporting-material ejection nozzles 22 are caused to eject the model material MA and the supporting material SA, respectively, to suitable positions based on slice data, while the head portion 20 travels in the left-to-right direction, the roller portion 25 does not come into contact with the shaping materials, and similarly, the curing device 24 does not perform irradiation from the light source. The roller portion 25 performs the aforementioned scraping operation, and also, the curing device 24 operates as a light source which emits light for curing at least the model material MA in the main scanning direction as a rearward path from the right to the left after the respective nozzles 21 and 22 are caused to eject the shaping materials at least, for example, in a forward path in the direction of left-to-right main scanning of the head portion 20 in the figure.

The light source of the curing device 24 is disposed in front of the direction of travel of the model-material ejection nozzles 21 and the supporting-material ejection nozzles 22, and therefore even when the light source is lit, ejected resin in a fluid state before smoothing by the roller portion 25 is not irradiated. On the other hand, it is of course possible to turn off the light source of the curing device 24 at a timing other than that required positively. Furthermore, a configuration is possible in which a plurality of curing devices is provided. For example, a first curing device and a second curing device may be provided as a curing device, and curing may be provisionally performed by the first curing device onto resin after ejection, and then further curing may be performed on resin by the second curing device. The provision of the curing device in a multistage configuration in this manner enables sufficient performance of the curing capacity of the resin. Furthermore, use of this configuration enables scraping off of excess resin by the roller portion after provisional curing using the first curing device when sufficient fluidity is still present in the resin even after application of the first curing device for provisional curing. That is to say, it is not necessary for all the curing devices to be disposed on the subsequent stage to the roller portion.

As illustrated in Figs. 1 and 4, relative to the direction of travel of the head portion 20, the roller portion 25 is placed in front of the curing device 24, to the left in the figure. As a result, firstly, the uncured shaping materials are scraped off by the roller portion 25, and thereafter, the shaping materials are cured by the curing device 24. Due to this placement, the scraping and curing of the shaping materials can be performed along the same path, thereby offering the advantage of high efficiency processing.

The basic concept of the disposition of the supporting-material ejection nozzle 22, the model-material ejection nozzle 21, the roller portion 25 and the curing device 24 along the X axis direction is as follows. When the direction of forward travel in the main scanning direction of the head portion 20 is considered as a base, either one of the supporting-material ejection nozzle 22 and the model-material ejection nozzle 21 may be positioned in front of the other. In relation to this nozzle layout, when the roller portion 25 and the curing device 24 perform a roller operation on the forward path, in the forward direction of travel, the roller portion 25 and the curing device 24 are disposed in order after the supporting-material ejection nozzle 22 and the model-material ejection nozzle 21, and when the roller operation is performed on the rearward path, the roller portion 25 and the curing device 24 may be disposed in order after the supporting-material ejection nozzle 22 and the model-material ejection nozzle 21 in the rearward path of travel.

In the above embodiment, a method of irradiation with UV light is adopted in which, after ejecting resin from the head portion 20 to form a new uppermost layer, and after scraping off excess resin with the roller portion 25 in relation to the resin layer in the uppermost layer in an uncured state during shaping, at least the uppermost resin layer is cured by the curing device 24.

However in addition to this configuration, a multistep configuration may be adopted in relation to the curing device as described above. For example, after ejecting resin from the head portion 20 to form a new uppermost layer, and after performing a single irradiation operation with the curing device 24 in relation to the uppermost resin layer including the excess resin layer, scraping of the excess resin layer is executed using the roller portion 25 on the uncured uppermost resin layer during shaping, and then the curing device 24 re-performs irradiation of UV light to cure at least the uppermost resin layer. In this case, the curing device 24 can perform the irradiation operation twice as described above by provision of a pair of curing devices in the transverse direction to sandwich the supporting-material ejection nozzle 22 and the model-material ejection nozzle 21 in the X direction in relation to the head portion 20, that is to say, in the main scanning direction of the head portion 20. Furthermore, in this case, in order to achieve a finally desired degree of curing of the resin by a combination of the first irradiation and the second irradiation, the resin after the first irradiation is not in a cured state, and is a fluid semi-cured state so that a scraping operation can be performed thereafter by the roller portion 25. Consequently, in this specification, the state of the uppermost layer before scraping with the roller portion 25 is an uncured state or a fluid state.

### (Width of Roller Portion 25)

The width of the roller portion 25 is formed to be less than the width of the model-material ejection nozzle 21 and the supporting-material ejection nozzle 22 provided on the shaping-material ejection device. Each of the nozzles includes a plurality of orifices for ejecting resin formed to be substantially parallel with the direction of sub-scanning that is orthogonal to the main scanning direction of the head portion 20 and are aligned with a predetermined interval. The width of each nozzle as described above means the distance between the orifices that are positioned on both end portions in the sub-scanning direction in each nozzle. That is to say, it means that the width of the roller portion 25 is less than the distance between orifices positioned on both end portions in the sub-scanning direction in each nozzle.

The distance between orifices is defined on the premise that the respective orifices provided respectively in the model-material ejection nozzle 21 and the supporting-material ejection nozzle 22 are disposed in a linear configuration in relation to X direction relative to the head portion 20, that is to say, the main scanning direction of the head portion 20. In other words, it is premised on a configuration in which the model-material ejection nozzle 21 and the supporting-material ejection nozzle 22 are positioned and disposed relative to the head portion 20 so that the positions in the main scanning direction in which ejection is performed by each single orifice of the model-material ejection nozzle 21 all overlap with the positions in the main scanning direction in which ejection is performed by each single orifice of the supporting-material ejection nozzle 22.

As illustrated by the bottom view of the head portion 20 in Fig. 6, a plurality of model-material ejection nozzles 21, and in the figure, two and a plurality of supporting-material ejection nozzles 22 are used, the other of the model-material ejection nozzle 21 and the supporting-material ejection nozzle 22 is offset in relation to the sub-scanning direction relative to one of the model-material ejection nozzle 21 and the supporting-material ejection nozzle 22 and positioned and used in relation to the head portion 20.

The basic objective of using a plurality of model-material ejection nozzles 21, and in the figure, two and a plurality of supporting-material ejection nozzles 22 is to improve the resolution in the Y direction of the model material or the supporting material by offsetting the position in the sub-scanning direction of the orifices provided on one of the model-material ejection nozzles 21 and the supporting-material ejection nozzles 22 relative to the position in the sub-scanning direction of the orifices provided on the other of the model-material ejection nozzles 21 and the supporting-material ejection nozzles 22. That is to say, positioning is performed so that orifices provided on the other of the model-material ejection nozzle 21 and the supporting-material ejection nozzle 22 are provided in the sub-scanning direction between two adjacent orifices provided on one of the model-material ejection nozzles 21 and the supporting-material ejection nozzles 22. In this case, the meaning of the width of the roller portion 25 in the present invention being less than the width of the model-material ejection nozzle 21 and the width of the supporting-material ejection nozzle 22 provided on the shaping-material ejection device is as follows.

The width of the model-material ejection nozzle 21 when a plurality of model-material ejection nozzles 21 is disposed in an offset configuration in relation to the sub-scanning direction means that the width of the roller portion 25 is less than the distance from the offset position disposed on the outermost side on one end portion in the sub-scanning direction of the plurality of model-material ejection nozzles 21 to the offset position disposed on the outermost side on the other end portion in the sub-scanning direction. This configuration is the same also in relation to the plurality of supporting-material ejection nozzles 22 adopted in the same system. In the same manner as the basic system described above, this system is premised on a configuration in which the model-material ejection nozzles 21 and the supporting-material ejection nozzles 22 are positioned and disposed relative to the head portion 20 so that the positions in the main scanning direction in which ejection is performed by each single orifice of the model-material ejection nozzle 21 all overlap with the positions in the main scanning direction in which ejection is performed by each single orifice of the supporting-material ejection nozzle 22.

The width of the roller portion 25 described above denotes the axial direction of the roller portion 25, that is to say, the substantial width used when scraping off excess resin on the roller surface of the roller portion 25 in the sub-scanning direction, and even when the apparent width is larger than the width of the model-material ejection nozzle 21 and the width of the supporting-material ejection nozzle 22, the width of the roller that is the original function as the roller portion and performs the scraping function may be less than the width of the model-material ejection nozzle 21 and the width of the supporting-material ejection nozzle 22.

Furthermore, the roller diameter may be varied by provision of a step from the roller portion formed on the end portion of the roller that substantially does not function to scrape off excess resin to the roller portion that substantially scrapes off excess resin, or the diameter of the roller portion may be continuously varied gradually from the roller portion formed on the end portion of the roller that substantially does not function to scrape off excess resin toward the roller portion that substantially scrapes off excess resin.

Fig. 6 shows an example of the bottom view of the head portion 20. In the example illustrated in the figure, the model-material ejection nozzle 21 and the supporting-material ejection nozzle 22 are disposed to respectively offset two rows of ejection nozzles. A width D1 of the model-material ejection nozzle 21 and a width D2 of the supporting-material ejection nozzle 22 are substantially equal and the offset amount is also substantially equal. Therefore, the ejection width DN of all ejection nozzles is substantially equal in both the model-material ejection nozzles 21 and the supporting-material ejection nozzles 22. The width DR of the roller portion 25 is less than the ejection width DN of the ejection nozzle. By reducing the width of the roller portion 25 to be less than the ejection width DN, as illustrated in Fig. 7 even when the same layer (slice) is shaped into a plurality of sections (the sections R1, R2 in the example illustrated in Fig. 7), when the roller portion 25 presses the right-side section R2, no contact is made with the already shaped section (the left-side section R1 in Fig. 7), and therefore a large surface area shaping operation is possible with high accuracy. Since there is no erroneous recovery of resin after curing, a state in which the suction pipe is blocked can be avoided. Furthermore, the amount of adjustment of the shaking and tilt of the roller portion is preferably less than or equal to the thickness of one slice, and therefore difficulties associated with adjustments during the preparation and mounting of the roller portion can be reduced. In this context, the width of the roller portion 25 is formed to be less than the distance between the orifices on both ends of the model-material ejection nozzle and the supporting-material ejection nozzle by one half of the orifice alignment pitch (0.5 mm). For example, when the orifice alignment pitch is 1 mm, the width of the roller portion 25 is formed to be respectively 0.5mm less on both ends than the distance between the orifices that are positioned on both ends of the model-material ejection nozzle and the supporting-material ejection nozzle.

A configuration in which the width of the roller portion 25 is less than the ejection width means that there is a portion in which resin cannot be recovered by the roller portion 25 such as the portion enclosed by the broken line as illustrated in Fig. 7. However, immediately after the excess portion of resin is recovered by the roller portion 25, the resin is not maintained from the liquid state to the state illustrated in Fig. 8(a), and as a result of not maintaining the shape due to its weight, sags as illustrated in Fig. 8(b). As a result, shaping is performed that is substantially the same as when all is recovered by the roller portion 25, and there is almost no problem in practice. In the actual example, the thickness of the excess resin that is scraped from the uppermost surface of the shaped body is a thickness of for example several tens of µm, and preferably no more than 50 µm. Therefore it can be stated that there is no problem in practice even when the height of the resin in the scraping residual portion is of a similar height.

When ejecting resin with the shaping-material ejection device based on slice data that includes an arbitrary thickness, printing can be performed by offsetting in the sub-scanning direction from the resin ejection position in the previous sub-scanning direction. In this manner, the position at which the roller portion 25 is not applied in relation to each slice layer is varied, and the effect of residual resin that is not recovered does not accumulate and therefore is uniformly suppressed. More specifically, after ejection of resin while displacing the first slice layer in the main scanning direction at the predetermined sub-scanning position, maintaining that sub-scanning position and scraping off excess resin with the roller portion 25, and then after the next slice layer is displaced by a fixed distance in the sub-scanning direction from the above predetermined position, ejection of resin is performed while displacing in the main scanning direction at that sub-scanning position, the sub-scanning position is maintained, and the roller portion 25 scrapes off excess resin.

As illustrated in Fig. 6, in a configuration in which the model-material ejection nozzles 21 are disposed with an offset in a plurality of rows, the width of the roller portion 25 is preferably formed to be less than the width of the total set of the plurality of rows of the model-material ejection nozzles 21. In this manner, the resolution can be improved by disposing the model-material ejection nozzles 21 with an offset, the width of the roller portion 25 can be reduced in relation to the model-material ejection nozzles 21 disposed in an offset configuration, and even when the same slice is shaped by division into a plurality of sections, the roller portion 25 does not make contact with the shaped body, and high accuracy shaping can be executed.

Furthermore, the effect of unrecovered residual resin can be prevented from accumulating by varying the position of application of the roller portion in relation to each slice. That is to say, a state in which only the interface portion is higher can be suppressed by varying the position of the border between sections in each slice. For example, in the example illustrated in Fig. 9, the ejection position for resin is offset by the control device 10 so that the border P2 of the next step is positioned between the borders P1 of the sections in which ejection was performed in the previous step. In this manner, even when shaping is slightly higher as a result of the previous slice, the next slice is subjected to recovery of the raised portion of uncured resin with the roller portion 25, the effect in relation to the height dimension does not accumulate, and therefore it is possible to avoid and suppress a problem of residual unrecovered resin.

In this manner, even when shaping the same slice by division into a plurality of sections by ejection of shaping material as in the above embodiment, a collision of the roller portion with the resin after curing can be avoided, and the quality of the shaped object can be improved.

### (Roller Rotation Speed Control Device 12)

The control device 10 of the three-dimensional shaping apparatus illustrated in Fig. 1 and Fig. 2 includes a roller rotation speed control device 12. The roller rotation speed control device 12 varies the rotation speed of the roller main body 26 in response to the physical characteristics of the model material MA and the supporting material SA ejected from each ejection nozzle when performing separate recovery of the model material MA and the supporting material SA with the roller main body 26. In particular, in the present embodiment, the respective resins as the model material MA and the supporting material SA are ejected separately, are recovered separately, and cured separately, and not at the same time. As a result, the rotation speed of the roller main body 26 can be varied in response to the physical characteristics of each resin when recovering the respective resins.

The principal physical characteristics of each resin include the surface tension and the viscosity of the resin on the uppermost surface of the shaped body and in proximity thereto prior to scraping off with the roller portion 26. However, the actual optimal rotation speed of the roller portion is determined in consideration of shaping condition parameters such as the displacement speed in the X direction of the head portion, the resin ejection amount per unit time from the head portion, and the like in addition to settings based on verification of the basic optimal rotation speed in relation to the surface tension and the viscosity of the resin on the uppermost surface of the shaped body and in proximity thereto obtained by actual experimentation in relation to the actual model material and supporting material used in shaping. A rotation speed determination table for the roller portion can be prepared based on this information, and stored. In this case, the rotation speed determination table for the roller portion may be stored either in the set-data creating apparatus 1 or the three-dimensional shaping apparatus 2.

Actually, the various types of parameters above are calculated in relation to shaping conditions selected by an operator, and an optimal rotation speed can be determined in relation to each of model material removal and supporting material removal based on the conditions selected by the operator from the table based on those results.

The table includes separate values (2 values) for the rotation speed of the roller main body 26 in relation to model material removal and supporting material removal, and therefore enables recovery of resin at a rotation speed that is adapted to the respective resins, and that reduces mixing at the boundary of the model material MA and the supporting material SA.

In the example in Fig. 1 and Fig. 2, the roller rotation speed control device 12 is incorporated in the control device 10. This type of control device 10 can be configured as an MPU, or the like. However, it is needless to say that the roller rotation speed control device and the control device may be provided separately.

This sequence is illustrated in the schematic figures in Fig. 10(a) to (d), and in the flowchart in Fig. 11. Firstly, in a step S1101, as illustrated in Fig. 10(a), the supporting material SA is ejected. Next, in step S1102, the roller main body 26 is rotated and pressed at a rotation speed a that is adapted to the supporting material SA as illustrated in Fig. 10(b). Thereafter, the supporting material SA is cured. Then, in step S1103, the model material MA is ejected as illustrated in Fig. 10(c). In step S1104, the roller main body 26 is rotated and pressed at a rotation speed b that is adapted to the model material MA as illustrated in Fig. 10(e). In this manner, it is possible to reduce mixture at the boundary of the model material MA and the supporting material SA by varying the rotation speed of the roller portion 25 when recovering the respective resins in response to the physical characteristics of each resin used as the supporting material SA and the model material MA. The viscosity or the surface tension may be used as the physical characteristics of the resins. However, separate factors for varying the rotation speed of the roller portion 25 include the head displacement speed, the ejection amount of resin per unit time, that is to say, the thickness of one slice, in addition to the physical characteristics of the resins as described above. For example, the shaping of each layer of model material and supporting material in the previous invention is premised on execution by separate processing. When shaping is performed by this type of processing, the ejection amount per unit time can be suitably determined from the point of view of shaping speed or shaping accuracy. For example, since supporting material is removed in a latter processing step, an accuracy of the level of the model material is not required. Therefore, the shaping speed can be increased by performing shaping on the basis of increasing the ejection amount per unit time of the supporting material relative to the model material. The rotation speed of the roller portion 25 preferably has a suitable setting when scraping the model material and the supporting material based on the shaping accuracy and the shaping speed.

### (Evaluation Experiments)

Evaluation experiments for confirming the efficacy of the above embodiment were performed by varying the rotation speed (rotation number) of the roller main body 26 in relation to the shaped object illustrated in Fig. 12 and comparing the shaped object after removal of the supporting material. The results are illustrated in Table 1 and Table 2. Table 1 illustrates the state in which the rotation number is varied between 469 to 1125 pps for the main purpose of recovery of the model material MA, and Table 2 illustrates the state in which the rotation number is varied between 375 to 1125 pps for the main purpose of recovery of the supporting material SA. The viscosity of the model material MA used in this experiment is 45 mPa.s, and the surface tension is 30 mM/m. The viscosity of the supporting material SA is 80 mPa.s, and the surface tension is 34 mM/m. The shaped object resulting from the shaping operation has four upright separate thin walls having a thickness of several hundred µm. The supporting material SA is provided in the periphery thereof. The results of shaping by varying the rotation number of the roller main body 26 in relation to this type of thin wall are illustrated in Table 1 and Table 2. In these tables, those thin walls that are upright are denoted by O, those thin walls that are slightly curved are denoted by Δ, and those thin walls that are greatly deformed or not shaped are denoted by X. From these results, the optimal rotation number for the model material and the supporting material are respective different, and the efficacy of varying the rotation speed in response to the characteristics of the resin is confirmed.

**Table 1**

| | | | | | |
|---|---|---|---|---|---|
| SUPPORTING MATERIAL RECOVERY ROTATION SPEED [rpm] | 1125 | 563 | 506 | 469 | 375 |
| MIXING OF SHAPING MATERIAL | X | X | Δ | ○ | Δ |

**Table 2**

| | | | | |
|---|---|---|---|---|
| MODEL MATERIAL RECOVERY ROTATION SPEED [rpm] | 1125 | 750 | 563 | 469 |
| MIXING OF SHAPING MATERIAL | X | ○ | ○ | Δ |

Mixing at the boundary of the model material and the supporting material of the shaped object can be reduced by recovering the two types of resin comprising the model material and the supporting material at different times by optimizing the rotation speed of the roller main body during recovery in accordance with the respective resins. In particular, separate curing of the model material and the supporting material enables varying of the rotation speed of the roller main body when recovering the model material and the supporting material, and a high quality shaped object can be obtained in which mixing at the resin interface is suppressed by recovering the excess resin portion in response to the physical characteristics of each resin.

### (Ejection Control Device 13)

The control device 10 illustrated in Fig. 1 and Fig. 2 includes an ejection control device 13. The ejection control device 13 controls the shaping-material ejection device to not eject shaping material after curing for a predetermined number of slices when changing the type of shaping material ejected from the shaping-material ejection device from one to the other of the model material MA and the supporting material SA. When creating ejection data from the shaped-object data described below, the ejection control device 13 functions as a hollow portion creating device for creating a hollow portion ES by removing shaping material corresponding to a predetermined number of slices after switching at a position at which the type of shaping material ejected from the shaping-material ejection device changes in the vertical direction of the shaped object. In this manner, a hollow portion corresponding to removed slices is produced in the height direction by removing a predetermined number of slices that are laminated immediately after the boundary surface between different shaping materials such as the model material MA and the supporting material SA so that the roller portion does not make contact with the surface of the shaping material, and therefore it is possible to prevent recovery of cured shaping material with the roller portion.

Conventionally, the roller portion 25 as illustrated in Fig. 33 may make contact with cured resin that it should not make contact with as a result of a vibration in the driving portion or the accuracy of mechanical components such as the roller portion 25 when shaping by recovering the excess portion of resin as illustrated in Fig. 32 by use of a recovery mechanism using the roller portion 25. Even when the roller portion 25 makes contact with cured resin, peeling does not result when the layer of cured resin has become integral with the cured resin of the same type to form a thick body. However, when the resin is thin for example at the bonding boundary surface between different resins, problems may occur such as the portion making contact may be peeled by the roller portion 25 to block the liquid waste passage, the whole layer may be peeled, and creasing may result on the surface. In order to prevent this type of peeling, although it has been proposed to strengthen the bonding force at the bonding boundary surface between the supporting material and the model material, this configuration increases the difficulty of the operation to remove the supporting material from the final shaped object after shaping. Conversely, when the bonding between different resins is weak, peeling tends to occur upon contact with the roller portion 25. In this manner, there is a trade-off between the problem of a tendency for peeling when making contact with the roller portion and the operation performance of removing the supporting material after shaping, and there are difficulties in solving both problems.

In this regard, the present embodiment increases the operation characteristics for the removal operation of the supporting material by weakening the bonding between the resins, and in proximity to the bonding between different resins, that is to say, when the layer of the same type is thin, the converse problem above is solved by a configuration in which the roller portion 25 is not applied. More specifically, the resin is configured with a height difference so that the roller portion does not make contact with thin resin layers. For this reason, the ejection control device 13 as illustrated in the block figure in Fig. 1 and Fig. 2 produces ejection data by application of an erroneous recovery prevention process to the shaped object data. Although this method produces a layer in which model material MA is not ejected, no effect is caused on the accuracy of the final shaped object, and quality can be maintained (more details are given below). The shaped object includes a hollow portion ES in which the ejection amount is reduced or no ejection of the first shaping material or the second shaping material from the shaping-material ejection device is performed in relation to a slice at the boundary surface between the different types of shaping material at which the model material MA or the supporting material SA changes from one shaping material to the other shaping material with respect to the height direction during lamination. The control device 10 detects the presence of the hollow portion ES in the slice of the shaped object, and performs control to not eject shaping material or to reduce the ejection amount from the shaping-material ejection device at the position corresponding to the hollow portion ES. The control device 10 completes shaping of the slice by executing control to not eject shaping material or reduce the ejection amount from the shaping-material ejection device at the position corresponding to the hollow portion ES when a hollow portion ES is included in the slice of the shaped object, and then uses the vertical driving device to switch the relative position in the height direction of the head portion 20 and the shaping plate 40, and when shaping the slice in the next layer, the uppermost layer of the second shaping material ejected at the position corresponding to the hollow portion ES is separated from the roller portion 25. The control device 10 controls the shaping-material ejection device and the vertical driving device so that when shaping a slice after the next layer, the uppermost layer of the second shaping material ejected at the position corresponding to the hollow portion ES is brought into contact with the roller portion 25, and the excess portion of the second shaping material ejected at that position is scraped off with the roller portion 25.

### (Formation of Hollow Portion)

In this context, the shaping of a shaped object is considered as illustrated in Fig. 13(a). Fig. 13(b) illustrates the configuration in which a hollow portion ES is formed by removing a slice corresponding to several layers as described above. In this example, two layers of model material are scraped off at the boundary surface of switching from supporting material SA to model material MA to thereby form a hollow portion ES. When the hollow portion ES is formed, the subsequently laminated layers are embedded with resin from above the hollow portion ES. The sequence of forming the shaped object in Fig. 13(b) including the hollow portion ES will be described based on the schematic sectional figures in Fig. 14 to Fig. 17.

### (Embodiment 1: When Shaping MS Simultaneously)

Firstly, as a first embodiment, an example of simultaneous shaping in which the model material MA and the supporting material SA are simultaneously shaped will be described. When using simultaneous shaping, the model material MA and the supporting material SA are ejected in a single scanning by the head portion. Data process is performed in relation to the shaped object data as illustrated in Fig. 14(a), and the respective layers (slices S1 to 6) are shaped in the sequence illustrated in Fig. 14(b). In the present example, the respective layers are assumed to be shaped by a single slice portion by a single reciprocating motion of the head portion.

During conventional simultaneous shaping, the model material MA and the supporting material SA are laminated sequentially in each slice in the order illustrated in Fig. 14(a). More specifically, in a slice S1, the block B1 of supporting material SA is ejected and cured, and after shaping of the supporting material layer (block B1), in a slice S2, the supporting material layer (block B2) is shaped onto the upper surface of the supporting material layer (block B1). Then, in a slice S3, the model material layer MA (block B3) and the supporting material SA (block B3') are respectively ejected and cured on the upper surface of the supporting material layer B2. Then a model material layer (block B4) is ejected and cured on the upper surface of the model material layer MA (block B3), and a supporting material layer SA of the block B4' is ejected and cured on the upper surface of the supporting material layer SA of the block B3'. Thereafter, the same operation is repeated, to thereby shape the same slices to a block B6 for the model material layer and a block B6' for the supporting material layer. In this method, after ejecting the model material MA for the block B3, when recovering the excess portion of resin of the model material MA, the model material layer in the block B3 is still thin being immediately after the transition from the supporting material SA to the model material MA, and there is the possibility that the overall model material in the block B3 will be peeled away by the roller main body and thereby result in creasing.

As illustrated in Fig. 13(b), at the boundary surface of switching from the supporting material SA to the model material MA, shaping is executed to remove two layers of model material MA. In the example illustrated in Fig. 14(b), the slices 1 and 2 are shaped as illustrated in Fig. 14(a), and in relation to the slices S3 and S4, model material is not ejected, and only supporting material SA is ejected and shaped (blocks B3, B4). In this configuration, only supporting material SA is shaped as illustrated in Fig. 14.

In this manner, after omitting shaping of two slices of model material MA, model material MA is ejected for the first time in the shaping of the slice S5 (block B5). Supporting material SA (block B5') is also ejected in the slice 5. When the excess resin portion is recovered by the roller portion, the height of the roller main body during the shaping of slice S5 corresponds to the position on the upper surface of the block B5' in Fig. 15. That position is higher than the upper surface of the block B5, and therefore even when the roller main body 26 is rotated at that height, no contact is made with the surface of the block B5. That is to say, the roller main body 26 at the height of the block B5' does not recover model material MA at the position on the block B5. As a result, the block B5 that is not subjected to recovery of excess resin is shaped to be slightly thicker than other block. Thereafter, the head portion is displaced to the height of the slice S6 with the vertical driving device and model material MA (block B6) and supporting material SA (block B6') are ejected. At this time, the height of the roller main body 26 is also positioned on the upper surface of the block B6' as illustrated by the broken line in Fig. 16, and the roller main body 26 does not reach the surface of model material MA and therefore model material MA is not recovered.

In the same manner, the model material MA and the supporting material SA are successively shaped. As illustrated in Fig. 17, in the configuration in which the model material MA (block B8) and the supporting material SA (block B8') are ejected in the slice S8, the height of the roller main body 26 corresponds to a position on the upper surface of the block B8' in Fig. 17, and therefore the model material (block B8) comes into contact with the roller main body 26 and the excess resin portion is recovered. In this manner, since the ejected resin for the model material MA includes the excess portion, the thickness is higher than the thickness of the slice of laminated supporting material SA, and the difference between the model material MA and the supporting material SA gradually decreases as the slices are laminated. When the model material MA is sufficiently thick, the roller main body 26 makes contact with the model material MA, and recovery of the excess resin portion commences. In the example in Fig. 17, the supporting material SA is laminated in 6 slices S3 to S8 to thereby compensate for the height difference resulting from scraping off two layers of model material MA. In this configuration, since the model material MA is already laminated in four layers (blocks B5 to B8), and has a sufficient thickness, even when making contact with the roller main body 26, only the upper layer portion is peeled and removed. In other words, the boundary surface between the model material MA has a sufficient bonding strength since it is the same type of resin. At the boundary surface between the model material MA and the supporting material SA, since the model material MA is already laminated in four layers and has a suitable weight, the four layers of model material MA cannot be peeled away together by the roller main body 26, and therefore peeling of the resin at the boundary surface between different resins can be effectively prevented. In this manner, peeling or erroneous recovery resulting from contact with the roller main body at a thin resin position can be effectively prevented by providing a height difference between the roller main body and the upper surface of resin through formation of a hollow portion ES by delaying the start time of ejection of the model material MA.

In this manner, when shaping the model material MA and the supporting material SA at the same time, erroneous recovery or peeling by the roller portion can be prevented by removing several applications of either resin at the bonding boundary surface between different types of resin. By use of simultaneous shaping, the shaping time can be reduced since shaping can be performed at the same time as the scanning operation for model material MA and supporting material SA.

### (Embodiment 2: MS Separate Shaping)

Although an example was described above of simultaneous shaping in which the model material and the supporting material were shaped at the same time, the present invention is not limited in this respect, and can also be applied to separate shaping in which the model material and the supporting material are shaped respectively separately. Separate shaping is adopted in the second embodiment described below, and the lamination sequence of shaping material in separate shaping will be described making reference to Fig. 18 to Fig. 21. The model material MA and the supporting material SA are shaped using separate shaping, and data processing is performed in relation to the shaping data illustrated in Fig. 21(a) to thereby shape each layer (slices S1 to S6) in the order illustrated in Fig. 21(b). In the present example, the respective layers are assumed to be shaped by a single slice portion by a single reciprocating motion of the head portion.

During normal separate shaping, the model material MA and the supporting material SA are laminated sequentially in each slice in the order illustrated in Fig. 21(a). More specifically, in a slice S1, the supporting material SA is ejected and cured, and after shaping of the supporting material (block B1), in a slice S2, a new supporting material layer (block B2) is shaped onto the upper surface of the block B1. Then, in a slice S3, only model material MA is ejected and cured onto the upper surface of the supporting material layer B2 (block B3). Then only supporting material SA. is ejected and cured on the upper surface of the supporting material layer B2 (block B4). Thereafter, the same operation is repeated, to thereby respectively shape the model material layers to the block B9 and the supporting material layer to the block B10. In this method, in the same manner as the simultaneous shaping described above, after ejecting the model material MA for the block B3, when recovering the excess portion of resin of the model material MA, the model material layer in the block B3 is still thin being immediately after the switching from the supporting material SA to the model material MA, and there is the possibility that the whole of the block B3 will be peeled away by the roller main body and thereby result in creasing.

As illustrated in Fig. 21(b), at the boundary surface of switching from the supporting material SA to the model material MA, shaping is executed to remove two layers of model material MA. In the example illustrated in Fig. 21(b), the slices 1 and 2 are shaped in the same manner as illustrated in Fig. 21(a), and in relation to the slices 3 and 4, model material is not ejected, and only supporting material SA is ejected and shaped (blocks B3, B4). In this configuration, only supporting material SA is shaped as illustrated in Fig. 18.

In this manner, after omitting shaping two slices of model material MA, model material MA is ejected and cured for the first time in the shaping of the slice S5 (block B5). When the excess resin portion is recovered by the roller portion, the height of the roller main body during the shaping of slice S5 corresponds to the position on the upper surface of the block B6 in Fig. 21(b). That position is higher than the upper surface of the block B5, and therefore even when the roller main body is rotated at that height, no contact is made with the surface of the block B5. That is to say, the roller main body does not recover model material MA at the position on the block B5. As a result, the block B5 that is not subjected to recovery of excess resin is shaped to be slightly thicker than other blocks. Next, the supporting material SA (block B6) is shaped at the same height (slice S5). Thereafter, the head portion is displaced to the height of the slice S6 with the vertical driving device and model material MA (block B7) is ejected. At this time, the height of the roller main body is also positioned on the upper surface of the block B8 as illustrated by the broken line in Fig. 19, the roller main body does not reach the surface of model material MA and therefore model material MA is not recovered. The supporting material SA (block B8) is shaped at the same height (slice S6).

Thereafter, in the same manner, the model material MA and the supporting material SA are successively shaped. As illustrated in Fig. 20, in the configuration in which the model material MA (block B11) is ejected in the slice S8, the height of the roller main body corresponds to a position on the upper surface of the block B12 in Fig. 20, and therefore the model material MA comes into contact with the roller main body and the excess resin portion is recovered. In this manner, since the ejected resin for the model material MA includes the excess portion, the thickness is higher than the thickness of the laminated slices, and the difference between the model material MA and the supporting material SA gradually decreases as the slices are laminated. When the model material MA is sufficiently thick, the roller main body makes contact with the model material MA, and recovery of the excess resin portion commences. In the example in Fig. 20, the supporting material SA is laminated in six slices S3 to S8 to thereby compensate for the height difference resulting from scraping off two layers of model material MA. In this configuration, since the model material MA is already laminated in four layers, and has a sufficient thickness, even when making contact with the roller main body, only the upper layer portion is peeled and removed. In other words, the boundary surface between the model material MA has a sufficient bonding strength since it is the same type of resin. At the boundary surface between the model material MA and the supporting material SA, since the model material MA is already laminated in four layers and has a suitable weight, the four layers of model material MA cannot be peeled away together by the roller main body, and therefore peeling of the resin at the boundary surface between different resins can be effectively prevented. In this manner, peeling or erroneous recovery resulting from contact with the roller main body at a thin resin position can be effectively prevented by providing a height difference between the roller main body and the upper surface of resin through formation of a hollow portion ES by delaying the start time between ejection of the model material MA.

In this manner, when the model material MA and the supporting material SA are shaped separately, erroneous recovery or peeling by the roller portion can be prevented by removing several applications of either resin at the bonding boundary surface between different types of resin. The use of separate shaping has the advantage of avoiding an adverse effect on the surface characteristics resulting from mixing of the resins in an uncured or flowing state at the boundary surface between the model material MA and the supporting material SA in a vertical direction in proximity to the same slice.

### (Embodiment 3: Ejection Amount Limitation)

In the embodiments above of simultaneous shaping or separate shaping, the provision of a hollow portion enabled a configuration in which the roller does not make contact with at least one layer of shaping material that is initially ejected at the boundary surface at which the type of resin changes with respect to a direction of height. However, when an ejection nozzle is used that enables control of the ejection amount of resin, the control of the amount of shaping material ejected at the boundary surface at which the resin type changes prevents the roller from coming into contact with the shaping material in the layer formed immediately thereafter that is ejected at the boundary.

When the control of the ejection amount of resin is enabled by control of an ejection nozzle by the voltage applied to a piezoelectric element, the variation of the voltage value, the pulse width, the frequency or the like of the voltage that is applied to the piezoelectric element enables adjustment of the resin amount that is ejected per unit time. This control for example is realized by the ejection control device 13.

The method of simultaneous shaping while controlling the ejection in this manner is illustrated as a third embodiment in Fig. 22(a) to Fig. 22(d). As illustrated in Fig. 22(a), in the seven laminated layers in slices S1 to S7, the ejection amount of model material MA in the slice S4 is limited to thereby form a hollow portion ES'. In other words, the hollow portion ES' is not formed by a block in which shaping material is completely not ejected, but rather, the ejection amount of shaping material is reduced, and the volume of the hollow portion ES' is slightly smaller than the example of the hollow portion ES described above.

Firstly, in the three layers in the slices S1 to S3, the supporting material SA is successively ejected and cured. Then in the ejection for the slice S4 as illustrated in Fig. 22(b), the amount of model material MA that is ejected in the block B3 is limited to be thereby less than a normal slice (block B4'). On the other hand, the supporting material SA ejected in the block B3 is the same as a normal slice. In this configuration, when the roller main body 26 is applied, the excess portion of resin is recovered in relation to the block B4 of supporting material SA and on the other hand, since the roller main body 26 does not come into contact with the block B4' of the model material MA, overall peeling of the block B4' can be avoided.

Next, the lamination of the slice S5 as illustrated in Fig. 22(c) is such that the model material MA is ejected in a normal amount onto the block B4' (block B5'), or the supporting material SA is ejected in the same manner onto the block B4 (block B5). Thereafter, although the roller main body 26 is applied to the block B5, the roller body 26 does not make contact with the uncured block B5' in that configuration, and therefore it is possible to avoid a situation in which the whole of the model material layer formed from the blocks B4' and B5' is scraped off. However, due to the fact that the excess portion of model material MA in the block B5' is not scraped off, the block B5' is laminated with a thickness that is higher than a normal slice, and thereby reduces the height difference with the block B5 of supporting material SA.

The lamination of the slice S6 as illustrated in Fig. 22(d) is such that the model material MA is ejected in a normal amount onto the block B5', and the supporting material SA is ejected in the same manner onto the block B5, and the blocks B6' and B6 are laminated. The position of scraping with the roller main body 26 corresponds to the upper surface position of the block B6, and excess resin is scraped from the supporting material SA. On the other hand, the upper surface of the block B6' in which model material MA is ejected substantially corresponds with the upper surface position of the block B6. In this example, since the height in a state which includes the excess portion of the block B6' corresponds with the upper surface of the block B6, although scraping with the roller main body 26 is not produced, even if it is assumed that contact is made with the roller main body 26, since the model material layer has a considerable thickness due to the lamination of the blocks B4', B5' and B6', peeling of the whole model material layer by the roller main body 26 can be prevented.

In this manner, the hollow portion ES' is not limited to complete stopping of ejection into a slice and may be formed by controlling the ejection amount. In other words, even a hollow portion ES' that is formed by reducing the ejection amount is sufficient if the resin in an uncured or flowing state is separated to prevent contact with the roller main body. Therefore, a block in which the ejection amount is reduced as described above is included within a hollow portion within the meaning of the present invention.

In the example in Fig. 22(a) to Fig. 22(d), although an example of simultaneous shaping was described, the same effect may be obtained by using separate shaping.

### (Embodiment 4: Removal of Supporting Material)

Although the examples above all described an example of removal of the model material MA, the invention is not limited in this regard, and naturally, the same effect can be obtained by removal of the supporting material. That is to say, there is no limitation in relation to control to not eject model material, and ejection of model material may be maintained while controlling ejection of supporting material to thereby obtain the same effect. For example, during shaping of the shaped object as illustrated in Fig. 23(a), at the boundary surface of switching between the supporting material SA and the model material MA in the direction of lamination, as illustrated in Fig. 23(b), control is executed to not eject a one-layer amount of supporting material SA on the lower side. In this case, although the number of slices of model material MA is not changed, the shaping accuracy is reduced at least in relation to one layer in the height direction due to the fact that the supporting material is scraped away and the model material laminated thereon is cured to a greater degree than at the original position. However, since the actual thickness of one slice is extremely small, the resulting reduction in the shaping accuracy can be ignored, or almost no reduction in shaping accuracy is produced even if the hollow portion includes a plurality of layers.

An example in which the hollow portion is provided on the supporting material side is illustrated as a fourth embodiment in Fig. 24(a) to (e). As illustrated in Fig. 24(a), supporting material that is positioned in the slice S3 is removed to form a hollow portion ES in the shaping material that makes contact with the boundary surface of switching from the supporting material to the model material. In this example, the supporting material and the model material are ejected and cured by simultaneous shaping.

Firstly, as illustrated in Fig. 24(b), in the slices S1 and S2, the supporting material SA is laminated (block B1, B2). Then in slice S3, although supporting material SA is ejected (block B3), at the position of contact with the model material MA laminated on the upper surface, supporting material that should normally be ejected is not ejected, and thereby forms a hollow portion ES. In this configuration, when the roller main body 26 is applied, the excess portion of resin is scraped off only in relation to upper surface of the block B3 (the position illustrated by the broken line in the figure).

Next in the slice S4, model material MA and supporting material SA are ejected as illustrated in Fig. 24(c) to thereby respectively laminate the block B4" and B4. When the roller main body 26 is applied, the excess portion of resin is scraped off at the upper surface position of the block B4 as illustrated by the broken line in the figure. In this configuration, the upper surface of the block B4" into which model material MA is ejected is positioned lower than the position of scraping with the roller main body 26, and therefore the model material MA does not come into contact with the roller main body 26 and scraping does not occur. As a result, the block B4" is laminated in a thick configuration and reduces the height difference of the uppermost layer of the supporting material SA and the model material MA.

In the next slice S5, when the supporting material SA and the model material MA are ejected in the same manner as illustrated by Fig. 24(d), the block B5" and B5 are respectively laminated. When the roller main body 26 is applied, although the excess portion of resin is scraped off at the upper surface position of the block B5 as illustrated by the broken line in the figure, since the upper surface of the block B5" into which model material MA is ejected is still positioned lower than the position of scraping with the roller main body 26, the model material MA is not scraped off by the roller main body 26. As a result, the block B5" retains a thick laminated configuration and further reduces the height difference.

Then in slice S6, when the supporting material SA and the model material MA are ejected in the same manner as illustrated by Fig. 24(e), the block B6" and B6 are respectively laminated. The scraping position of the roller main body 26 corresponds to the upper surface position of the block B6, and the excess portion of resin of supporting material SA is scraped off. On the other hand, the upper surface of the block B6" into which model material MA is ejected substantially corresponds to the upper surface position of the block B6. In this example, since the height including the excess portion of the block B6" corresponds to the upper surface of the block B6, scraping by the roller main body 26 does not occur. However, even if contact with the roller main body 26 is assumed, since there is a thick lamination of three layers of model material MA, overall those layers are not peeled by the roller main body 26.

In the present example, the three layers of model material MA including the excess portion substantially correspond to the four layers of supporting material SA after removal of the excess portion. In this manner, even when a hollow portion ES is formed by removal of one layer of supporting material SA, the height difference can be eliminated corresponding to four slices. The number of slice layers forming the thickness of the hollow portion ES is determined in relation to how many layers of shaping material are peeled by the roller main body that is used or in response to the type of shaping material, the viscosity, the bonding force at the boundary surface between the model material and the supporting material, and the like.

Although an example of performing simultaneous shaping has been described in relation to the example in Fig. 24(a) to Fig. 24(e) above, the same effect can of course be obtained by use of separate shaping. In the example described above, although an example of providing a hollow portion was described, the control of the ejection amount of resin can be applied in the same manner. Furthermore, although the configuration of providing the hollow portion was described in relation to either one of the model material or the supporting material in the above example, the hollow portion may be provided in both the model material and the supporting material. Furthermore, a combination of limiting the ejection amount with formation of the hollow portion may be used, and for example, in addition to limiting the ejection amount of both the model material and the supporting material, the hollow portion may be provided, and on the other hand, the ejection amount may be limited.

### (Embodiment 5: Example of Separation of Hollow Portion ES below Boundary Surface of between Different Types of Shaping Material)

In the above example, at the boundary surface between the model material and the supporting material, that is to say, at the boundary surface between different shaping materials where there is a change from one resin to another resin, a configuration was described in which a hollow portion was provided in which either of the shaping materials is removed. However, there is no necessity to provide the hollow portion at a position facing the boundary surface between the different shaping materials as described above, and it is possible to provide the hollow portion separates by several layers below the boundary surface between different shaping materials. In this case, whether or not the roller main body makes contact with the layer formed from the second resin that is ejected first is affected depending on how many layers the hollow portion ES is separated from the boundary surface between different shaping materials, and how many layers are provided in the hollow portion ES. Therefore, a sufficient hollow portion ES must be provided to enable at least no contact of the roller main body with the first slice layer ejected initially onto the boundary surface between different shaping materials, and preferably, no contact of the roller main body with a plurality of slice layers ejected after the boundary surface as in the above embodiment. An example in which the hollow portion is separate from the boundary surface between different shaping materials in this manner is described in Fig. 25(a) to (e) as a fifth embodiment. As illustrated in Fig. 25(a), a hollow portion ES is formed in which one layer of supporting material is removed at a position separated by one layer below the boundary surface between different shaping materials at which there is a switch from the supporting material to the model material. Furthermore, in that example, the supporting material and the model material are ejected and cured using simultaneous shaping.

Firstly, as illustrated in Fig. 25(b), in the slice S1, the supporting material SA is laminated (block B1). Then in slice S2, although supporting material SA is ejected (block B2), at the position of separation by one slice from the boundary surface between different shaping materials, supporting material is not ejected, and thereby a hollow portion ES is formed. In this configuration, when the roller main body 26 is applied, the excess portion of resin is scraped from the upper surface of the block B2 (the position illustrated by the broken line in the figure).

Next in the slice S3, the supporting material SA is ejected as illustrated in Fig. 25(c) to thereby respectively laminate the block B3' and B3. When the roller main body 26 is applied, the excess portion of the supporting material SA is scraped off at the upper surface position of the block B3 as illustrated by the broken line in the figure. Since the supporting material SA in the block B3' is in a lower position than the scraping position of the roller main body 26 on the upper surface of the block B3', no contact is made with the roller main body 26, and no scraping occurs. As a result, the block B3' is laminated thickly, and the height difference on the uppermost surface of the blocks B3' and B3 is reduced.

In the slice S4, when the supporting material SA and the model material MA are ejected as illustrated by Fig. 25(d), the block B4' and B4 are respectively laminated. When the roller main body 26 is applied, although the excess portion of resin is scraped off at the upper surface position of the block B4 as illustrated by the broken line in the figure, since the upper surface of the block B4' into which model material MA is ejected is still positioned lower than the position of scraping with the roller main body 26, the model material MA is not scraped by the roller main body 26. As a result, the block B4' retains a thick laminated configuration and further reduces the height difference.

Then in slice S5, when the supporting material SA and the model material MA are ejected in the same manner as illustrated by Fig. 25(e), the block B5' and B5 are respectively laminated. The scraping position of the roller main body 26 corresponds to the upper surface position of the block B5, and the excess portion of resin of supporting material SA is scraped off. On the other hand, the upper surface of the block B5' into which model material MA is ejected substantially corresponds to the upper surface position of the block B5. In this example, since the height including the excess portion of the block B5' corresponds to the upper surface of the block B5, scraping by the roller main body 26 does not occur. However, even if contact with the roller main body 26 is assumed, since the model material MA is configured in the two blocks B4' and B5', and moreover is laminated thickly, overall those layers are not peeled by the roller main body 26.

In this manner, even if the hollow portion ES is separated from the boundary surface between different shaping materials, the same effect that trouble in relation to the resin recovery or a reduction in quality due to the erroneous recovery can be avoided. On the other hand, according to the fifth embodiment, a configuration is enabled in which the roller main body 26 does not make contact even at the boundary surface between different shaping materials at which there is a change from one resin to the other resin. In this manner, the advantage is obtained that superior surface finishing of the shaped object is enabled. In other words, since an unevenness is provided on the surface of the roller main body, when the roller main body is pressed to scrape off the excess resin, there was the problem that a wave pattern was caused by the unevenness in the roller surface or creases on the roller surface was transferred onto the shaped object. In this regard, the fifth embodiment is configured to prevent contact of the roller main body 26 with the resin surface at the different-type boundary surface by providing a hollow portion ES below the boundary surface therebetween so that the roller main body does not make contact with the boundary surface therebetween at which the resin switches. The resin surface is flat and smooth prior to contact with the roller main body 26, and therefore shaping accuracy is maintained without performing recovery of excess resin by separation from the roller main body 26 at the switching boundary and a superior surface configuration function is realized that improves the surface configuration of the shaped object.

In the present example, the hollow portion was provided on the supporting material side since the supporting material is positioned below the boundary surface between different shaping materials. However, obviously the same effect is obtained in an example in which the supporting material is positioned below the boundary surface between different shaping materials and not the model material, that is to say, the hollow portion is configured on the model material side at the switching boundary surface from the model material to the supporting material and not the boundary surface of switching from the supporting material to the model material as illustrated in Fig. 25. Furthermore, although an example has been described in which simultaneous shaping was performed, the same effect can be obtained in relation to separate shaping.

In the above embodiment, an example was described in which the position of change of type of resin in the lamination direction of the resin is mixed with the position of continuation of the same resin in the same slice layer. More specifically, in the example in Fig. 13, there is a slice layer that includes both a position of change from the supporting material to the model material in the direction of lamination and a position of continuous supporting material. Of course, the same slice layer may include a position of continuous model material and a position of change from the model material to the supporting material depending on the shape of the shaped object. In other words, a position of continuous ejection in the lamination direction of one resin of the model material and the supporting material and a position of change from the first resin to the second resin or from the second resin to the first resin are included in the same slice layer (the slice layer in the figure illustrates only a portion, and actually, the slice layer extends in a horizontal configuration, and is laminated in a variety of patterns in relation to each position that extends in the horizontal configuration). In this case, the hollow portion ES is formed only in a portion in the same slice layer, and the layer of the same resin has a continuous configuration without formation of the hollow portion ES at a position at which the same resin layer continues.

A configuration may also be considered in relation to the same slice layer in which only a position at which the first resin changes to the second resin is present in the lamination direction of the resin and a position at which the same resin layer is continuous is not present. For example, generally immediately after initiation of shaping, firstly a layer of supporting material is formed corresponding to at least one slice layer on the shaping plate to facilitate removal of the shaped object from the shaping plate 40. A slice layer including model material is formed on the layer of supporting material. When there is no position at which the supporting material is ejected onto the layer of supporting material, a slice layer will be shaped which includes only positions of change from the supporting material to the model material. In this case, that slice layer is only configured by the hollow portion ES, no shaping material is ejected, and only the relative distance in relation to the height direction of the shaping plate 40 and the ejection nozzle is changed at least once and controlled so that the roller main body does not make contact with the slice layer that is formed initially at least by ejection of model material. In this case, a separate shaped object may be shaped on one shaped object.

Furthermore, the boundary surface between the model material and the supporting material is not limited to one surface in the direction of lamination, and may exist in a plurality of surfaces. For example, when shaping a plurality of shaped objects along the vertical direction, before shaping model material corresponding to a second shaped object above model material that corresponds to a first shaped object, supporting material is interposed to facilitate separation of the objects. In this manner, when supporting material is further formed on model material, the hollow portion ES is provided again in the model material, and a plurality of hollow portions may be provided in the direction of lamination.

Even when two layers of supporting material are removed as illustrated in Fig. 13, since the layer of excess resin that is not recovered as illustrated in Fig. 17 and the like is formed in a thick configuration, the final thickness of the shaped object does not change, and the accuracy of the final shaped object is maintained.

The number of layers of supporting material that are removed is set depending on the thickness of one slice, the assumed vibration amount or manufacturing dimensions of the roller main body, the bonding strength of the supporting material or the model material, or the like. For example, this may be 1 to 4 layers, preferably 1 to 3 layers, and still more preferably 2 to 3 layers.

### (Modification of Shaped Object Data)

This type of shaped object can be processed by modifying the designated shaped object data. In other words, as illustrated in Fig. 13(a) and Fig.13(b), the shaped object data can be prepared in the ejection control device 13 to produce ejection data so that in a slice in which there is a switching between a resin and the shaping material laminated in a lower layer, one or more layers are removed in a block of the portion of the switched shaping material.

An example of the sequence of creating ejection data with the ejection control device 13 is illustrated in the flowchart in Fig. 26. Firstly, in a step S2601, shaped object data is acquired. The shaped object data for example is input into an STL file, or the like. Then in a step S2602, the section of supporting material required for shaping of the shaped object is calculated. In a step S2603, necessary correction processing is performed. Then in a step S2604, processing to prevent erroneous recovery is performed. The ejection control device 13 extracts the boundary surface of switching of the shaping material between slices as described above to one of the supporting material SA and the model material MA, and removes only a predetermined number of layers of shaping material that is laminated onto the upper surface of the boundary surface. Finally, in a step S2605, the final ejection data is created. Therefore, a control unit controls the shaped object ejection device of the head portion in accordance with the ejection data created in this above manner. In this manner, ejection of shaping material is controlled to not eject a resin that differs from the switching position of the resin for one or more layers.

### (Detailed Sequence for Production of Ejection Data)

The details of the processing for prevention of erroneous recovery in relation to ejection data for the provision of a hollow portion ES in the shaped object data will be described based on Fig. 27 to Fig. 29. In this context, using the shaped object data for the shaped object as illustrated in Fig. 13(a), ejection data for the provision of a hollow portion ES formed from two layers in the model material MA as illustrated in Fig. 13(b) will be considered. In this manner, when ejection is not executed in relation to two layers, the logical product is acquired as model data for a total of three layers being the layer that is shaped, and the layer one layer below and the layer two layers below.

Firstly, when the preparation of the data in the slice S3 is considered, as illustrated in Fig. 27(a), an ejection section is calculated using the logical product on the data for the three layers (in the box in the figure) calculated for the slice S3. The calculation of the logical product is performed by ascribing a value of 1 to dots for ejection of model material MA and a value of 0 to other dots. As a result, a slice S'3 after calculation is a slice of dot 0, that is to say, a slice in which model material MA is not ejected as illustrated in Fig. 27(b).

Then, the data for the slice S4 is used in relation to the logical product on the data for the three layers including the slice S4 (the box in the figure) as illustrated in Fig. 28(a), and therefore the slice S'4 after the calculation is a slice of dot 0, that is to say, a slice in which model material MA is not ejected as illustrated in Fig. 28(b).

Then, the data for the slice S5 is used in relation to the logical product on the data for the three layers including the slice S5 (the box in the figure) as illustrated in Fig. 29(a), and therefore the slice S'5 after the calculation is a slice of dot 1, that is to say, a slice in which model material MA is ejected as illustrated in Fig. 29(b).

In either of the above slices S, there is no data change in relation to the supporting material SA. As a result, respective data in the produced slices S3 to S5 is synthesized to thereby prepare the ejection data in Fig. 13(b). In this manner, when preparing ejection data for each slice in the process of preventing erroneous recovery by formation of a hollow portion ES in the supporting material, an ejection section can be calculated by use of the logical product and the data from the layer under consideration to the two layers below that layer.

In this manner, a boundary surface of change from one type of shaping material to another type of shaping material in relation to the direction of lamination is extracted from the shaped object data, and shaping is controlled so that the roller does not make contact with the boundary surface of change of resin type by creating ejection data for the provision of a predetermined number of layers in a layer in which the ejection amount is reduced or so that one of the resins is not ejected in contact with the extracted boundary surface or at least in a position separated by a predetermined number of layers. The creation of such ejection data is executed in the set-data creating apparatus 1. In other words, the set-data creating apparatus 1 creates ejection data including the hollow portion ES based on the shaped object data, and sends the data to the three-dimensional shaping apparatus 100. The creation of the ejection data can be configured for execution in the three-dimensional shaping apparatus 100 based on the shaped object data received from the set-data creating apparatus 1. In either configuration, an ejection data storage device is provided for storage of ejection data recording the ejection pattern for each slice configuring the shaped object. The ejection data storage device may employ a storage element such as a temporary memory or a non-volatile memory, or the like.

### (Set-data creating apparatus for use in three-dimensional shaping apparatus)

Next, the set-data creating apparatus for designating data for the shaped object to the three-dimensional shaping apparatus as described above will be described based on the block diagram in Fig. 38. The set-data creating apparatus 1 for the three-dimensional shaping apparatus illustrated in the figure includes an input device 61 for acquiring three-dimensional data such as CAD data or the like, a display device 62 for three-dimensional display of an object illustrating a shaped object that is set to the three-dimensional data in which the acquired three-dimensional data is converted to STL (stereo lithography data) data, a parameter setting device 63 for setting the shaping parameters, a calculation device 64 for calculating an optimal disposition position and attitude of the object according to the set shaping parameter, an adjustment device 65 for manually adjusting the desired attitude or position or for slight adjustment by a user of the optimal position and the optimal attitude calculated by the calculation device 64, and an output device 66 for converting the set data for driving the three-dimensional shaping apparatus according to the determined attitude and position to a data format that is read into the three-dimensional shaping apparatus and outputting that data to the three-dimensional shaping apparatus.

As described above, although an example of a three-dimensional shaping apparatus was described in which set data for a shaped object in a three-dimensional configuration is send in contrast to an ink-jet configuration three-dimensional shaping apparatus, the set-data creating apparatus is an effective device as long as the three-dimensional shaping apparatus is a three-dimensional shaping apparatus that uses another method such as a UV curing resin or thermoplastic resin rather than a three-dimensional shaping apparatus that is specifically an ink-jet type.

As described above, a sequence has been described in which ejection data is created from shaped object data. However, when ejecting shaping material from the shaping material ejection device that actually performs shaping without changing the data for the shaped object, in practice, partial removal of a block may be realized by controlling to partially prevent ejection of shaping material by discrimination of whether or not to eject. In this configuration, the control device such as the ejection control device 13 or the like limits the ejection operation of the shaping material ejection device. In this manner, the sequence of ejection control in which resin is not ejected for a predetermined number of layers (n layers) from a switch in the resin will be described with reference to the flowchart in Fig. 30. The sequence is illustrated by determination with reference to co-ordinates, that is to say, whether or not ejection of resin is performed. Firstly in a step S3001, it is determined whether or not to eject a different resin one layer below. When the determination is YES, the processing proceeds to a step S3003-2, and control is finished without executing ejection. When step S3001 is NO, the processing proceeds to S3002, and it is determined whether or not to eject a different resin two layers below. When the result is YES, the processing proceeds to a step S3003-2, and control is finished without executing ejection. The sequence is repeated in the same manner. It is determined whether or not to eject a different resin n layers below in a step S300n, and when the result is YES, the processing proceeds to a step S3003-2, and control is finished without executing ejection. When the result is NO, the processing proceeds to S3003-1, and control is finished by executing ejection. In this manner, erroneous recovery of resin can be avoided by not ejecting resin for n layers from the switch in the resin that is the shaping material even when performing direct ejection control with a shaping material ejection device and not applying separate processing of the ejection data.

### (Predetermined Number of Slices)

The hollow portion ES is formed by removing a predetermined number of slices. The predetermined number of slices that are removed is set to obtain a sufficient height difference so that the resin does not make contact with the roller main body until the rein has a thick lamination to thereby prevent peeling of layers of resin or erroneous recovery of cured resin by the roller portion. In other words, at a boundary surface at which the type of resin switches, the layer thickness in the initial stage is thin to thereby facilitate peeling and the like and thereby execute new shaping and lamination of resin. A hollow portion ES is set by removing a predetermined number of slices so that a height difference, that is to say, a space is provided between the upper resin surface that is newly shaped and the roller main body. For example, in a configuration in which excess resin is not recovered, that is to say, until at least two layers of resin that are laminated more thickly than normally, the removed slice number is set to not make contact with the roller main body. In the example illustrated in Fig. 20, the model material MA is initially laminated in four layers, and then contact with and recovery by the roller main body is performed. The layer thickness of the four model material layers corresponds to six normal layers of supporting material. That is to say, the height difference of the portion in which two layers of model material MA are removed is recovered by shaping of six layers of supporting material SA. When the height difference is large, that is to say, when the predetermined number of slices is large, since the model material is thicker, the problem of erroneous recovery is avoided. On the other hand, a certain level of thickness is required due to the need for a number of layers until recovery of the height difference. That is to say, thin shaping becomes difficult. In this context, the predetermined number of slices is determined in response to the accuracy required for the shaped object, or the like.

As described above, the present invention is not limited to the processing of data for forming a hollow portion by processing given shaped object data, and a method can be used in which unprocessed shaped object data can be used to thereby perform control in the same manner as when a hollow portion is present during actual shaping. That is to say, when actually shaping in the three-dimensional shaping apparatus based on shaped object data that does not include a hollow portion and is produced by a data setting apparatus, the three-dimensional shaping apparatus can limit ejection in the same manner as when a virtual hollow portion is formed. For example, the ejection of either resin can be stopped or the ejection amount can be limited at the boundary surface at which the resin type switches. In these circumstances, processing of the shaped object data is unnecessary, and shaping is performed in accordance with the existing shaped object data, and erroneous recovery of a thin resin layer when the resin type switches by the roller portion can be avoided by ejecting resin in the same pattern as when a hollow portion is formed virtually during actual shaping. In this manner, the present invention does not always require inclusion of the formation of a hollow portion in the shaped object data, and during final shaping by the three-dimensional shaping apparatus, it is sufficient if control is executed so that the ejection of resin is stopped or the ejection, amount is reduced at the boundary surface at which the type of shaping material switches, or in proximity thereto. In this manner, the present invention includes control to limit the ejection amount of resin by the hardware in addition to software control for production of a hollow portion in the data. Consequently, shaping is enabled by removal of a predetermined number of slices by either of a method in which a hollow portion ES is formed by data processing when ejection data is created on the basis of shaped object data, or by a method of direct application of an operation of hardware such as a shaping material ejection device without varying the shaped object data. Therefore the residual model material can be maintained as the final shaped object, and an adverse effect on quality as a result of erroneous recovery or trouble in relation to resin recovery can be avoided.

The three-dimensional shaping apparatus, the three-dimensional shaping method, the set-data creating apparatus for a three-dimensional shaping apparatus, the set-data creating program for a three-dimensional shaping apparatus, and the computer-readable recording medium according to the present invention can be suitably used in relation to three-dimensional shaping of a UV-cured resin in an ink-jet manner.

- 100: THREE-DIMENSIONAL SHAPING SYSTEM
- 1: SET-DATA CREATING APPARATUS
- 2, 2': THREE-DIMENSIONAL SHAPING APPARATUS
- 10: CONTROL DEVICE
- 12: ROLLER ROTATION SPEED CONTROL DEVICE
- 13: EJECTION CONTROL DEVICE
- 20: HEAD PORTION
- 20A: EJECTION HEAD UNIT
- 20B: RECOVERY AND CURING HEAD UNIT
- 21: MODEL-MATERIAL EJECTION NOZZLE
- 22: SUPPORTING-MATERIAL EJECTION NOZZLE
- 23: NOZZLE ROW
- 24: CURING DEVICE
- 25: ROLLER PORTION
- 26: ROLLER MAIN BODY
- 27: BLADE
- 28: BATH
- 29: SUCTION PIPE
- 30: HEAD MOVING DEVICE
- 31: XY DIRECTION DRIVING PORTION
- 32, 32': Z DIRECTION DRIVING PORTION
- 40: SHAPING PLATE
- 43: X DIRECTION DISPLACING RAIL
- 44: Y DIRECTION DISPLACING RAIL
- 45: RAIL GUIDE
- 61: INPUT DEVICE
- 62: DISPLAY DEVICE
- 63: PARAMETER SETTING DEVICE
- 64: CALCULATION DEVICE
- 65: ADJUSTMENT DEVICE
- 66: OUTPUT DEVICE
- MA: MODEL MATERIAL
- SA: SUPPORTING MATERIAL
- SB: OVERHANG SUPPORTING PORTION
- ES, ES': HOLLOW PORTION
- D1: WIDTH OF MODEL-MATERIAL EJECTION NOZZLE
- D2: WIDTH OF SUPPORTING-MATERIAL EJECTION NOZZLE
- DR: WIDTH OF ROLLER PORTION
- DN: EJECTION WIDTH OF ALL EJECTION NOZZLES
- P1: BORDER OF PREVIOUS STEP
- P2: BORDER OF SUBSEQUENT STEP
- PC: COMPUTER
- R1, R2: REGION

Various aspects are set out in the numbered paragraphs below:
1. A three-dimensional shaping apparatus configured to repeatedly perform operations for ejecting and curing as shaping materials, onto a shaping plate (40), a model material (MA) configured to form a final shaped object and a supporting material (SA) configured to support a protruding portion of the model material (MA) and to be finally removed, while performing scanning at least in a single direction, and thereby to form slices having a predetermined thickness in a height direction into a laminated configuration, and laminating these slices in the height direction for performing shaping, the three-dimensional shaping apparatus comprising:
   the shaping plate (40) configured to place a shaped object thereon;
   a shaping-material ejection device including a plurality of model-material ejection nozzles (21) configured to eject the model material MA and a plurality of supporting-material ejection nozzles (22) configured to eject the supporting material SA, such that these plurality of nozzles are arranged in a single direction;
   a roller portion (25) supported to freely rotate, and pressing, while rotating, the upper surface of the model material (MA) or the supporting material (SA) when in a flowing state, to thereby scrape off an excess portion of the model material (MA) or the supporting material (SA);
   a head portion (20) including the shaping-material ejection device and the roller portion (25);
   a horizontal driving device configured to perform reciprocating scanning of the head portion (20) in a horizontal direction;
   a vertical driving device configured to move the positions of the head portion (20) and the shaping plate (40) with respect to each other in the height direction; and
   a control device (10) configured to control the driving of the horizontal driving device, eject and cure of one slice of shaping material with the shaping-material ejection device, control the vertical driving device and displace the ejection position onto a slice after curing, and eject and cure a shaping material for a slice on the next layer to thereby successively laminate the slices; wherein
   when the model material (MA) and the supporting material (SA) in the height direction during lamination of the shaped object include a boundary surface of change from a first shaping material to a second shaping material, the control device (10) performs control for causing the shaping-material ejection device to form a hollow portion in which either the first shaping material or the second shaping material is not ejected or the ejection amount is reduced with reference to a slice corresponding to the boundary surface between different types of shaping material or a slice in proximity thereto.
2. The three-dimensional shaping apparatus according to paragraph 1, wherein the control device (10) is configured to perform control to include a hollow portion (ES) in a slice of the shaped object by not ejecting shaping material from the shaping-material ejection device at a position corresponding to the hollow portion (ES) or by reducing the ejection amount, complete shaping of the slice, and then during shaping of the next slice, and then
   displace the relative positions in the height direction of the head portion (20) and the shaping plate (40) with the vertical driving device so that the roller portion (25) does not come into contact with the uppermost surface of the second shaping material ejected at a position corresponding to the hollow portion (ES), and
   when shaping a slice after the next layer, control the shaping-material ejection device and the vertical driving device to cause contact of the roller portion (25) with the uppermost surface of the other shaping material ejected at a position corresponding to the hollow portion (ES) so that the excess portion of the second shaping material ejected at that position is scraped off by the roller portion (25).
3. The three-dimensional shaping apparatus according to paragraph 1 or paragraph 2, wherein the hollow portion (ES) in the shaped object can be provided in the slice immediately above the boundary surface between different types of shaping material when provided in the second shaping material of the model material (MA) or the supporting material (SA).
4. The three-dimensional shaping apparatus according to paragraph 1 or paragraph 2, wherein the hollow portion (ES) in the shaped object can be provided in the slice immediately below that in contact with the boundary surface between different types of shaping material, or separated below by a predetermined number of slices from that position when provided in the first shaping material of the model material (MA) and the supporting material (SA).
5. A three-dimensional shaping apparatus configured to repeatedly perform operations for ejecting and curing as shaping materials, onto a shaping plate (40), a model material (MA) configured to form a final shaped object and a supporting material (SA) configured to support a protruding portion of the model material (MA) and to be finally removed, while performing scanning at least in a single direction, and thereby to form slices having a predetermined thickness in a height direction into a laminated configuration, and laminate these slices in the height direction for performing shaping, the three-dimensional shaping apparatus comprising:
   the shaping plate (40) configured to place a shaped object thereon;
   a shaping-material ejection device including a plurality of model-material ejection nozzles (21) configured to eject the model material (MA) and a plurality of supporting-material ejection nozzles (22) configured to eject the supporting material (SA), such that these plurality of nozzles are arranged in a single direction;
   a roller portion (25) supported to freely rotate, and pressing, while rotating, the upper surface of the model material (MA) or the supporting material (SA) when in a flowing state and scraping off an excess portion of the model material (MA) or the supporting material (SA) ;
   a head portion (20) including the shaping-material ejection device and the roller portion (25);
   a horizontal driving device configured to perform reciprocating scanning of the head portion (20) in a horizontal direction;
   a vertical driving device configured to move the positions of the head portion (20) and the shaping plate (40) with respect to each other in the height direction;
   a control device (10) configured to control the driving of the horizontal driving device, eject and cure one slice of shaping material with the shaping-material ejection device, control the vertical driving device and displace the ejection position onto a slice after curing, and eject and cure a shaping material for a slice on the next layer to thereby successively laminate the slices; and
   an ejection control device (13) configured to control the shaping-material ejection device so that either one of the shaping materials is not ejected for a predetermined number of slices when the type of shaping material ejected from the shaping-material ejection device changes from the first of the model material (MA) and the supporting material (SA) to the second thereof after moving in a vertical direction by the vertical driving device.
6. The three-dimensional shaping apparatus according to any one of paragraph 1 to paragraph 5, wherein, when the type of shaping material ejected from the shaping-material ejection device changes from one to the other of the model material (MA) and the supporting material (SA) after moving in a vertical direction by the vertical driving device, the ejection control device (13) can control the shaping-material ejection device not to eject shaping material for a predetermined number of slices after the change.
7. The three-dimensional shaping apparatus according to any one of paragraph 1 to paragraph 6, further comprising a curing device (24) configured to cure the model material (MA) and the supporting material (SA), and wherein:
   the control device (10) executes control to cause reciprocating scanning in one direction of the head portion (20) with the horizontal driving device, and ejection of one of the model material (MA) and the supporting material (SA) onto the shaping plate (40) with the shaping-material ejection device in at least one of the forward path and the rearward path of the reciprocating scan, recovery of an excess portion of one of the model material (MA) and the supporting material (SA) in a flowing state with the roller portion (25) in at least one of the forward path and the rearward path of the reciprocating scan, and curing of the first of the model material (MA) and the supporting material (SA) with the curing device (24) in at least one of the forward path and the rearward path of the reciprocating scan, and further causes ejection of the second of the model material (MA) and the supporting material (SA) onto the shaping plate (40) with the shaping-material ejection device in at least one of the forward path and the rearward path of the reciprocating scan, recovery of an excess portion of the second of the model material (MA) and the supporting material (SA) in a flowing state with the roller portion (25) in at least one of the forward path and the rearward path of the reciprocating scan, and curing of the second of the model material (MA) and the supporting material (SA) with the curing device (24) in at least one of the forward path and the rearward path of the reciprocating scan, thereby shaping is executed by forming a slice, displacing the relative position of the shaping plate (40) and the head portion (20) in the height direction using the vertical driving device and repeating the lamination of the slice.
8. The three-dimensional shaping apparatus according to any one of paragraph 1 to paragraph 7, wherein the model material (MA) and the supporting material (SA) are not ejected at the same time in the same reciprocating scan on the line on which the model material (MA) and the supporting material (SA) are positioned in the scanning direction of the shaped object, and only one of the shaping materials is ejected and cured.
9. The three-dimensional shaping apparatus according to any one of paragraph 1 to paragraph 8, wherein the model material (MA) and the supporting material (SA) are ejected or cured on the line on which the model material (MA) and the supporting material (SA) are positioned in the scanning direction of the shaped object.
10. The three-dimensional shaping apparatus according to any one of paragraph 1 to paragraph 9, wherein the bonding strength at the boundary surface between the model material (MA) and the supporting material (SA) is configured to be weaker than the bonding strength between portions of the model material (MA) or portions of the supporting material (SA).
11. The three-dimensional shaping apparatus according to any one of paragraph 1 to paragraph 10, wherein the thickness of the layer of rejected and cured shaping material that is positioned on the upper side of the boundary surface of bonding of different types of shaping material is formed to be thicker than the thickness of other layers.
12. The three-dimensional shaping apparatus according to any one of paragraph 1 to paragraph 11, wherein a predetermined number of slices is set by the ejection control device (13) so that the excess portion is not recovered in the hollow portion (ES) in which either of the shaping materials is removed in a predetermined number of slices, and either of the shaping materials is laminated to at least two layers so that one of the shaping materials does not come into contact with the roller portion (25).
13. The three-dimensional shaping apparatus according to any one of paragraph 1 to paragraph 12, wherein the ejection control device (13) can control the shaping-material ejection device to not eject at least one layer portion or two layer portions of the model material (MA) after switching of the shaping material ejected from the shaping-material ejection device from the supporting material (SA) to the model material (MA).
14. The three-dimensional shaping apparatus according to any one of paragraph 1 to paragraph 13, wherein the ejection control device (13) is configured to control the shaping-material ejection device to not eject at least one layer portion or two layer portions of the supporting material (SA) after switching of the shaping material ejected from the shaping-material ejection device from the model material (MA) to the supporting material (SA).
15. The three-dimensional shaping apparatus according to any one of paragraph 1 to paragraph 14, wherein the ejection control device (13) determines the slices without ejection of shaping material to thereby enable calculation using the presence or absence of the logical product of ejection in each slice.
16. A three-dimensional shaping method configured to repeatedly performing operations for ejecting and curing as shaping materials, onto a shaping plate (40), a model material (MA) configured to form a final shaped object and a supporting material (SA) configured to support a protruding portion of the model material (MA) and to be finally removed, while performing scanning of a shaping-material ejection device at least in a single direction with a horizontal driving device, and moving the ejection position relative to the height direction with the vertical driving device to thereby form slices having a predetermined thickness in a height direction into a laminated configuration, and laminating these slices in the height direction for performing shaping, the three-dimensional shaping method comprising the steps of:
   ejecting one of the shaping materials of the model material (MA) and the supporting material (SA) onto the shaping plate (40) with the shaping-material ejection device for ejecting the shaping material;
   recovering one of the ejected shaping materials while rotating at a predetermined speed with the roller portion (25) supported to rotate freely in order to recover the excess portion of the shaping material in a flowing state;
   curing the shaping material in a flowing state after recovery of the excess portion;
   moving the relative position in the height direction of the shaping plate (40) and the shaping-material ejection device with the vertical driving device; and
   repeating the ejection of the shaping material by the shaping-material ejection device, the recovery of the excess portion of shaping material by the roller portion (25), curing of the shaping material, and movement in the height direction by the vertical driving device; and
   after moving with the vertical driving device, controlling the shaping-material ejection device to not eject either of the shaping materials for one or more slices or to decrease the ejection amount of the shaping material when the type of shaping material ejected from the shaping-material ejection device changes from the first to the second of the model material (MA) or the supporting material (SA).
17. The three-dimensional shaping method according to paragraph 16, further comprising a step of:
   not ejecting shaping material from the shaping-material ejection device at the boundary surface between different types of shaping material at which the model material (MA) and the supporting material (SA) changes from the first shaping material to the second shaping material in the height direction during laminating, or reducing the ejection amount, and completing shaping of the slice;
   displacing the relative position of the ejection position with the vertical driving device to the ejection position of the next slice; and
   ejecting the second of the shaping materials at a position corresponding to the boundary surface of different types so that the upper surface of the ejected shaping material is separated from the roller portion (25), and a step of:
      ejecting the second of the shaping materials at a position corresponding to the boundary surface of different types during shaping of a slice after the next layer; and
      bringing the uppermost surface of the ejected material into contact with the roller portion (25), and thereby scraping off the excess portion of the second ejected shaping material with the roller portion (25).
18. The three-dimensional shaping method according to paragraph 17, wherein the position of not ejecting either of the shaping materials or of limiting the ejection amount with the shaping-material ejection device is provided in the slice immediately above the boundary surface between different types of shaping material at the ejection position of the second shaping material of the model material (MA) or the supporting material (SA).
19. The three-dimensional shaping method according to paragraph 17 or paragraph 18, wherein the position of not ejecting either of the shaping materials or of limiting the ejection amount with the shaping-material ejection device is provided in the slice immediately below that in contact with the boundary surface between different types of shaping material, or separated below by a predetermined number of slices from that position at the ejection position provided in the first shaping material of the model material (MA) or the supporting material (SA).
20. The three-dimensional shaping method according to paragraph 19, wherein the shaping-material ejection device is controlled so that when the type of shaping material ejected from the shaping-material ejection device changes from the first of the model material (MA) and the supporting material (SA) to the second thereof after moving in a vertical direction by the vertical driving device, the shaping material after the change is not ejected for a predetermined number of slices.
21. A set-data creating apparatus configured to repeatedly performing operations for ejecting and curing as shaping materials, onto a shaping plate (40) configured to placing a shaping object thereon, a model material (MA) configured to form a final shaped object and a supporting material (SA) configured to support a protruding portion of the model material (MA) and to be finally removed, while performing scanning of a shaping-material ejecting device at least in a single direction with the horizontal driving device, curing, and moving the ejection position relative to the height direction with the vertical driving device, and thereby to form slices having a predetermined thickness in a height direction into a laminated configuration, and laminating these slices in the height direction for performing shaping, the set-data creating apparatus comprising
   an input device configured to acquiring three-dimensional data for the shaped object; and
   a hollow portion creating device configured to creating a hollow portion (ES) at which a predetermined number of slices of either of the shaping materials is removed, or the ejection amount of the shaping material is decreased at a position at which the type of shaping material ejected from the shaping-material ejection device in the vertical direction of the shaping material changes from the first of the model material (MA) and the supporting material (SA) to the second thereof.
22. The set-data creating apparatus according to paragraph 21, wherein the position of creating the hollow portion (ES) is provided in the slice immediately above the boundary surface between different types of shaping material at which the model material (MA) and the supporting material (SA) changes from the first shaping material to the second shaping material.
23. The set-data creating apparatus according to paragraph 21 or paragraph 22, wherein the position of creating the hollow portion (ES) is provided in the slice immediately below or separated below by a predetermined number of slices from the boundary surface at which the model material (MA) and the supporting material (SA) changes from the first shaping material to the second shaping material.
24. A set-data creating program for a three-dimensional shaping apparatus configured to repeatedly performing operations for ejecting and curing as shaping materials, onto a shaping plate (40) configured to placing a shaping object thereon, a model material (MA) configured to form a final shaped object and a supporting material (SA) configured to support a protruding portion of the model material (MA) and to be finally removed, while performing scanning a shaping-material ejecting device at least in a single direction with the horizontal driving device, curing, and moving the ejection position relative to the height direction with the vertical driving device, and thereby to form slices having a predetermined thickness in a height direction into a laminated configuration, and laminating these slices in the height direction for performing shaping, the three-dimensional shaping program being adapted to cause a computer to realize the functions of:
   acquiring three-dimensional data for the shaped object; and
   creating a hollow portion (ES) at which a predetermined number of slices of either of the shaping materials is removed, or the ejection amount of the shaping material is decreased at a position at which the type of shaping material ejected from the shaping-material ejection device in the vertical direction of the shaping material changes from the first of the model material (MA) and the supporting material (SA) to the second thereof.
25. The set-data creating program for a three-dimensional shaping apparatus according to paragraph 24, wherein when the type of shaping material ejected from the shaping-material ejection device changes from the first of the model material (MA) and the supporting material (SA) to the second thereof in the vertical direction of the shaped object, the hollow portion creating function creates a hollow portion (ES) in which a predetermined number of slices of shaping material after the change is removed.
26. The set-data creating program for a three-dimensional shaping apparatus according to paragraph 24 or paragraph 25, wherein the position of creating the hollow portion (ES) is provided in the slice immediately above the boundary surface between different types of shaping material at which the model material (MA) and the supporting material (SA) changes from the first shaping material to the second shaping material.
27. The set-data creating program for a three-dimensional shaping apparatus according to any one of paragraph 24 to paragraph 26, wherein the position of creating the hollow portion (ES) is provided in the slice immediately below or separated below by a predetermined number of slices from the boundary surface at which the model material (MA) and the supporting material (SA) changes from the first shaping material to the second shaping material.
28. A computer-readable recording medium storing the program according to any one of paragraph 24 to paragraph 27.

## Claims

1. A three-dimensional shaping apparatus configured to repeatedly perform operations for ejecting and curing as shaping materials, onto a shaping plate (40), a model material (MA) configured to form a final shaped object and a supporting material (SA) configured to support a protruding portion of the model material (MA) and to be finally removed, while performing scanning at least in a single direction, and thereby to form slices having a predetermined thickness in a height direction into a laminated configuration, and laminating these slices in the height direction for performing shaping, the three-dimensional shaping apparatus comprising:
the shaping plate (40) configured to place a shaped object thereon;
a shaping-material ejection device including a plurality of model-material ejection nozzles (21) configured to eject the model material MA and a plurality of supporting-material ejection nozzles (22) configured to eject the supporting material SA, such that these plurality of nozzles are arranged in a single direction;
a roller portion (25) supported to freely rotate, and pressing, while rotating, the upper surface of the model material (MA) or the supporting material (SA) when in a flowing state, to thereby scrape off an excess portion of the model material (MA) or the supporting material (SA);
a head portion (20) including the shaping-material ejection device and the roller portion (25);
a horizontal driving device configured to perform reciprocating scanning of the head portion (20) in a horizontal direction;
a vertical driving device configured to move the positions of the head portion (20) and the shaping plate (40) with respect to each other in the height direction; and
a control device (10) configured to control the driving of the horizontal driving device, eject and cure of one slice of shaping material with the shaping-material ejection device, control the vertical driving device and displace the ejection position onto a slice after curing, and eject and cure a shaping material for a slice on the next layer to thereby successively laminate the slices; **characterised in that**:
when the model material (MA) and the supporting material (SA) in the height direction during lamination of the shaped object include a boundary surface of change from a first shaping material to a second shaping material, the control device (10) performs control for causing the shaping-material ejection device to form a hollow portion in which either the first shaping material or the second shaping material is not ejected or the ejection amount is reduced with reference to a slice corresponding to the boundary surface between different types of shaping material or a slice in proximity thereto,
wherein the control device (10) is configured to perform control to include a hollow portion (ES) in a slice of the shaped object by not ejecting shaping material from the shaping-material ejection device at a position corresponding to the hollow portion (ES) or by reducing the ejection amount, complete shaping of the slice, and then during shaping of the next slice, and then
displace the relative positions in the height direction of the head portion (20) and the shaping plate (40) with the vertical driving device so that the roller portion (25) does not come into contact with the uppermost surface of the second shaping material ejected at a position corresponding to the hollow portion (ES), and
when shaping a slice after the next layer, control the shaping-material ejection device and the vertical driving device to cause contact of the roller portion (25) with the uppermost surface of the other shaping material ejected at a position corresponding to the hollow portion (ES) so that the excess portion of the second shaping material ejected at that position is scraped off by the roller portion (25).

2. The three-dimensional shaping apparatus according to claim 1, wherein the hollow portion (ES) in the shaped object can be provided in the slice immediately above the boundary surface between different types of shaping material when provided in the second shaping material of the model material (MA) or the supporting material (SA).

3. The three-dimensional shaping apparatus according to claim 1, wherein the hollow portion (ES) in the shaped object can be provided in the slice immediately below that in contact with the boundary surface between different types of shaping material, or separated below by a predetermined number of slices from that position when provided in the first shaping material of the model material (MA) and the supporting material (SA).

4. The three-dimensional shaping apparatus according to any one of claim 1 to claim 3, wherein, when the type of shaping material ejected from the shaping-material ejection device changes from one to the other of the model material (MA) and the supporting material (SA) after moving in a vertical direction by the vertical driving device, the ejection control device (13) can control the shaping-material ejection device not to eject shaping material for a predetermined number of slices after the change.

5. The three-dimensional shaping apparatus according to any one of claim 1 to claim 4, further comprising a curing device (24) configured to cure the model material (MA) and the supporting material (SA), and wherein:
the control device (10) executes control to cause reciprocating scanning in one direction of the head portion (20) with the horizontal driving device, and ejection of one of the model material (MA) and the supporting material (SA) onto the shaping plate (40) with the shaping-material ejection device in at least one of the forward path and the rearward path of the reciprocating scan, recovery of an excess portion of one of the model material (MA) and the supporting material (SA) in a flowing state with the roller portion (25) in at least one of the forward path and the rearward path of the reciprocating scan, and curing of the first of the model material (MA) and the supporting material (SA) with the curing device (24) in at least one of the forward path and the rearward path of the reciprocating scan, and further causes ejection of the second of the model material (MA) and the supporting material (SA) onto the shaping plate (40) with the shaping-material ejection device in at least one of the forward path and the rearward path of the reciprocating scan, recovery of an excess portion of the second of the model material (MA) and the supporting material (SA) in a flowing state with the roller portion (25) in at least one of the forward path and the rearward path of the reciprocating scan, and curing of the second of the model material (MA) and the supporting material (SA) with the curing device (24) in at least one of the forward path and the rearward path of the reciprocating scan, thereby shaping is executed by forming a slice, displacing the relative position of the shaping plate (40) and the head portion (20) in the height direction using the vertical driving device and repeating the lamination of the slice.

6. The three-dimensional shaping apparatus according to any one of claim 1 to claim 5, wherein the thickness of the layer of ejected and cured shaping material that is positioned on the upper side of the boundary surface of bonding of different types of shaping material is formed to be thicker than the thickness of other layers.

7. The three-dimensional shaping apparatus according to any one of claim 1 to claim 6, wherein a predetermined number of slices is set by the ejection control device (13) so that the excess portion is not recovered in the hollow portion (ES) in which either of the shaping materials is removed in a predetermined number of slices, and either of the shaping materials is laminated to at least two layers so that one of the shaping materials does not come into contact with the roller portion (25).

8. The three-dimensional shaping apparatus according to any one of claim 1 to claim 7, wherein the ejection control device (13) can control the shaping-material ejection device to not eject at least one layer portion or two layer portions of the model material (MA) after switching of the shaping material ejected from the shaping-material ejection device from the supporting material (SA) to the model material (MA).

9. The three-dimensional shaping apparatus according to any one of claim 1 to claim 7, wherein the ejection control device (13) is configured to control the shaping-material ejection device to not eject at least one layer portion or two layer portions of the supporting material (SA) after switching of the shaping material ejected from the shaping-material ejection device from the model material (MA) to the supporting material (SA).

10. A three-dimensional shaping method configured to repeatedly performing operations for ejecting and curing as shaping materials, onto a shaping plate (40), a model material (MA) configured to form a final shaped object and a supporting material (SA) configured to support a protruding portion of the model material (MA) and to be finally removed, while performing scanning of a shaping-material ejection device at least in a single direction with a horizontal driving device, and moving the ejection position relative to the height direction with the vertical driving device to thereby form slices having a predetermined thickness in a height direction into a laminated configuration, and laminating these slices in the height direction for performing shaping, the three-dimensional shaping method comprising the steps of:
ejecting one of the shaping materials of the model material (MA) and the supporting material (SA) onto the shaping plate (40) with the shaping-material ejection device for ejecting the shaping material;
recovering one of the ejected shaping materials while rotating at a predetermined speed with the roller portion (25) supported to rotate freely in order to recover the excess portion of the shaping material in a flowing state;
curing the shaping material in a flowing state after recovery of the excess portion;
moving the relative position in the height direction of the shaping plate (40) and the shaping-material ejection device with the vertical driving device; and
repeating the ejection of the shaping material by the shaping-material ejection device, the recovery of the excess portion of shaping material by the roller portion (25), curing of the shaping material, and movement in the height direction by the vertical driving device; and
**characterized in**
after moving with the vertical driving device, controlling the shaping-material ejection device to not eject either of the shaping materials for one or more slices or to decrease the ejection amount of the shaping material when the type of shaping material ejected from the shaping-material ejection device changes from the first to the second of the model material (MA) or the supporting material (SA),
wherein the control device (10) is configured to perform control to include a hollow portion (ES) in a slice of the shaped object by not ejecting shaping material from the shaping-material ejection device at a position corresponding to the hollow portion (ES) or by reducing the ejection amount, complete shaping of the slice, and then during shaping of the next slice, and then
displace the relative positions in the height direction of the head portion (20) and the shaping plate (40) with the vertical driving device so that the roller portion (25) does not come into contact with the uppermost surface of the second shaping material ejected at a position corresponding to the hollow portion (ES), and
when shaping a slice after the next layer, control the shaping-material ejection device and the vertical driving device to cause contact of the roller portion (25) with the uppermost surface of the other shaping material ejected at a position corresponding to the hollow portion (ES) so that the excess portion of the second shaping material ejected at that position is scraped off by the roller portion (25).

11. The three-dimensional shaping method according to claim 10, further comprising a step of:
not ejecting shaping material from the shaping-material ejection device at the boundary surface between different types of shaping material at which the model material (MA) and the supporting material (SA) changes from the first shaping material to the second shaping material in the height direction during laminating, or reducing the ejection amount, and completing shaping of the slice;
displacing the relative position of the ejection position with the vertical driving device to the ejection position of the next slice; and
ejecting the second of the shaping materials at a position corresponding to the boundary surface of different types so that the upper surface of the ejected shaping material is separated from the roller portion (25), and a step of:
ejecting the second of the shaping materials at a position corresponding to the boundary surface of different types during shaping of a slice after the next layer; and
bringing the uppermost surface of the ejected material into contact with the roller portion (25), and thereby scraping off the excess portion of the second ejected shaping material with the roller portion (25).

12. The three-dimensional shaping method according to claim 11, wherein the position of not ejecting either of the shaping materials or of limiting the ejection amount with the shaping-material ejection device is provided in the slice immediately above the boundary surface between different types of shaping material at the ejection position of the second shaping material of the model material (MA) or the supporting material (SA).

13. A set-data creating apparatus configured to repeatedly performing operations for ejecting and curing as shaping materials, onto a shaping plate (40) configured to placing a shaping object thereon, a model material (MA) configured to form a final shaped object and a supporting material (SA) configured to support a protruding portion of the model material (MA) and to be finally removed, while performing scanning of a shaping-material ejecting device at least in a single direction with the horizontal driving device, curing, and moving the ejection position relative to the height direction with the vertical driving device, and thereby to form slices having a predetermined thickness in a height direction into a laminated configuration, and laminating these slices in the height direction for performing shaping, the set-data creating apparatus comprising
an input device configured to acquiring three-dimensional data for the shaped object; and **characterized by**
a hollow portion creating device configured to creating a hollow portion (ES) at which a predetermined number of slices of either of the shaping materials is removed, or the ejection amount of the shaping material is decreased at a position at which the type of shaping material ejected from the shaping-material ejection device in the vertical direction of the shaping material changes from the first of the model material (MA) and the supporting material (SA) to the second thereof,
wherein the control device (10) is configured to perform control to include a hollow portion (ES) in a slice of the shaped object by not ejecting shaping material from the shaping-material ejection device at a position corresponding to the hollow portion (ES) or by reducing the ejection amount, complete shaping of the slice, and then during shaping of the next slice, and then
displace the relative positions in the height direction of the head portion (20) and the shaping plate (40) with the vertical driving device so that the roller portion (25) does not come into contact with the uppermost surface of the second shaping material ejected at a position corresponding to the hollow portion (ES), and
when shaping a slice after the next layer, control the shaping-material ejection device and the vertical driving device to cause contact of the roller portion (25) with the uppermost surface of the other shaping material ejected at a position corresponding to the hollow portion (ES) so that the excess portion of the second shaping material ejected at that position is scraped off by the roller portion (25).

14. The set-data creating apparatus according to claim 13, wherein the position of creating the hollow portion (ES) is provided in the slice immediately above the boundary surface between different types of shaping material at which the model material (MA) and the supporting material (SA) changes from the first shaping material to the second shaping material.

15. A set-data creating program for a three-dimensional shaping apparatus configured to repeatedly performing operations for ejecting and curing as shaping materials, onto a shaping plate (40) configured to placing a shaping object thereon, a model material (MA) configured to form a final shaped object and a supporting material (SA) configured to support a protruding portion of the model material (MA) and to be finally removed, while performing scanning a shaping-material ejecting device at least in a single direction with the horizontal driving device, curing, and moving the ejection position relative to the height direction with the vertical driving device, and thereby to form slices having a predetermined thickness in a height direction into a laminated configuration, and laminating these slices in the height direction for performing shaping, the three-dimensional shaping program **characterized in** being adapted to cause a computer to realize the functions of:
acquiring three-dimensional data for the shaped object; and
creating a hollow portion (ES) at which a predetermined number of slices of either of the shaping materials is removed, or the ejection amount of the shaping material is decreased at a position at which the type of shaping material ejected from the shaping-material ejection device in the vertical direction of the shaping material changes from the first of the model material (MA) and the supporting material (SA) to the second thereof,
wherein the control device (10) is configured to perform control to include a hollow portion (ES) in a slice of the shaped object by not ejecting shaping material from the shaping-material ejection device at a position corresponding to the hollow portion (ES) or by reducing the ejection amount, complete shaping of the slice, and then during shaping of the next slice, and then
displace the relative positions in the height direction of the head portion (20) and the shaping plate (40) with the vertical driving device so that the roller portion (25) does not come into contact with the uppermost surface of the second shaping material ejected at a position corresponding to the hollow portion (ES), and
when shaping a slice after the next layer, control the shaping-material ejection device and the vertical driving device to cause contact of the roller portion (25) with the uppermost surface of the other shaping material ejected at a position corresponding to the hollow portion (ES) so that the excess portion of the second shaping material ejected at that position is scraped off by the roller portion (25).

16. The set-data creating program for a three-dimensional shaping apparatus according to claim 15, wherein when the type of shaping material ejected from the shaping-material ejection device changes from the first of the model material (MA) and the supporting material (SA) to the second thereof in the vertical direction of the shaped object, the hollow portion creating function creates a hollow portion (ES) in which a predetermined number of slices of shaping material after the change is removed.

17. A computer-readable recording medium **characterized by** storing the program according to claim 15 or claim 16.

## Patentansprüche

1. Dreidimensionale Formvorrichtung, die eingerichtet ist, wiederholt Arbeitsgänge zum Ausstoßen und Härten eines Modellmaterials (MA), das eingerichtet ist, ein fertig geformtes Objekt auszubilden, und eines Stützmaterial (SA), das eingerichtet ist, einen hervorstehenden Abschnitt des Modellmaterials (MA) zu unterstützen und letztendlich entfernt zu werden, als Formmaterialien während des Durchführens eines Scannens in zumindest einer auf einer Formplatte (40) auszuführen und dadurch Scheiben, die eine vorbestimmte Dicke aufweisen, in einer Höhenrichtung zu einem Schichtaufbau auszubilden und diese Scheiben in der Höhenrichtung zum Ausführen des Formens aufzuschichten, wobei die dreidimensionale Formvorrichtung aufweist:
die Formplatte (40), die eingerichtet ist, auf sich ein Formobjekt zu platzieren;
eine Formmaterialausstoßeinrichtung einschließlich einer Vielzahl von Modellmaterialausstoßdüsen (21), die eingerichtet sind, das Modellmaterial (MA) auszustoßen, und eine Vielzahl von Stützmaterialausstoßdüsen (22), die eingerichtet sind, das Stützmaterial (SA) auszustoßen, sodass diese Vielzahl von Düsen in einer einzelnen Richtung angeordnet sind;
einen Walzenabschnitt (25), der frei drehbar unterstützt ist und der beim Drehen die obere Fläche des Modellmaterials (MA) oder des Stützmaterials (SA) presst, wenn diese in einem Fließzustand sind, um dadurch einen überschüssigen Abschnitt des Modellmaterials (MA) oder des Stützmaterials (SA) abzuschaben;
einen Kopfabschnitt (20) einschließlich der Formmaterialausstoßeinrichtung und des Walzenabschnitts (25);
einer Horizontal-Antriebseinrichtung, die eingerichtet ist, ein hin und her Scannen des Kopfabschnitts (20) in einer horizontalen Richtung auszuführen;
einer Vertikal-Antriebseinrichtung, die eingerichtet ist, die Positionen des Kopfabschnitts (20) und der Formplatte (40) in Bezug aufeinander in der Höhenrichtung zu bewegen; und
eine Steuerungseinrichtung (10), die eingerichtet ist, den Antrieb der Horizontal-Antriebseinrichtung und das Ausstoßen und Härten einer Scheibe des Formmaterials mit der Formmaterialausstoßeinrichtung zu steuern, die Vertikal-Antriebseinrichtung zu steuern und die Ausstoßposition auf einer Scheibe nach dem Härten zu versetzen, und ein Formmaterial für eine Scheibe auf der nächsten Schicht auszustoßen und zu härten, um dadurch nacheinander die Scheiben aufzuschichten; **dadurch gekennzeichnet, dass**:
wenn das Modellmaterial (MA) und das Stützmaterial (SA) in der Höhenrichtung während des Aufschichtens des Formobjekts eine Grenzfläche mit einer Änderung von einem ersten Formmaterial zu einem zweiten Formmaterial aufweist, die Steuerungseinrichtung (10) eine Steuerung ausführt, um zu verursachen, dass die Formmaterialausstoßeinrichtung einen hohlen Abschnitt ausbildet, in dem entweder das erste Formmaterial oder das zweite Formmaterial nicht ausgestoßen wird oder die Ausstoßmenge in Bezug auf eine Scheibe reduziert wird, mit Bezug auf eine Scheibe, die mit der Grenzfläche zwischen unterschiedlichen Arten von Formmaterialien korrespondiert oder eine Scheibe in der Nähe dazu,
wobei die Steuerungseinrichtung (10) eingerichtet ist, eine Steuerung auszuführen, um einen oberen Abschnitt (ES) in einer Scheibe des Formobjekts durch nicht Ausstoßen von Formmaterial von der Formmaterialausstoßeinrichtung bei einer Position, die mit dem hohlen Abschnitt (ES) korrespondiert, oder durch Reduzieren der Ausstoßmenge auszuführen, Abschließen des Formens der Scheibe und dann während des Formens der nächsten Scheibe einzubeziehen, und dann
die Relativpositionen in der Höhenrichtung des Kopfabschnitts (20) und der Formplatte (40) so mit der Vertikal-Antriebseinrichtung zu versetzen, dass der Walzenabschnitt (25) nicht mit der obersten Fläche des zweiten bei einer Position ausgestoßenen Formmaterials in Kontakt kommt, die mit dem hohlen Abschnitt (ES) korrespondiert, und
die Formmaterialausstoßeinrichtung und die Vertikal-Antriebseinrichtung beim Formen einer Scheibe nach der nächsten Schicht zu steuern, um einen Kontakt des Walzenabschnitts (25) mit der obersten Fläche des anderen bei einer mit dem hohlen Abschnitt (ES) korrespondierenden Position ausgestoßenen Formmaterials zu verursachen, sodass der überschüssige Abschnitt des zweiten bei dieser Position ausgestoßenen Formmaterials durch den Walzenabschnitt (25) abgeschabt wird.

2. Dreidimensionale Formvorrichtung nach Anspruch 1, bei welcher der hohle Abschnitt (EF) bei dem Formobjekt in der Scheibe unmittelbar über der Grenzfläche zwischen unterschiedlichen Arten von Formmaterialien bereitgestellt werden kann, wenn er in dem zweiten Formmaterial aus dem Modellmaterial (MA) oder dem Stützmaterial (SA) bereitgestellt ist.

3. Dreidimensionale Formvorrichtung nach Anspruch 1, bei welcher der hohle Abschnitt (ES) in dem Formobjekt in der Scheibe unmittelbar unter der bereitgestellt sein kann, die in Kontakt mit der Grenzfläche zwischen unterschiedlichen Formmaterialarten steht, oder unter einer bestimmten Anzahl von Scheiben von dieser Position getrennt sein kann, wenn er in dem ersten Formmaterial aus dem Modellmaterial (MA) und dem Stützmaterial (SA) vorgesehen ist.

4. Dreidimensionale Formvorrichtung nach einem der Ansprüche 1 bis 3, bei der, wenn die Art des Formmaterials, das von der Formmaterialausstoßeinrichtung ausgestoßen wird, nach einer Bewegung in einer vertikalen Richtung durch die Vertikal-Antriebseinrichtung von einem zu dem anderen aus dem Modellmaterial (MA) und dem Stützmaterial (SA) verändert wird, die Ausstoßsteuerungseinrichtung (13) die Formmaterialausstoßeinrichtung steuern kann, sodass diese bei einer vorbestimmten Anzahl von Scheiben nach der Änderung kein Formmaterial ausstößt.

5. Dreidimensionale Formvorrichtung nach einem der Ansprüche 1 bis 4, ferner mit einer Härteeinrichtung (24), die eingerichtet ist, das Modellmaterial (MA) und das Stützmaterial (SA) zu Härten, und wobei:
die Steuerungseinrichtung (10) eine Steuerung ausführt, um mit der Horizontal-Antriebseinrichtung ein hin und her Scannen in einer Richtung des Kopfabschnitts (20) und mit der Formmaterialausstoßeinrichtung bei der Vorwärtsbewegung und/oder der Rückwärtsbewegung des hin und her Scannens ein Ausstoßen des Modellmaterials (MA) und des Stützmaterials (SA) auf die Formplatte (40), mit dem Walzenabschnitt (25) bei der Vorwärtsbewegung und/oder der Rückwärtsbewegung des hin und her Scannens eine Rückgewinnung eines überschüssigen Abschnitts von einem aus dem Modellmaterial (MA) und dem Stützmaterial (SA) in einem Fließzustand, und mit der Härtungseinrichtung (24) bei der Vorwärtsbewegung und/oder der Rückwärtsbewegung des hin und her Scannens ein Härten des ersten aus dem Modellmaterial (MA) und dem Stützmaterial (SA) zu verursachen, und ferner mit der Formmaterialausstoßeinrichtung bei der Vorwärtsbewegung und/oder der Rückwärtsbewegung des hin und her Scannens ein Ausstoßen des zweiten aus dem Modellmaterial (MA) und dem Stützmaterial (SA) auf die Formplatte (40), mit dem Walzenabschnitt (25) bei der Vorwärtsbewegung und/oder der Rückwärtsbewegung des hin und her Scannens eine Rückgewinnung eines überschüssigen Abschnitts des zweiten aus dem Modellmaterial (MA) und dem Stützmaterial (SA) in einem Fließzustand, und mit der Härtungseinrichtung (24) bei der Vorwärtsbewegung und/oder der Rückwärtsbewegung des hin und her Scannens ein Härten des zweiten aus dem Modellmaterial (MA) und dem Stützmaterial (SA) zu verursachen, wodurch ein Formen durch Ausbilden einer Scheibe durchgeführt wird, und Verschieben der relativen Position der Formplatte (40) und des Kopfabschnitts (20) in der Höhenrichtung unter Verwendung der Vertikal-Antriebseinrichtung und Wiederholen des Aufschichtens der Scheibe.

6. Dreidimensionale Formvorrichtung nach einem der Ansprüche 1 bis 5, bei der die Dicke der Schicht aus ausgestoßenem und gehärtetem Formmaterial, die auf der oberen Seite der Verbindungsgrenzfläche unterschiedlicher Arten von Formmaterial positioniert ist, so ausgebildet ist, dass sie dicker als die Dicke der anderen Schichten ist.

7. Dreidimensionale Formvorrichtung nach einem der Ansprüche 1 bis 6, bei der eine vorbestimmte Anzahl von Scheiben durch die Ausstoßsteuerungseinrichtung (13) festgelegt ist, sodass der überschüssige Abschnitt nicht in dem hohlen Abschnitt (ES) rückgewonnen wird, in dem eines der Formmaterialien in einer vorbestimmten Anzahl von Schichten entfernt ist, und eines der Formmaterialien in mindestens zwei Schichten aufgeschichtet ist, sodass eines der Formmaterialien nicht mit dem Walzenabschnitt (25) in Kontakt kommt.

8. Dreidimensionale Formvorrichtung nach einem der Ansprüche 1 bis 7, bei der die Ausstoßsteuerungseinrichtung (13) die Formmaterialausstoßeinrichtung steuern kann, sodass sie zumindest einen Schichtabschnitt oder zwei Schichtabschnitte des Modellmaterials (MA) nicht nach dem Wechseln des Formmaterials von dem Stützmaterial (SA) zu dem Modellmaterial (MA), das von der Formmaterialausstoßeinrichtung ausgestoßen wird, ausstößt.

9. Dreidimensionale Formvorrichtung nach einem der Ansprüche 1 bis 7, bei der die Ausstoßsteuerungseinrichtung (13) eingerichtet ist, die Formmaterialausstoßeinrichtung so zu steuern, dass sie mindestens einen Schichtabschnitt oder zwei Schichtabschnitte des Stützmaterials (SA) nicht nach einem Wechseln des Formmaterials von dem Modellmaterial (MA) zu dem Stützmaterial (SA), das von der Formmaterialausstoßeinrichtung ausgestoßen wird, ausstößt.

10. Dreidimensionales Formverfahren, das eingerichtet ist, wiederholt Arbeitsgänge zum Ausstoßen und Härten eines Modellmaterials (MA), das eingerichtet ist, ein fertig geformtes Objekt auszubilden, und eines Stützmaterials (SA), das eingerichtet ist, einen hervorstehenden Abschnitt des Modellmaterials (MA) zu unterstützen und letztendlich entfernt zu werden, auszuführen, während mit einer Horizontal-Antriebseinrichtung ein Scan einer Formmaterialausstoßeinrichtung in zumindest einer Richtung und mit einer Vertikal-Antriebseinrichtung eine Bewegung der Ausstoßposition relativ zu der Höhenrichtung auszuführen, um dadurch Scheiben mit einer vorbestimmten Dicke in einer Höhenrichtung zu einem aufgeschichteten Aufbau auszubilden, und diese Schichten in der Höhenrichtung zum Ausführen eines Formens aufzuschichten, wobei das dreidimensionale Formverfahren die Schritte umfasst:
Ausstoßen eines der Formmaterialien aus dem Modellmaterial (MA) und dem Stützmaterial (SA) auf die Formplatte (40) mit der Formmaterialausstoßeinrichtung zum Ausstoßen des Formmaterials;
Rückgewinnen von einem der ausgestoßenen Formmaterialien bei Drehung des Walzenabschnitts (25) mit einer vorbestimmten Geschwindigkeit, der frei drehbar unterstützt wird, um den überschüssigen Abschnitt des Formmaterials in einem Fließzustand rückzugewinnen;
Härten des Formmaterials in einem Fließzustand nach einem Rückgewinnen des überschüssigen Abschnitts;
Bewegen der relativen Position der Formplatte (40) und der Formmaterialausstoßeinrichtung in der Höhenrichtung mit der Vertikal-Antriebseinrichtung; und
Wiederholen des Ausstoßens des Formmaterials durch die Formmaterialausstoßeinrichtung, des Rückgewinnens des überschüssigen Abschnitts Formmaterial durch den Walzenabschnitt (25), des Härtens des Formmaterials und des Bewegens in der Höhenrichtung durch die Vertikal-Antriebseinrichtung; und
**gekennzeichnet durch** Steuern der Formmaterialausstoßeinrichtung nach einem Bewegen mit der Vertikal-Antriebseinrichtung, um keine der beiden Formmaterialien über eine oder mehrere Schichten auszustoßen oder die Ausstoßmenge des Formmaterials zu vermindern, wenn sich die Art des von der Formmaterialausstoßeinrichtung ausgestoßenen Formmaterials von dem ersten zu dem zweiten aus dem Formmaterial (MA) oder dem Stützmaterial (SA) ändert,
wobei die Steuerungseinrichtung (10) eingerichtet ist, eine Steuerung auszuführen, um einen hohlen Abschnitt (ES) in einer Scheibe des Formobjekts **durch** nicht Ausstoßen von Formmaterial aus der Formmaterialausstoßeinrichtung bei einer Position, die mit dem hohlen Abschnitt (ES) korrespondiert, oder **durch** Reduzieren der Ausstoßmenge, Abschließen des Formens der Scheibe und dann während des Formens der nächsten Scheibe einzubeziehen, und dann
Versetzen der Relativposition in der Höhenrichtung des Kopfabschnitts (20) und der Formplatte (40) mit der Vertikal-Antriebseinrichtung, sodass der Walzenabschnitt (25) nicht mit der obersten Fläche des zweiten Formmaterials in Kontakt kommt, das bei einer Position ausgestoßen wird, die mit dem hohlen Abschnitt (ES) korrespondiert, und
Steuern der Formmaterialausstoßeinrichtung und der Vertikal-Antriebseinrichtung beim Formen einer Scheibe nach der nächsten Schicht, um zu verursachen, dass der Walzenabschnitt (25) mit der obersten Fläche des anderen Formmaterials in Kontakt tritt, das bei einer Position ausgestoßen wird, die mit dem hohlen Abschnitt (ES) korrespondiert, sodass der überschüssige Abschnitt des zweiten Formmaterials, das bei dieser Position ausgestoßen wird, **durch** den Walzenabschnitt (25) abgeschabt wird.

11. Dreidimensionales Formverfahren nach Anspruch 10, das ferner die Schritte umfasst:
nicht Ausstoßen von Formmaterial aus der Formmaterialausstoßeinrichtung bei der Grenzfläche zwischen unterschiedlichen Arten von Formmaterial, bei der sich während des Aufschichtens das Modellmaterial (MA) und das Stützmaterial (SA) in der Höhenrichtung von dem ersten Formmaterial zu dem zweiten Formmaterial ändert, oder Reduzieren der Ausstoßmenge, und Abschließen des Formens der Scheibe;
Versetzen der relativen Position der Ausstoßposition mit der Vertikal-Antriebseinrichtung zu der Ausstoßposition für die nächste Scheibe; und
Ausstoßen des zweiten der Formmaterialien bei einer Position, die mit der Grenzfläche unterschiedlicher Arten korrespondiert, sodass die obere Fläche des ausgestoßenen Formmaterials von dem Walzenabschnitt (25) getrennt wird, und mit einem Schritt des
Ausstoßens des zweiten der Formmaterialien während des Formens einer Scheibe nach der nächsten Schicht bei einer Position, die mit der Grenzfläche unterschiedlicher Arten korrespondiert; und
in Kontakt Bringens der obersten Fläche des ausgestoßenen Materials mit dem Walzenabschnitt (25) und dadurch Abschaben des überschüssigen Abschnitts des zweiten ausgestoßenen Formmaterials mit dem Walzenabschnitt (25).

12. Dreidimensionales Formverfahren nach Anspruch 11, bei dem die Position des nicht Ausstoßens von beiden der Formmaterialien oder des Beschränkens der Ausstoßmenge mit der Formmaterialausstoßeinrichtung in der Scheibe bei der Ausstoßposition des zweiten Formmaterials aus dem Modellmaterial (MA) oder dem Stützmaterial (SA) unmittelbar über der Grenzfläche zwischen unterschiedlichen Arten des Formmaterials vorgesehen ist.

13. Datensatzerzeugungsvorrichtung, die eingerichtet ist, wiederholt Arbeitsgänge zum Ausstoßen und Härten eines Modellmaterials (MA), das eingerichtet ist, ein fertig geformtes Objekt auszubilden, und eines Stützmaterials (SA), das eingerichtet ist, einen hervorstehenden Abschnitt des Modellmaterials (MA) zu unterstützen und letztendlich entfernt zu werden, als Formmaterialien auf einer Formplatte (40), die eingerichtet ist, auf sich eine Formobjekt zu platzieren, auszuführen, während mit einer Horizontal-Antriebseinrichtung ein Scannen mit einer Formmaterialausstoßeinrichtung in zumindest einer Richtung, ein Härten und mit einer Vertikal-Antriebseinrichtung eine Bewegung der Ausstoßposition relativ zu der Höhenrichtung ausgeführt wird, um dadurch Scheiben mit einer vorbestimmten Dicke in einer Höhenrichtung zu einem aufgeschichteten Aufbau auszubilden, und diese Schichten in der Höhenrichtung zum Ausführen eines Formens aufzuschichten, wobei die Datensatzerzeugungsvorrichtung aufweist:
eine Eingabeeinrichtung, die eingerichtet ist, dreidimensionale Daten für das Formobjekt zu erlangen; und **gekennzeichnet durch**
eine Erzeugungseinrichtung für einen hohlen Abschnitt, die eingerichtet ist, einen hohlen Abschnitt (ES) zu erzeugen, bei dem eine vorbestimmte Anzahl von Scheiben von beiden der Formmaterialien entfernt ist, oder die Ausstoßmenge des Formmaterials vermindert ist, bei einer Position, bei der sich die Art des Formmaterials, die von der Formmaterialausstoßeinrichtung in der vertikalen Richtung des Formmaterials ausgestoßen wird, von dem ersten aus dem Modellmaterial (MA) und dem Stützmaterial (SA) zu dem zweiten davon ändert,
wobei die Steuerungseinrichtung (10) eingerichtet ist, eine Steuerung auszuführen, um einen hohlen Abschnitt (ES) in einer Scheibe des Formobjekts **durch** kein Ausstoßen von Formmaterial von der Formmaterialausstoßeinrichtung bei einer Position, die mit dem hohlen Abschnitt (EF) korrespondiert, oder **durch** Reduzieren der Ausstoßmenge, Abschließen des Formens der Scheibe und dann während des Formens der nächsten Scheibe einzubeziehen, und dann
Versetzen der relativen Positionen in der Höhenrichtung des Kopfabschnitts (20) und der Formplatte (40) mit der Vertikal-Antriebseinrichtung, sodass der Walzenabschnitt (25) nicht mit der obersten Fläche des zweiten Formmaterials in Kontakt kommt, das bei einer Position ausgestoßen wird, die mit dem hohlen Abschnitt (ES) korrespondiert, und
Steuern der Formmaterialausstoßeinrichtung und der Vertikal-Antriebseinrichtung beim Formen einer Scheibe nach der nächsten Schicht, um einen Kontakt des Walzenabschnitts (25) mit der obersten Fläche des anderen Formmaterials zu verursachen, das bei einer Position ausgestoßen wird, die mit dem hohlen Abschnitt (ES) korrespondiert, sodass der überschüssige Abschnitt des zweiten Formmaterials, der bei der Position ausgestoßen wird, **durch** den Walzenabschnitt (25) abgeschabt wird.

14. Datensatzerzeugungsvorrichtung nach Anspruch 13, bei der die Position des Erzeugens des hohlen Abschnitts (ES) in der Scheibe unmittelbar über der Grenzfläche zwischen unterschiedlichen Arten des Formmaterials vorgesehen ist, bei dem sich das Modellmaterial (MA) und das Stützmaterial (SA) von dem ersten Formmaterial zu dem zweiten Formmaterial verändert.

15. Datensatzerzeugungsprogramm für eine dreidimensionale Formvorrichtung, die eingerichtet ist, wiederholt Arbeitsgänge zum Ausstoßen und Härten eines Modellmaterials (MA), das eingerichtet ist, ein fertig geformtes Objekt auszubilden, und eines Stützmaterials (SA), das eingerichtet ist, einen hervorstehenden Abschnitt des Modellmaterials (MA) zu unterstützen und letztendlich entfernt zu werden, als Formmaterialien auf einer Formplatte (40), die eingerichtet ist, auf sich eine Formobjekt zu platzieren, auszuführen, während mit einer Horizontal-Antriebseinrichtung ein Scannen mit einer Formmaterialausstoßeinrichtung in zumindest einer Richtung, ein Härten und mit einer Vertikal-Antriebseinrichtung eine Bewegung der Ausstoßposition relativ zu der Höhenrichtung ausgeführt wird, um dadurch Scheiben mit einer vorbestimmten Dicke in einer Höhenrichtung zu einem aufgeschichteten Aufbau auszubilden und diese Schichten in der Höhenrichtung zum Ausführen eines Formens aufzuschichten, wobei das dreidimensionale Formprogramm **dadurch gekennzeichnet ist, dass** es angepasst ist, zu verursachen, dass ein Computer die Funktionen umsetzt:
Erlangen dreidimensionaler Daten für das Formobjekt; und
Erzeugen eines hohlen Abschnitts (ES), bei dem eine vorbestimmte Anzahl von Scheiben von beiden der Formmaterialien entfernt wird oder die Ausstoßmenge des Formmaterials vermindert wird, bei einer Position, bei der sich die Art des von der Formmaterialausstoßeinrichtung ausgestoßenen Formmaterials sich in der vertikalen Richtung des Formmaterials von dem ersten aus dem Modellmaterial (MA) und dem Stützmaterial (SA) zu dem zweiten davon ändert,
wobei die Steuerungseinrichtung (10) eingerichtet ist, eine Steuerung auszuführen, um einen hohlen Abschnitt (ES) in einer Scheibe des Formobjekts durch nicht Ausstoßen von Formmaterial aus der Formmaterialausstoßeinrichtung bei einer Position, die mit dem hohlen Abschnitt (ES) korrespondiert, oder durch Reduzieren der Ausstoßmenge, Abschließen des Formens der Scheibe und dann während des Formens der nächsten Scheibe einzubeziehen, und dann
Versetzen der relativen Positionen in der Höhenrichtung des Kopfabschnitts (20) und der Formplatte (40) mit der Vertikal-Antriebseinrichtung, sodass der Walzenabschnitt (25) nicht mit der obersten Fläche des zweiten Formmaterials in Kontakt kommt, das bei einer Position ausgestoßen wird, die mit dem hohlen Abschnitt (ES) korrespondiert, und
Steuern der Formmaterialausstoßeinrichtung und der Vertikal-Antriebseinrichtung beim Formen einer Scheibe nach der nächsten Schicht, um einen Kontakt des Walzenabschnitts (25) mit der obersten Fläche des anderen Formmaterials zu verursachen, das bei einer Position ausgestoßen wird, die mit der dem hohlen Abschnitt (ES) korrespondiert, sodass der überschüssige Abschnitt des zweiten Formmaterials, der bei dieser Position ausgestoßen wird, durch den Walzenabschnitt (25) abgeschabt wird.

16. Datensatzerzeugungsprogramm für eine dreidimensionale Formvorrichtung nach Anspruch 15, bei dem, während sich die Art des Formmaterials, das von der Formmaterialausstoßeinrichtung ausgestoßen wird, von dem ersten aus dem Modellmaterial (MA) und dem Stützmaterial (SA) in der vertikalen Richtung des Formobjekts zu dem zweiten davon ändert, die Erzeugungsfunktion für den hohlen Abschnitt einen hohlen Abschnitt (ES) erzeugt, bei dem eine vorbestimmte Anzahl der Scheiben des Formmaterials nach der Änderung entfernt wird.

17. Computerlesbares Aufzeichnungsmedium, **gekennzeichnet durch** eine Speicherung des Programms nach Anspruch 15 oder Anspruch 16.

## Revendications

1. Appareil de façonnage tridimensionnel configuré pour effectuer de manière répétée des opérations pour éjecter et durcir en tant que matériaux de façonnage, sur une plaque de façonnage (40), un matériau de modèle (MA) configuré pour former un objet façonné final et un matériau de support (SA) configuré pour supporter une partie en saillie du matériau de modèle (MA) et pour être finalement retiré, tout en effectuant un balayage au moins dans une seule direction, et pour former ainsi des tranches ayant une épaisseur prédéterminée dans une direction de la hauteur dans une configuration stratifiée, et stratifier ces tranches dans la direction de la hauteur pour effectuer le façonnage, l'appareil de façonnage tridimensionnel comprenant :
la plaque de façonnage (40) configurée pour placer un objet façonné sur celle-ci ;
un dispositif d'éjection de matériau de façonnage comportant une pluralité de buses d'éjection de matériau de modèle (21) configurées pour éjecter le matériau de modèle MA et une pluralité de buses d'éjection de matériau de support (22) configurée pour éjecter le matériau de support SA, de sorte que ces pluralités de buses soient agencées dans une seule direction ;
une partie de rouleau (25) supportée pour tourner librement, et presser, tout en tournant, la surface supérieure du matériau de modèle (MA) ou du matériau de support (SA) à l'état fluide, ce qui permet de racler une partie excédentaire du matériau de modèle (MA) ou du matériau de support (SA) ;
une partie de tête (20) comportant le dispositif d'éjection de matériau de façonnage et la partie de rouleau (25) ;
un dispositif d'entraînement horizontal configuré pour effectuer un balayage alternatif de la partie de tête (20) dans une direction horizontale ;
un dispositif d'entraînement vertical configuré pour déplacer les positions de la partie de tête (20) et de la plaque de façonnage (40) l'une par rapport à l'autre dans la direction de la hauteur ; et
un dispositif de commande (10) configuré pour commander l'entraînement du dispositif d'entraînement horizontal, l'éjection et le durcissement d'une tranche de matériau de façonnage avec le dispositif d'éjection de matériau de façonnage, pour commander le dispositif d'entraînement vertical et déplacer la position d'éjection sur une tranche après durcissement, et pour commander l'éjection et le durcissement d'un matériau de façonnage pour une tranche sur la couche suivante pour ainsi stratifier successivement les tranches ; **caractérisé en ce que** :
lorsque le matériau de modèle (MA) et le matériau de support (SA) dans la direction de la hauteur au cours de la stratification de l'objet façonné comportent une surface limite de changement d'un premier matériau de façonnage à un deuxième matériau de façonnage, le dispositif de commande (10) effectue une commande pour amener le dispositif d'éjection de matériau de façonnage à former une partie creuse dans laquelle soit le premier matériau de façonnage ou le deuxième matériau de façonnage n'est pas éjecté ou la quantité d'éjection est réduite par rapport à une tranche correspondant à la surface limite entre différents types de matériau de façonnage ou une tranche à proximité de celle-ci,
où le dispositif de commande (10) est configuré pour effectuer une commande pour inclure une partie creuse (ES) dans une tranche de l'objet façonné en empêchant l'éjection du matériau de façonnage depuis le dispositif d'éjection de matériau de façonnage à une position correspondant à la partie creuse (ES) ou en réduisant la quantité d'éjection, pour compléter le façonnage de la tranche, et alors au cours du façonnage de la tranche suivante, et ensuite
pour déplacer les positions relatives dans la direction de la hauteur de la partie de tête (20) et de la plaque de façonnage (40) avec le dispositif d'entraînement vertical de sorte que la partie de rouleau (25) n'entre pas en contact avec la surface la plus supérieure du deuxième matériau de façonnage éjecté à une position correspondant à la partie creuse (ES), et
pour commander, lors du façonnage d'une tranche après la couche suivante, le dispositif d'éjection de matériau de façonnage et le dispositif d'entraînement vertical pour provoquer un contact entre la partie de rouleau (25) et la surface la plus supérieure de l'autre matériau de façonnage éjecté à une position correspondant à la partie creuse (ES) de sorte que la partie excédentaire du deuxième matériau de façonnage éjecté à cette position soit raclée par la partie de rouleau (25).

2. Appareil de façonnage tridimensionnel selon la revendication 1, dans lequel la partie creuse (ES) dans l'objet façonné peut être prévue dans la tranche immédiatement au-dessus de la surface limite entre différents types de matériau de façonnage lorsqu'elle est prévue dans le deuxième matériau de façonnage du matériau de modèle (MA) ou du matériau de support (SA).

3. Appareil de façonnage tridimensionnel selon la revendication 1, dans lequel la partie creuse (ES) dans l'objet façonné peut être prévue dans la tranche immédiatement en dessous de celle en contact avec la surface limite entre différents types de matériau de façonnage, ou séparée en dessous par un nombre prédéterminé de tranches de cette position lorsqu'elle est prévue dans le premier matériau de façonnage du matériau de modèle (MA) et du matériau de support (SA).

4. Appareil de façonnage tridimensionnel selon l'une quelconque des revendications 1 à 3, dans lequel lorsque le type de matériau de façonnage éjecté depuis le dispositif d'éjection de matériau de façonnage change de l'un à l'autre du matériau de modèle (MA) et du matériau de support (SA) après le déplacement dans une direction verticale par le dispositif d'entraînement vertical, le dispositif de commande d'éjection (13) peut commander le dispositif d'éjection de matériau de façonnage pour ne pas éjecter un matériau de façonnage pour un nombre prédéterminé de tranches après le changement.

5. Appareil de façonnage tridimensionnel selon l'une quelconque des revendications 1 à 4, comprenant en outre un dispositif de durcissement (24) configuré pour durcir le matériau de modèle (MA) et le matériau de support (SA) et où :
le dispositif de commande (10) exécute une commande pour provoquer un balayage alternatif dans une direction de la partie de tête (20) avec le dispositif d'entraînement horizontal, et une éjection de l'un parmi le matériau de modèle (MA) et le matériau de support (SA) sur la plaque de façonnage (40) avec le dispositif d'éjection de matériau de façonnage dans au moins l'un parmi le chemin avant et le chemin arrière du balayage alternatif, une récupération d'une partie excédentaire de l'un parmi le matériau de modèle (MA) et le matériau de support (SA) à l'état fluide avec la partie de rouleau (25) dans au moins l'un parmi le chemin avant et le chemin arrière du balayage alternatif, et un durcissement du premier matériau parmi le matériau de modèle (MA) et le matériau de support (SA) avec le dispositif de durcissement (24) dans au moins l'un parmi le chemin avant et le chemin arrière du balayage alternatif, et provoque en outre une éjection du deuxième matériau parmi le matériau de modèle (MA) et le matériau de support (SA) sur la plaque de façonnage (40) avec le dispositif d'éjection de matériau de façonnage dans au moins l'un parmi le chemin avant et le chemin arrière du balayage alternatif, une récupération d'une partie excédentaire du deuxième matériau parmi le matériau de modèle (MA) et le matériau de support (SA) à l'état fluide avec la partie de rouleau (25) dans au moins l'un parmi le chemin avant et le chemin arrière du balayage alternatif, et un durcissement du deuxième matériau parmi le matériau de modèle (MA) et le matériau de support (SA) avec le dispositif de durcissement (24) dans au moins l'un parmi le chemin avant et le chemin arrière du balayage alternatif, le façonnage est ainsi exécuté en formant une tranche, en déplaçant la position relative de la plaque de façonnage (40) et de la partie de tête (10) dans la direction de la hauteur en utilisant le dispositif d'entraînement vertical et en répétant la stratification de la tranche.

6. Appareil de façonnage tridimensionnel selon l'une quelconque des revendications 1 à 5, dans lequel l'épaisseur de la couche du matériau de façonnage durci et éjecté qui est positionné sur le côté supérieur de la surface limite de liaison de différents types de matériau de façonnage est formée comme étant plus épaisse que l'épaisseur des autres couches.

7. Appareil de façonnage tridimensionnel selon l'une quelconque des revendications 1 à 6, dans lequel un nombre prédéterminé de tranches est défini par le dispositif de commande d'éjection (13) de sorte que la partie excédentaire ne soit pas récupérée dans la partie creuse (ES) dans laquelle l'un ou l'autre des matériaux de façonnage est retiré dans un nombre prédéterminé de tranches, et l'un ou l'autre des matériaux de façonnage est stratifié sur au moins deux couches de sorte que l'un des matériaux de façonnage n'entre pas en contact avec la partie de rouleau (25).

8. Appareil de façonnage tridimensionnel selon l'une quelconque des revendications 1 à 7, dans lequel le dispositif de commande d'éjection (13) peut commander le dispositif d'éjection de matériau de façonnage pour ne pas éjecter au moins une partie de couche ou deux parties de couche du matériau de modèle (MA) après la commutation du matériau de façonnage éjecté depuis le dispositif d'éjection de matériau de façonnage du matériau de support (SA) au matériau de modèle (MA).

9. Appareil de façonnage tridimensionnel selon l'une quelconque des revendications 1 à 7, dans lequel le dispositif de commande d'éjection (13) est configuré pour commander le dispositif d'éjection de matériau de façonnage pour ne pas éjecter au moins une partie de couche ou deux parties de couche du matériau de support (SA) après la commutation du matériau de façonnage éjecté depuis le dispositif d'éjection de matériau de façonnage du matériau de modèle (MA) au matériau de support (SA).

10. Procédé de façonnage tridimensionnel configuré pour effectuer de manière répétée des opérations pour éjecter et durcir en tant que matériaux de façonnage, sur une plaque de façonnage (40), un matériau de modèle (MA) configuré pour former un objet façonné final et un matériau de support (SA) configuré pour supporter une partie en saillie du matériau de modèle (MA) et pour être finalement retiré, tout en effectuant un balayage d'un dispositif d'éjection de matériau de façonnage dans au moins une seule direction avec un dispositif d'entraînement horizontal, et en déplaçant la position d'éjection par rapport à la direction de la hauteur avec le dispositif d'entraînement vertical pour former ainsi des tranches ayant une épaisseur prédéterminée dans une direction de la hauteur dans une configuration stratifiée, et en stratifiant ces tranches dans la direction de la hauteur pour effectuer le façonnage, le procédé de façonnage tridimensionnel comprenant les étapes qui consistent :
à éjecter l'un des matériaux de façonnage parmi le matériau de modèle (MA) et le matériau support (SA) sur la plaque de façonnage (40) avec le dispositif d'éjection de matériau de façonnage pour éjecter le matériau de façonnage ;
à récupérer l'un des matériaux de façonnage éjectés tout en tournant à une vitesse prédéterminée avec la partie de rouleau (25) supportée pour tourner librement afin de récupérer la partie excédentaire du matériau de façonnage à l'état fluide ;
à durcir le matériau de façonnage à l'état fluide après la récupération de la partie excédentaire ;
à déplacer la position relative dans la direction de la hauteur de la plaque de façonnage (40) et du dispositif d'éjection de matériau de façonnage avec le dispositif d'entraînement vertical ; et
à répéter l'éjection du matériau de façonnage par le dispositif d'éjection de matériau de façonnage, la récupération de la partie excédentaire du matériau de façonnage par la partie de rouleau (25), le durcissement du matériau de façonnage et le déplacement dans la direction de la hauteur par le dispositif d'entraînement vertical ; et
**caractérisé par** le fait
de commander, après le déplacement avec le dispositif d'entraînement vertical, le dispositif d'éjection de matériau de façonnage pour ne pas éjecter l'un ou l'autre des matériaux de façonnage pour une ou plusieurs tranche(s) ou pour réduire la quantité d'éjection du matériau de façonnage lorsque le type de matériau de façonnage éjecté depuis le dispositif d'éjection de matériau de façonnage change du premier matériau au deuxième matériau parmi le matériau de modèle (MA) ou le matériau de support (SA),
où le dispositif de commande (10) est configuré pour effectuer une commande pour inclure une partie creuse (ES) dans une tranche de l'objet façonné en empêchant l'éjection du matériau de façonnage depuis le dispositif d'éjection de matériau de façonnage à une position correspondant à la partie creuse (ES) ou en réduisant la quantité d'éjection, pour compléter le façonnage de la tranche, et alors au cours du façonnage de la tranche suivante, et ensuite
pour déplacer les positions relatives dans la direction de la hauteur de la partie de tête (20) et de la plaque de façonnage (40) avec le dispositif d'entraînement vertical de sorte que la partie de rouleau (25) n'entre pas en contact avec la surface la plus supérieure du deuxième matériau de façonnage éjecté à une position correspondant à la partie creuse (ES), et
pour commander, lors du façonnage d'une tranche après la couche suivante, le dispositif d'éjection de matériau de façonnage et le dispositif d'entraînement vertical pour provoquer le contact de la partie de rouleau (25) avec la surface la plus supérieure de l'autre matériau de façonnage éjecté à une position correspondant à la partie creuse (ES) de sorte que la partie excédentaire du deuxième matériau de façonnage éjecté à cette position soit raclée par la partie de rouleau (25).

11. Procédé de façonnage tridimensionnel selon la revendication 10, comprenant en outre une étape qui consiste :
à ne pas éjecter un matériau de façonnage depuis le dispositif d'éjection de matériau de façonnage au niveau de la surface limite entre différents types de matériau de façonnage au niveau de laquelle le matériau de modèle (MA) et le matériau de support (SA) changent du premier matériau de façonnage au deuxième matériau de façonnage dans la direction de la hauteur au cours de la stratification, ou à réduire la quantité d'éjection, et à compléter le façonnage de la tranche ;
à déplacer la position relative de la position d'éjection avec le dispositif d'entraînement vertical à la position d'éjection de la tranche suivante ; et
à éjecter le deuxième matériau parmi les matériaux de façonnage à une position correspondant à la surface limite de différents types de sorte que la surface supérieure du matériau de façonnage éjecté soit séparée de la partie de rouleau (25), et une étape qui consiste :
à éjecter le deuxième matériau parmi les matériaux de façonnage à une position correspondant à la surface limite de différents types au cours du façonnage d'une tranche après la couche suivante ; et
à amener la surface la plus supérieure du matériau éjecté en contact avec la partie de rouleau (25), et à racler ainsi la partie excédentaire du deuxième matériau de façonnage éjecté avec la partie de rouleau (25).

12. Procédé de façonnage tridimensionnel selon la revendication 11, dans lequel la position d'empêchement d'éjection de l'un ou l'autre des matériaux de façonnage ou de limitation de la quantité d'éjection avec le dispositif d'éjection de matériau de façonnage est prévue dans la tranche immédiatement au-dessus de la surface limite entre différents types de matériau de façonnage à la position d'éjection du deuxième matériau de façonnage parmi le matériau de modèle (MA) ou le matériau de support (SA).

13. Appareil de création de données définies configuré pour effectuer de manière répétée des opérations pour éjecter et durcir en tant que matériaux de façonnage, sur une plaque de façonnage (40) configurée pour placer un objet de façonnage sur celle-ci, un matériau de modèle (MA) configuré pour former un objet façonné final et un matériau de support (SA) configuré pour supporter une partie en saillie du matériau de modèle (MA) et pour être finalement retiré, tout en effectuant un balayage d'un dispositif d'éjection de matériau de façonnage au moins dans une seule direction avec le dispositif d'entraînement horizontal, un durcissement et un déplacement de la position d'éjection par rapport à la direction de la hauteur avec le dispositif d'entraînement vertical, et pour former ainsi des tranches ayant une épaisseur prédéterminée dans une direction de la hauteur dans une configuration stratifiée, et en stratifiant ces tranches dans la direction de la hauteur pour effectuer le façonnage, l'appareil de création de données définies comprenant
un dispositif d'entrée configuré pour acquérir des données tridimensionnelles pour l'objet façonné ; et **caractérisé par**
un dispositif de création de partie creuse configuré pour créer une partie creuse (ES) au niveau de laquelle un nombre prédéterminé de tranches de l'un ou l'autre des matériaux de façonnage est retiré, ou la quantité d'éjection du matériau de façonnage est diminuée à une position à laquelle le type de matériau de façonnage éjecté depuis le dispositif d'éjection de matériau de façonnage dans la direction verticale du matériau de façonnage change du premier matériau parmi le matériau de modèle (MA) et le matériau de support (SA) au deuxième matériau parmi ceux-ci,
où le dispositif de commande (10) est configuré pour effectuer une commande pour inclure une partie creuse (ES) dans une tranche de l'objet façonné en empêchant l'éjection du matériau de façonnage depuis le dispositif d'éjection de matériau de façonnage à une position correspondant à la partie creuse (ES) ou en réduisant la quantité d'éjection, pour compléter le façonnage de la tranche, et alors au cours du façonnage de la tranche suivante, et ensuite
pour déplacer les positions relatives dans la direction de la hauteur de la partie de tête (20) et de la plaque de façonnage (40) avec le dispositif d'entraînement vertical de sorte que la partie de rouleau (25) n'entre pas en contact avec la surface la plus supérieure du deuxième matériau de façonnage éjecté à une position correspondant à la partie creuse (ES), et
pour commander, lors du façonnage d'une tranche après la couche suivante, le dispositif d'éjection de matériau de façonnage et le dispositif d'entraînement vertical pour provoquer le contact de la partie de rouleau (25) avec la surface la plus supérieure de l'autre matériau de façonnage éjecté à une position correspondant à la partie creuse (ES) de sorte que la partie excédentaire du deuxième matériau de façonnage éjecté à cette position soit raclée par la partie de rouleau (25).

14. Appareil de création de données définies selon la revendication 13, dans lequel la position de création de la partie creuse (ES) est prévue dans la tranche immédiatement au-dessus de la surface limite entre différents types de matériau de façonnage à laquelle le matériau de modèle (MA) et le matériau de support (SA) changent du premier matériau de façonnage au deuxième matériau de façonnage.

15. Programme de création de données définies pour un dispositif de façonnage tridimensionnel configuré pour effectuer de manière répétée des opérations pour éjecter et durcir en tant que matériaux de façonnage, sur une plaque de façonnage (40) configurée pour placer un objet de façonnage sur celle-ci, un matériau de modèle (MA) configuré pour former un objet façonné final et un matériau de support (SA) configuré pour supporter une partie en saillie du matériau de modèle (MA) et pour être finalement retiré, tout en effectuant un balayage d'un dispositif d'éjection de matériau de façonnage au moins dans une seule direction avec le dispositif d'entraînement horizontal, un durcissement et un déplacement de la position d'éjection par rapport à la direction de la hauteur avec le dispositif d'entraînement vertical, et pour former ainsi des tranches ayant une épaisseur prédéterminée dans une direction de la hauteur dans une configuration stratifiée, et en stratifiant ces tranches dans la direction de la hauteur pour effectuer le façonnage, le programme de façonnage tridimensionnel étant **caractérisé par** le fait d'être adapté pour amener un ordinateur à réaliser les fonctions qui consistent :
à acquérir des données tridimensionnelles pour l'objet façonné ; et
à créer une partie creuse (ES) au niveau de laquelle un nombre prédéterminé de tranches de l'un ou l'autre des matériaux de façonnage est retiré, ou la quantité d'éjection du matériau de façonnage est diminuée à une position à laquelle le type de matériau de façonnage éjecté depuis le dispositif d'éjection de matériau de façonnage dans la direction verticale du matériau de façonnage change du premier matériau parmi le matériau de modèle (MA) et le matériau de support (SA) au deuxième matériau parmi ceux-ci,
où le dispositif de commande (10) est configuré pour effectuer une commande pour inclure une partie creuse (ES) dans une tranche de l'objet façonné en empêchant l'éjection du matériau de façonnage depuis le dispositif d'éjection de matériau de façonnage à une position correspondant à la partie creuse (ES) ou en réduisant la quantité d'éjection, pour compléter le façonnage de la tranche, et alors au cours du façonnage de la tranche suivante, et ensuite
pour déplacer les positions relatives dans la direction de la hauteur de la partie de tête (20) et de la plaque de façonnage (40) avec le dispositif d'entraînement vertical de sorte que la partie de rouleau (25) n'entre pas en contact avec la surface la plus supérieure du deuxième matériau de façonnage éjecté à une position correspondant à la partie creuse (ES), et
pour commander, lors du façonnage d'une tranche après la couche suivante, le dispositif d'éjection de matériau de façonnage et le dispositif d'entraînement vertical pour provoquer le contact de la partie de rouleau (25) avec la surface la plus supérieure de l'autre matériau de façonnage éjecté à une position correspondant à la partie creuse (ES) de sorte que la partie excédentaire du deuxième matériau de façonnage éjecté à cette position soit raclée par la partie de rouleau (25).

16. Programme de création de données définies pour un appareil de façonnage tridimensionnel selon la revendication 15, dans lequel, lorsque le type de matériau de façonnage éjecté depuis le dispositif d'éjection de matériau de façonnage change du premier matériau parmi le matériau de modèle (MA) et le matériau de support (SA) au deuxième matériau parmi ceux-ci dans la direction verticale de l'objet façonné, la fonction de création de partie creuse crée une partie creuse (ES) dans laquelle un nombre prédéterminé de tranches de matériau de façonnage après le changement est retiré.

17. Support d'enregistrement lisible par ordinateur **caractérisé par** le stockage du programme selon la revendication 15 ou 16.
